# FASCICULE DE BREVET EUROPEEN

(11) **EP 3 501 099 B1**
(45) Date de publication et mention de la délivrance du brevet: **10.08.2022**
(21) Numéro de dépôt: 17755149.6
(22) Date de dépôt: 16.08.2017
(51) Int. Cl.: H02S 20/32

(54) **SUIVEUR SOLAIRE À COUPLAGE CINÉMATIQUE**
SONNENVERFOLGER MIT KINEMATISCHER KUPPLUNG
SOLAR TRACKER WITH KINEMATIC COUPLING

(30) Priorité: 17.08.2016 FR 1601234; 17.02.2017 EP 17305176
(43) Date de publication de la demande: 26.06.2019
(73) Titulaire: Nexans Solar Technologies, 13790 Châteauneuf-le-Rouge (FR)
(72) Inventeur: TORDO, Jérome, 13100 Aix-En-Provence (FR)
(74) Mandataire: Ipsilon
(86) Numéro de dépôt international: PCT/EP2017/070734
(87) Numéro de publication internationale: WO 2018/033561

(56) Documents cités:
- EP-A2- 2 154 449
- WO-A2-2008/058411
- FR-A1- 3 001 793
- FR-A1- 3 003 021
- US-A1- 2008 308 091

## Description

### DOMAINE TECHNIQUE DE L'INVENTION

La présente invention concerne le domaine de l'énergie solaire en général, et plus particulièrement le domaine des suiveurs solaires. Elle trouvera par exemple pour application avantageuse les champs solaires.

### ETAT DE LA TECHNIQUE

L'énergie solaire est aujourd'hui une énergie au cœur de nombreuses innovations technologiques. A l'heure où les besoins énergétiques sont au plus haut, de nombreux Etats de par le monde tendent vers l'utilisation à grande échelle de cette énergie renouvelable.

Que cela soit au travers de panneaux photovoltaïques ou bien de réflecteurs solaires, de nombreux problèmes sont rencontrés par ces installations solaires.

L'une des principales problématiques réside dans l'alignement et l'ajustement de la position des tables portant les dispositifs de collecte d'énergie solaire.

Il convient ainsi d'aligner selon un axe Nord/Sud ces tables et de les motoriser afin que la course du soleil dans le ciel soit suivie par les tables, cela afin de maximiser l'énergie solaire collectée.

Cependant, un obstacle majeur se pose pour ce type d'installation, il s'agit du terrain sur lequel elles sont construites. En effet, il est difficile de trouver un terrain parfaitement plat afin d'y disposer des lignes de tables sur de très longues distances. Or, face à la nécessité d'optimiser les installations, il est nécessaire de les grouper.

De plus dans l'optique de réduire les coûts et d'apporter une synchronicité aux mouvements des tables, une même motorisation de suivi du soleil est généralement prévue pour une pluralité de tables d'une même ligne sous respect d'un alignement parfait et donc d'un terrain plat.

Afin de satisfaire au critère d'alignement, les terrains de champ solaires sont aménagés et terrassés ce qui occasionne un coût et un temps d'installation supplémentaires importants, réduisant par là même la motivation de certains Etats pour investir dans ce type de technologies.

Les solutions actuelles pour compenser les irrégularités du sol reposent donc principalement sur une structuration du terrain ou bien sur le réglage de l'alignement des lignes de réflecteurs.

Ainsi les solutions actuelles restent très coûteuses et très complexes face à cette problématique.

La présente invention vise à résoudre au moins en partie les problématiques exposées ci-dessus.

Le document EP 2 154 449 décrit une installation comportant plusieurs modules solaires dont les mouvements sont synchronisés.

### RESUME DE L'INVENTION

La présente invention concerne un suiveur solaire selon la revendication 1.

Selon un mode de réalisation, ledit premier appui au sol comprend au moins un et de préférence plusieurs galets montés, de préférence libre, en rotation et configurés pour supporter le premier arceau de support, le premier arceau de support s'étendant principalement depuis le premier appui au sol jusqu'à la structure en treillis.

Selon un mode de réalisation, ledit appui au sol additionnel comprend au moins un et de préférence plusieurs galets additionnels monté, de préférence libre, en rotation et configurés pour supporter l'arceau de support additionnel, l'arceau de support additionnel s'étendant principalement depuis l'appui au sol additionnel jusqu'à la structure en treillis additionnelle.

De préférence, les galets supportent à eux seuls le dispositif mobile et le dispositif mobile additionnel.

La présente invention permet ainsi de réaliser un suiveur solaire pouvant d'une part s'adapter aux irrégularités statiques du sol et d'autre part aux irrégularités dynamiques du sol.

En effet, le suiveur selon la présente invention utilise un unique entraînement motorisé pour une pluralité de tables d'une même ligne via une transmission du mouvement cinématique par l'intermédiaire d'au moins un dispositif de couplage cinématique configuré pour s'adapter à une partie au moins des irrégularités statiques et dynamiques.

Le dispositif de couplage cinématique transmet ainsi le mouvement de rotation d'une première table à une table additionnelle quand bien même leurs axes de rotation respectifs ne sont pas colinéaires, voire coplanaires.

De plus, la présente invention permet une reproduction exacte ou proche du mouvement de la première table par la table additionnelle au travers de ce dispositif de couplage cinématique.

Les degrés de liberté dont dispose le dispositif de couplage cinématique permettent au suiveur de la présente invention de s'adapter aux variations dynamiques des irrégularités du sol, mais également aux dilatations et contractions thermiques que subit la structure du suiveur solaire.

Le premier mouvement cinématique est un mouvement de rotation, de préférence autour d'un axe parallèle à ladite direction principale de ladite table du module entraîneur.

Le deuxième mouvement cinématique est un mouvement de rotation, de préférence autour d'un axe parallèle à ladite direction additionnelle de ladite table du module additionnel.

En prévoyant un dispositif de couplage porté entièrement par les dispositifs mobiles de deux modules adjacents, l'invention permet de se passer de structures additionnelles à fixer au sol afin d'assurer une transmission du mouvement entre ces deux mouvements.

Ainsi l'invention apporte une solution efficace, robuste et présentant un coût limité pour effectuer un suivi précis du soleil même sur un terrain non parfaitement plat.

### BREVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :
- La figure 1 illustre une vue générale d'implantation sur un terrain présentant des variations de dénivelés d'un suiveur solaire selon un mode de réalisation non limitatif de la présente invention.
- Les figures 2a, 2b et 2c illustrent un suiveur solaire selon un mode de réalisation non limitatif de la présente invention. La figure 2a présente une vue en perspective d'un suiveur solaire, la figure 2b une vue de profil du suiveur solaire illustrant des variations de dénivelés présents et la figure 2c une vue du dessus du même suiveur solaire.
- Les figures 3a, 3b et 3c illustrent différentes vues d'un module entraîneur selon un mode de réalisation non limitatif de la présente invention en position inclinée d'un angle de 60 degrés.
- Les figures 4a, 4b, 4c et 4d illustrent différentes vues d'une structure en treillis selon un mode de réalisation non limitatif de la présente invention.
- Les figures 5a et 5b illustrent une mise en application de la présente invention selon un premier mode de réalisation de la présente invention.
- Les figures 6a et 6b illustrent deux vues d'un dispositif de couplage cinématique comprenant au moins une jonction rotule mobile en translation selon le premier mode de réalisation de la présente invention.
- Les figures 7a, 7b et 7c illustrent une vue en coupe puis des vues en perspective des éléments formant la jonction rotule mobile en translation selon le premier mode de réalisation de la présente invention.
- Les figures 8a et 8b illustrent deux vues de mise en application de deux jonctions rotules mobiles en translation selon le premier mode de réalisation de la présente invention.
- Les figures 9a, 9b, 9c, 9d et 9e illustrent des vues de mise en application des deux jonctions rotules mobiles en translation selon le premier mode de réalisation de la présente invention en présence d'un désalignement entre deux modules.
- Les figures 10a, 10b et 10c illustrent une suspension au sol selon un mode de réalisation de la présente invention et son positionnement relativement à un ou deux appuis au sol.
- Les figures 11a et 11b illustrent deux vues d'une suspension au sol commune à deux modules selon un mode de réalisation de la présente invention.
- Les figures 12a et 12b illustrent une mise en application de la présente invention selon un deuxième mode de réalisation de la présente invention.
- Les figures 13a et 13b illustrent deux vues en perspective de mise en application des trois jonctions rotules mobiles en translation selon le deuxième mode de réalisation de la présente invention.
- Les figures 14a, 14b et 14c illustrent trois vues en coupe des éléments formant les trois jonctions rotules mobiles en translation selon le deuxième mode de réalisation de la présente invention. Dans les vues 14a et 14b, il n'y a pas de décalage entre les deux modules.

La figure 14c illustre un désaxage. Les figures 14d et 14e représentent des exemples non limitatifs de parties mâle et femelle formant le dispositif de couplage cinématique de ce deuxième mode de réalisation.
- Les figures 15a et 15b illustrent des vues en perspective des éléments composant trois dispositifs de couplage cinématique selon le deuxième mode de réalisation de la présente invention.
- Les figures 16a et 16b illustrent des vues de mise en application des trois jonctions rotules mobiles en translation selon le deuxième mode de réalisation de la présente invention en présence d'un désalignement entre deux modules.
- Les figures 17a et 17b illustrent une mise en application de la présente invention selon un troisième mode de réalisation de la présente invention.
- Les figures 18a, 18b, 18c et 18d illustrent une autre mise en application de la présente invention selon un troisième mode de réalisation de la présente invention.
- Les figures 19a et 19b illustrent des vues en perspective des éléments formant un dispositif de couplage cinématique selon le troisième mode de réalisation de la présente invention.
- Les figures 20a, 20b et 20c illustrent des vues de mise en application d'un dispositif de couplage cinématique selon le troisième mode de réalisation de la présente invention.
- Les figures 21a et 21b illustrent une mise en œuvre de la présente invention selon un quatrième mode de réalisation de la présente invention.
- Les figures 22a, 22b et 22c illustrent le positionnement d'un arceau de support relativement à un dispositif de couplage cinématique et à la structure en treillis selon le quatrième mode de réalisation de la présente invention. La figure 22a présente une structure en treillis selon ce quatrième mode de réalisation de la présente invention.
- Les figures 23a et 23b illustrent deux vues de mise en œuvre de deux jonctions rotules mobiles en translation selon le quatrième mode de réalisation de la présente invention.
- Les figures 24a et 24b illustrent deux vues de mise en œuvre de deux jonctions rotules mobiles en translation selon le quatrième mode de réalisation de la présente invention.
- Les figures 25a et 25b illustrent des vues en perspective des éléments formant la partie femelle de la jonction rotule mobile en translation selon le quatrième mode de réalisation de la présente invention.

Les dessins joints sont donnés à titre d'exemples et ne sont pas limitatifs de l'invention. Ces dessins sont des représentations schématiques et ne sont pas nécessairement à l'échelle de l'application pratique.

### DESCRIPTION DETAILLEE DE L'INVENTION

Il est précisé que dans le cadre de la présente invention, le terme « dispositif de collecte d'énergie solaire », ou ses équivalents ont pour définition un dispositif configuré pour convertir directement ou indirectement de l'énergie solaire en une autre forme d'énergie. Un tel dispositif peut par exemple être un panneau photovoltaïque, un réflecteur solaire, un panneau solaire thermique ou encore un concentrateur solaire par exemple.

Il est précisé que, dans le cadre de la présente invention, le terme « cinématique », ou ses équivalents ont pour définition l'ensemble des paramètres, caractéristiques physiques pouvant décrire un mouvement d'un corps dans un référentiel.

Dans la description qui suit, on entend par « jonction rotule », une articulation entre deux organes présentant trois degrés de liberté en rotation. Une jonction rotule mobile en translation se comprendra alors d'une articulation entre deux organes présentant trois degrés de liberté en rotation et disposant d'au moins un degré et de préférence de deux degrés de liberté en translation d'un organe relativement à l'autre.

Avant d'entamer une revue détaillée de modes de réalisation de l'invention, sont énoncées ci-après des caractéristiques optionnelles qui peuvent éventuellement être utilisées en association ou alternativement :
- Selon un mode de réalisation, la structure en treillis comprend une première et une deuxième extrémités disposées de part et d'autre d'un milieu de la structure en treillis et supportant ladite table.
- Selon un mode de réalisation, les première et deuxième parties sont configurées pour former une liaison pivot glissant. Selon un autre mode de réalisation, les première et deuxième parties sont configurées pour former une liaison linéaire annulaire, c'est-à-dire que l'une parmi les première et deuxième parties peut translater selon un axe et tourner selon trois axes au sein de l'autre parmi la première et la deuxième partie. Dans ces deux modes de réalisation, les première et deuxième parties sont agencées pour coopérer de manière à :
   o Permettre une transmission d'un couple entre le dispositif mobile et le dispositif mobile additionnel. Ainsi, le couplage entre les première et deuxième parties permet d'entraîner en rotation le dispositif mobile additionnel autour de l'axe de rotation additionnel lorsque le dispositif mobile du module entraîneur est entraîné en rotation par le dispositif d'entraînement cinématique autour de l'axe de rotation principal,
   o autoriser une translation relative dudit dispositif mobile du module entraîneur et dudit dispositif mobile additionnel du module additionnel l'un par rapport à l'autre.
- Selon un mode de réalisation, le dispositif mobile et le dispositif mobile additionnel sont disposés de sorte que la direction principale et la direction additionnelles soient sensiblement alignées l'une relativement à l'autre selon l'axe Nord/Sud.
- Selon un mode de réalisation, le dispositif mobile et le dispositif mobile additionnel sont disposés de sorte que la direction principale et la direction additionnelles soient sensiblement disposées dans un même plan vertical.
- Selon un mode de réalisation, le dispositif mobile comprend une première et une deuxième extrémité, et le dispositif mobile et le dispositif mobile additionnel sont disposés de sorte que l'une parmi la première extrémité et la deuxième extrémité du dispositif mobile soit en regard d'une extrémité du dispositif mobile additionnel.
- Selon un mode de réalisation, le premier arceau de support présente deux extrémités solidaires de la structure en treillis, de préférence au moins selon le premier mouvement cinématique, de sorte à ce que le premier arceau de support s'étende depuis la deuxième poutre jusqu'à la troisième poutre en passant au niveau de la première poutre.
- Selon un mode de réalisation, l'arceau de support additionnel présente deux extrémités solidaires de la structure en treillis additionnelle, de préférence au moins selon le deuxième mouvement cinématique, de sorte à ce que l'arceau de support additionnel s'étende depuis la deuxième poutre additionnelle jusqu'à la troisième poutre additionnelle en passant au niveau de la première poutre additionnelle.
- Selon un mode de réalisation, le premier arceau de support et l'arceau de support additionnel s'étendent respectivement de part et d'autre de la direction principale et de la direction additionnelle.
- Selon un mode de réalisation, le premier arceau de support et l'arceau de support additionnel sont respectivement disposés, de préférence entièrement, en dessous de la table et de la table additionnelle.
- De préférence, le premier arceau de support et l'arceau de support additionnel s'étendent respectivement sensiblement depuis la structure en treillis et la structure en treillis additionnelle jusqu'au sol, de préférence sur au moins 70%, et avantageusement sur au moins 80%, de la hauteur séparant le sol et respectivement l'axe de rotation principal et l'axe de rotation additionnel.
- Selon un mode de réalisation, le premier appui au sol et l'appui au sol additionnel sont respectivement disposés, de préférence entièrement, en dessous de la table et de la table additionnelle.
- Selon un mode de réalisation, la structure comprend au moins une première, une deuxième et une troisième poutres parallèles entre elles et s'étendant selon la direction principale de sorte à former une structure en treillis.
- Selon un mode de réalisation, la structure additionnelle comprend au moins une première, une deuxième et une troisième poutres additionnelles parallèles entre elles et s'étendant selon la direction additionnelle de sorte à former une structure en treillis.
- Selon un mode de réalisation non limitatif, le suiveur solaire selon la présente invention utilise une structure en treillis, dont de préférence chaque élément contribue à la résistance du suiveur solaire aux contraintes mécaniques statiques et dynamiques.
- Ainsi, Il est précisé que, dans le cadre de la présente invention, le terme « structure en treillis » ou ses équivalents ont pour définition une structure mécanique comprenant des poutres reliés par des poutrelles, également appelées traverses, et des tirants, le tout formant une structure, de préférence triangulée, rigide. De préférence, sans que cela soit limitatif, chaque élément structurel (poutre, poutrelle, tirant) est configuré, conformé et positionné pour permettre à la structure en treillis de supporter une contrainte mécanique prédéterminée, typiquement sa capacité de charge maximale. De préférence, dans ce type de structure, chaque élément structurellement est indispensable pour supporter ladite capacité de charge maximale. Pour une contrainte mécanique, typiquement sa capacité de charge, toutes les poutrelles et de préférence tous les tirants, sont sollicitées, de préférence en traction.
- Selon un mode de réalisation, la structure en treillis et la structure en treillis additionnelle comprennent respectivement au moins une pluralité de poutrelles et au moins une pluralité de poutrelles additionnelles réparties respectivement le long de la direction principale et le long de la direction additionnelle et reliant entre eux respectivement les première, deuxième et troisième poutres et les première, deuxième et troisième poutres additionnelles de sorte à ce que les poutrelles et les poutrelles additionnelles forment respectivement une première pluralité de triangles et une pluralité de triangles additionnels.
- Selon un mode de réalisation, au moins une poutrelle de la pluralité de poutrelles est disposée relativement au premier arceau de support selon son diamètre, de préférence cette poutrelle définit un diamètre du premier arceau de support, et de préférence au moins une poutrelle additionnelle de la pluralité de poutrelles additionnelles est disposée relativement à l'arceau de support additionnel selon son diamètre, de préférence cette poutrelle additionnelle définit un diamètre de l'arceau de support additionnel.
- Selon un mode de réalisation, au moins certains des triangles et au moins certains des triangles additionnels sont contenus respectivement dans un plan perpendiculaire à la direction principale et dans un plan perpendiculaire à la direction additionnelle.
- Selon un mode de réalisation, la structure en treillis comprend une pluralité de tirants, de préférence s'étendant principalement le long de la direction principale et, contraignant mécaniquement en tension la structure en treillis en reliant mécaniquement entre eux au moins deux triangles de la pluralité de triangles.
- Selon un mode de réalisation, la structure en treillis additionnelle comprend une pluralité de tirants additionnels, de préférence s'étendant principalement le long de la direction additionnelle et, contraignant mécaniquement en tension la structure en treillis additionnelle en reliant mécaniquement entre eux au moins deux triangles additionnels de la pluralité de triangles additionnels.
- Selon un mode de réalisation, la première partie du dispositif de couplage et la deuxième partie du dispositif de couplage sont disposées au regard l'une de l'autre.
- Selon un mode de réalisation, le premier arceau de support de la structure en treillis est disposé entre la première extrémité de ladite structure en treillis et ledit milieu de la structure en treillis. Dans un cas non limitatif de ce mode de réalisation, l'arceau est situé au niveau de la première extrémité.
- Selon un mode de réalisation, le deuxième arceau de support de la structure en treillis est disposé entre la deuxième extrémité de ladite structure en treillis et ledit milieu de la structure en treillis, de préférence créant ainsi par exemple un porte à faux. Dans un cas non limitatif de ce mode de réalisation, l'arceau est situé au niveau de la première extrémité.
- Selon un mode de réalisation, le dispositif mobile comprend un deuxième arceau de support de la structure en treillis, de préférence de forme elliptique, de préférence disposé entre de préférence une portion de la deuxième extrémité de ladite structure en treillis et ledit milieu de la structure en treillis.
- De préférence le dispositif d'entraînement cinématique en rotation dudit dispositif mobile par rapport au premier appui au sol est directement couplé uniquement au premier arceau.
- Avantageusement, ledit premier appui au sol comprend ledit dispositif d'entraînement cinématique en rotation.
- Selon un autre mode de réalisation, le dispositif d'entraînement comprend un élément moteur distinct du module d'entraînement.
   Dans un cas de figure, l'élément moteur comprend un moteur distant du module d'entraînement et un arbre de transmission pour transmettre le mouvement depuis le moteur et jusqu'au module d'entraînement.
   Dans un autre cas de figure, l'élément moteur est un autre module cinématiquement couplé au module entraîneur
- Avantageusement, le deuxième mouvement cinématique et le premier mouvement cinématique partagent au moins une caractéristique cinématique commune prise parmi au moins l'une des caractéristiques cinématiques suivantes : angle de rotation, amplitude de rotation, accélération, vitesse, vecteur de déplacement.
   Cela permet à la table additionnelle de reproduire le mouvement cinématique de la table afin d'assurer le suivi du soleil par les deux tables et cela indépendamment de la non-colinéarité de leurs axes de rotation.
   Cela permet à la table additionnelle de reproduire le mouvement cinématique de la table de manière précise.
- Avantageusement, ledit au moins un dispositif de couplage cinématique comprend au moins une jonction rotule mobile en translation selon au moins l'axe de translation relative du module additionnel et du module entraîneur et de préférence en rotation selon une pluralité d'axes de rotation.
   Cela permet à la présente invention de s'adapter aux irrégularités du sol via le dispositif de couplage cinématique qui comprend de nombreux degrés de liberté. La jonction rotule mobile en translation selon ladite direction secondaire permet une adaptation du suiveur solaire aux changements de pente d'un terrain le long de la ligne de tables. De manière avantageuse, ladite jonction rotule est mobile selon au moins l'axe de translation relative du module additionnel et du module entraîneur et de préférence en rotation selon une pluralité d'axes de rotation, et de préférence selon au moins un axe transverse audit axe de translation relative du module additionnel et du module entraîneur.
- Avantageusement, ladite au moins une jonction rotule mobile en translation comprend :
   - au moins une partie femelle solidaire de l'un parmi le dispositif mobile du module entraîneur et le dispositif mobile additionnel du module additionnel et
   - au moins une partie mâle solidaire de l'autre parmi le dispositif mobile du module entraîneur et le dispositif mobile additionnel du module additionnel.
- Avantageusement, ladite au moins une partie femelle est connectée mécaniquement audit au moins un module entraîneur et ladite au moins une partie male est connectée mécaniquement audit au moins un module additionnel.
   Cela permet au dispositif de couplage cinématique d'être indépendant dans sa translation relativement aux supports.
- Selon un mode de réalisation, au moins une partie femelle est connectée mécaniquement audit au moins un deuxième arceau de support et ladite au moins une partie male est connectée mécaniquement audit au moins un arceau de support additionnel.
   Cela permet la transmission du premier mouvement cinématique à la table additionnelle via ce couplage mécanique.
- Selon un mode de réalisation, ladite au moins une partie femelle est connectée mécaniquement à ladite au moins une structure en treillis et ladite au moins une partie male est connectée mécaniquement à ladite au moins une structure en treillis additionnelle.
   Cela permet la transmission du premier mouvement cinématique à la table additionnelle via ce couplage mécanique.
- Avantageusement, ladite au moins une partie femelle s'étend principalement selon l'une parmi ladite direction principale et ladite direction additionnelle.
- Avantageusement, ladite au moins une partie male s'étend principalement selon l'autre parmi ladite direction principale et ladite direction additionnelle.
- Avantageusement, ladite au moins une partie femelle comprend une mâchoire et ladite au moins une partie male comprend une langue configurée pour être enserrée dans la mâchoire de manière à permettre un coulissement de la langue dans la mâchoire.
- Avantageusement, l'une parmi la mâchoire ou la langue comprend des patins formant une interface entre la mâchoire et la langue afin de faciliter ledit coulissement.
- De manière préférée, lesdits patins comprennent un matériau présentant un faible coefficient de frottement comme par exemple en bronze, en téflon ou encore en matière synthétique ou métallique ou un élément comprenant des billes.
- Selon un autre mode de réalisation, l'une parmi la mâchoire ou la langue ou les deux comprennent au moins une rotule à bille.
- Avantageusement, ladite au moins une partie femelle comprend un fourreau ou une cavité cubique et la partie mâle comprend un cylindre, une structure au moins partiellement sphérique ou un pavé présentant des formes et dimensions complémentaires de la partie femelle afin de s'introduire dans cette dernière.
- Selon un mode de réalisation, ladite au moins une partie femelle comprend au moins l'un parmi les éléments suivants : une mâchoire, un fourreau, un trou oblong, une cavité cubique. De manière plus générale ladite au moins une partie femelle comprend toute forme susceptible d'accepter une partie male en lui laissant les degrés de liberté requis pour assurer une liaison de type rotule-glissière ou une liaison de type rotule-pivot-glissière. Ainsi, par exemple non limitatif, ladite au moins une partie femelle comprend tout type de logement de forme complémentaire à ladite partie male permettant un mouvement en translation selon au moins deux axes et permettant de former une rotule complète.
- Selon un mode de réalisation ladite au moins une partie male comprend au moins l'un parmi les éléments suivants : une langue, un cylindre monté d'une structure sphérique, un cube. De manière plus générale ladite au moins une partie femelle comprend toute partie male susceptible d'assurer la liaison avec une partie femelle de forme complémentaire tout en laissant les degrés de liberté requis pour une liaison de type rotule-glissière ou une liaison de type rotule-pivot-glissière.
   Cela permet de disposer de nombreuses solutions technologiques afin de réaliser le dispositif de couplage cinématique en fonction des besoins et des circonstances d'installation.
- Avantageusement, au moins un dispositif de couplage cinématique est disposé de préférence excentré relativement au centre de gravité dudit arceau de support additionnel et relativement au centre de gravité dudit deuxième arceau de support.
   Par exemple, si les arceaux appartenant à deux modules adjacents et mutuellement couplés sont des arcs de cercle alors le dispositif de couplage cinématique est situé à distance du centre de chacun de ces deux arceaux, les deux arceaux étant configurés pour tourner autour de leur centre.
   Par exemple, si les arceaux appartenant à deux modules adjacents et mutuellement couplés sont des portions d'ellipse alors le dispositif de couplage cinématique est situé à distance du centre de chacun de ces deux arceaux, les deux arceaux étant configurés pour tourner autour de leur centre.
   Selon un mode de réalisation avantageux, le dispositif de couplage est de préférence situé sur la portion de cercle ou d'ellipse définie par l'arceau ou les arceaux. Ainsi il est à distance du centre de rotation des arceaux.
   Cela permet de disposer au minimum d'une seule jonction rotule mobile en translation afin de simplifier le montage de la présente invention et de réduire les coûts d'installation.
   Cela permet également de diminuer considérablement les efforts supportés par ledit au moins un dispositif de couplage cinématique. En effet, plus le dispositif de couplage cinématique est éloigné de l'axe de rotation et/ou du centre de gravité du ou des arceaux, et plus faibles sont les efforts que ledit au moins un dispositif de couplage supporte.
- Selon un mode de réalisation, le suiveur solaire comprend plusieurs dispositifs de couplage cinématique. L'un de ces dispositifs de couplage cinématique est disposé sur une droite passant par l'axe de rotation de l'arceau, typiquement sur une droite passant par le centre de la portion de cercle ou d'ellipse définie par l'arceau. De préférence un ou plusieurs autres de ces dispositifs de couplage cinématique sont disposés à distance de l'axe de rotation de l'arceau, de préférence sur la portion de cercle ou d'ellipse définie par l'arceau.
- Avantageusement, ladite au moins une partie male est disposée de préférence de manières excentrée relativement au centre de gravité dudit au moins un deuxième arceau de support.
- Avantageusement, ladite au moins une partie femelle est disposée de préférence de manières excentrée relativement au centre de gravité dudit au moins un arceau de support additionnel.
- Selon un mode de réalisation, ledit au moins un dispositif de couplage cinématique est disposé de préférence au niveau du centre de rotation dudit arceau de support additionnel et au niveau du centre de rotation dudit deuxième arceau de support.
   Cela permet de disposer d'une seule jonction rotule mobile en translation afin de simplifier le montage de la présente invention et de réduire les coûts d'installation.
- Selon un mode de réalisation, ledit au moins un dispositif de couplage cinématique est disposé de préférence au niveau du centre de gravité dudit arceau de support additionnel et au niveau du centre de gravité dudit deuxième arceau de support.
   Cela permet de disposer d'une seule jonction rotule mobile en translation afin de simplifier le montage de la présente invention et de réduire les coûts d'installation.
- Selon un mode de réalisation, ladite au moins une partie male est disposée sensiblement au centre de rotation dudit au moins un deuxième arceau de support.
- Selon un autre mode de réalisation, ladite au moins une partie male est disposée sensiblement au centre de gravité dudit au moins un deuxième arceau de support.
- Selon un mode de réalisation, ladite au moins une partie femelle est disposée sensiblement au centre de rotation dudit au moins un arceau de support additionnel.
- Selon un autre mode de réalisation, ladite au moins une partie femelle est disposée sensiblement au centre de gravité dudit au moins un arceau de support additionnel.
- Selon un autre mode de réalisation, le couplage cinématique entre les deux modules comprend au moins un dispositif de couplage cinématique, ce dernier comprenant de préférence une jonction rotule mobile en translation selon l'axe de translation relative du module additionnel par rapport au module entraîneur.
- Selon un autre mode de réalisation, privilégié, le couplage cinématique entre les deux modules comprend deux de préférence trois, voire plus, dispositifs de couplage cinématiques. De préférence chacun d'entre eux comprend une jonction rotule mobile en translation selon l'axe de translation relative du module additionnel par rapport au module entraîneur.
- Selon un mode de réalisation, le suiveur solaire comprend au moins un dispositif de couplage cinématique, de préférence au moins trois dispositifs de couplage cinématiques et avantageusement au moins trois dispositifs de couplage cinématique. Cela permet de répartir les efforts mécaniques sur trois jonctions rotules mobiles en translation afin de permettre la fabrication de jonctions rotules mobiles en translation à plus bas coût.
- De préférence, lorsque le suiveur solaire comprend au moins trois dispositifs de couplage cinématique, au moins un parmi les au moins trois dispositifs de couplage cinématique est disposé au niveau de l'axe de rotation principal et/ou additionnel.
- Avantageusement, le suiveur solaire comprend au moins une jonction rotule mobile en translation selon l'axe de translation relative du module additionnel par rapport au module entraîneur, de préférence au moins deux jonctions rotules mobiles en translation et avantageusement au moins trois jonctions rotules mobiles en translation.
- De préférence, lorsque le suiveur solaire comprend au moins trois jonctions rotules mobiles en translation, au moins une parmi les au moins trois jonctions rotules mobiles en translation est disposée au niveau de l'axe de rotation principal et/ou additionnel.
- Selon un mode de réalisation, le suiveur solaire comprend deux ou trois dispositifs de couplage entre ledit dispositif d'entraînement et ledit dispositif d'entraînement additionnel.
- Selon un mode de réalisation, le suiveur solaire comprend trois ou plus dispositifs de couplage entre ledit dispositif d'entraînement et ledit dispositif d'entraînement additionnel.
- Selon un mode de réalisation, le suiveur solaire comprend un unique dispositif de couplage entre ledit dispositif d'entraînement et ledit dispositif d'entraînement additionnel.
- Avantageusement, le dispositif de couplage cinématique comprend au moins un axe de transfert cinématique, un premier dispositif d'articulation pivot et un deuxième dispositif d'articulation pivot, le premier dispositif d'articulation pivot assurant une connexion mécanique entre le deuxième arceau de support et ledit axe de transfert cinématique, et le deuxième dispositif d'articulation pivot assurant une connexion mécanique entre l'arceau de support additionnel et ledit axe de transfert cinématique.
   Cela permet à la présente invention de s'adapter aux irrégularités du sol via le dispositif de couplage cinématique qui comprend de nombreux degrés de liberté, l'axe de transfert cinématique permet une adaptation du suiveur solaire aux changements de pente d'un terrain le long de la ligne de tables via les deux dispositifs d'articulation pivot de couplage.
- De préférence l'axe de transfert est une barre, de préférence en métal, de préférence de section circulaire.
- Avantageusement, au moins une structure en treillis parmi ladite structure en treillis et ladite structure en treillis additionnelle et au moins un arceau de support parmi ledit premier arceau de support, ledit deuxième arceau de support et ledit arceau de support additionnel sont mécaniquement connectés entre eux par au moins une jonction pivot permettant un degré de rotation entre ladite au moins une structure en treillis et ledit au moins un arceau de support.
   Cela permet d'améliorer la transmission du premier mouvement cinématique à la table additionnelle.
- Avantageusement, au moins l'un, de préférence les deux, parmi le premier appui au sol et l'appui au sol additionnel est disposé sur au moins une suspension au sol présentant une élasticité en compression selon au moins un axe vertical.
- Selon un mode de réalisation, l'appui au sol additionnel est disposé sur au moins deux suspensions au sol.
   La présence d'au moins une suspension au sol permet un meilleur fonctionnement de la présente invention.
   Cela permet également de compenser les irrégularités du sol, mais également les variations de température induisant des dilatations et des compressions mécaniques.
- Selon un mode de réalisation préféré, ladite au moins une suspension au sol présente une forme en « U ». Cette forme en « U », de préférence couché, apporte des degrés de liberté additionnels aux appuis au sol relativement aux irrégularités du terrain via sa capacité à se déformer élastiquement en compression selon au moins un axe vertical.
   Avantageusement cette suspension au sol présente un effet de synergie avec les autres caractéristiques relatives au dispositif de couplage cinématique.
   Cette suspension au sol permet d'absorber certains efforts mécaniques dus au couplage cinématique des modules.
   De manière préférée, la suspension au sol est configurée pour présenter une certaine élasticité afin d'encaisser les efforts mécaniques dus au couplage cinématique des modules.
- Avantageusement, la suspension au sol est en métal et de préférence de qualité ressort, par exemple en acier à ressort.
- Avantageusement, ladite au moins une suspension au sol présente des propriétés élastiques.
- Avantageusement, le dispositif mobile comprend un deuxième arceau de support qui repose sur au moins un deuxième appui au sol du module entraîneur, ledit deuxième appui au sol comprenant au moins un dispositif de guidage en rotation configuré pour guider, de préférence directement, le deuxième arceau de support selon ledit premier mouvement cinématique relativement audit deuxième appui au sol autour dudit axe de rotation principal.
   Cela permet de supporter en partie au moins le poids de la table.
- De manière avantageuse, la suspension au sol peut comprendre un ressort hélicoïdal ou un jeu d'élastomères (de type Silentbloc^{™} par exemple).
- Selon un mode de réalisation, le deuxième appui au sol est disposé sur au moins une suspension au sol, de préférence sur au moins deux suspensions au sol.
   Cela permet de compenser les irrégularités du sol, mais également les variations de température induisant des dilatations et des contractions mécaniques.
   Cette suspension au sol permet d'absorber certains efforts mécaniques dus au couplage cinématique des modules.
- Avantageusement, le deuxième arceau de support repose sur au moins un deuxième appui au sol comprenant au moins un dispositif de guidage en rotation configuré pour guider, de préférence directement, le deuxième arceau de support selon ledit mouvement cinématique relativement audit deuxième appui au sol autour dudit axe de rotation.
   Cela permet de supporter en partie au moins le poids de la table tout en accompagnant le mouvement cinématique de la table.
- Avantageusement, ledit au moins un dispositif de guidage en rotation comprend au moins deux galets configurés pour être directement en contact avec le deuxième arceau de support.
   Cela permet d'accompagner la table dans son mouvement cinématique afin de réduire les efforts mécaniques supportés par la structure en treillis.
- Avantageusement, le dispositif de guidage en rotation additionnel comprend au moins deux galets configurés pour être directement en contact avec l'arceau de support additionnel de sorte à guider ledit arceau de support additionnel selon ledit deuxième mouvement cinématique relativement audit au moins un appui au sol additionnel autour dudit axe de rotation additionnel.
   Cela permet d'accompagner la table additionnelle dans son mouvement cinématique afin de réduire les efforts mécaniques supportés par la structure en treillis additionnelle.
- Selon un mode de réalisation, l'appui au sol comprend une embase ou une semelle ancrée, au moins en partie, dans le sol. L'embase est par exemple en béton. Le ou les galets sont montés en rotation relativement à l'embase.
- Selon un mode de réalisation, le suiveur solaire est configuré de manière à ce que les galets et les galets additionnels supportent, de préférence à eux seuls, le dispositif mobile.
- Avantageusement, ledit dispositif d'entraînement cinématique en rotation comprend au moins une motorisation et de préférence des moyens d'engrènement.
   Cela permet de contrôler précisément le suivi du soleil par la présente invention.
- Avantageusement, ledit au moins un premier appui au sol comprend au moins une chaîne ou un système de vérin configuré pour assurer la motorisation du module entraîneur.
- Avantageusement, ledit au moins un premier appui au sol comprend au moins un pignon et le premier arceau de support comprend au moins une crémaillère disposée sur au moins une partie du premier arceau de support de préférence orientée vers le sol, ledit au moins un pignon et ladite au moins une crémaillère étant configurés pour entraîner cinématiquement en rotation ledit premier arceau de support relativement audit moins un premier appui au sol autour dudit axe de rotation principal.
   Cela permet de limiter les dégradations de la crémaillère et du pignon par l'environnement. En effet, dans cette configuration des grains de sable par exemple ne peuvent demeurer dans la crémaillère et difficilement dans le pignon.
- Selon un autre mode de réalisation, ledit au moins un premier appui au sol comprend au moins un pignon et le premier arceau de support comprend au moins une chaîne disposée sur au moins une partie du premier arceau de support de préférence orientée vers le sol, ledit au moins un pignon et ladite au moins une chaîne étant configurés pour entraîner cinématiquement en rotation ledit premier arceau de support relativement audit moins un premier appui au sol autour dudit axe de rotation principal.
- Avantageusement, la direction principale et la direction additionnelle présentent une variation de pente relative supérieure à 1%, de préférence à 3% et avantageusement à 6%.
   Cela permet l'installation de la présente invention sur des terrains présentant des variations de topographie le long d'une même ligne de tables.
- Avantageusement, ladite première structure en treillis comprend au moins une poutre en treillis, de préférence au moins deux et avantageusement au moins trois.
   Cela permet de renforcer la structure en treillis en répartissant les efforts mécaniques.
- Avantageusement, ledit dispositif de collecte d'énergie solaire est pris parmi au moins : un panneau photovoltaïque, un réflecteur solaire, un capteur solaire thermique.
- Avantageusement, le dispositif de collecte d'énergie solaire additionnel est pris parmi au moins : un panneau photovoltaïque, un réflecteur solaire, un capteur solaire thermique.
- Selon un mode de réalisation, la structure en treillis peut être en acier.
- Selon un mode de réalisation, les arceaux de support comprennent ou sont formés d'acier.
- Selon un mode de réalisation, les appuis au sol comprennent ou sont formés d'acier.
- Selon un mode de réalisation, la suspension au sol comprend ou est formée d'acier.
- Selon un mode de réalisation, le ou les galets peuvent comprendre ou être formés d'acier, de préférence revêtus de polyuréthane de sorte à leur permettre d'accepter les variations d'appuis lors des mouvements des arceaux de support par exemple.
- Selon un mode de réalisation, ladite partie femelle comprend ou est formée d'acier.
- Selon un mode de réalisation, ladite partie mâle comprend ou est formée d'acier.

La présente invention trouve pour domaine préférentiel d'application la réalisation de champs solaires, c'est-à-dire d'étendues comprenant une pluralité de lignes de tables supportant des dispositifs de collecte d'énergie solaire.

Comme il sera présenté ci-après la présente invention résout notamment la problématique de l'alignement de tables et de leur couplage cinématique sur des terrains présentant des irrégularités statiques, mais également dynamiques.

En effet, alors qu'un terrain peut présenter selon un axe Nord/Sud des dénivelés variables sur une distance plus ou moins importante relativement à une table, il peut également présenter des irrégularités dynamiques d'origine géologique, plus ou moins importantes.

Une seconde source d'irrégularités dynamiques subies par un suiveur solaire, mais non générées par le terrain lui-même provient des dilatations thermiques que subissent les matériaux composant le suiveur solaire.

Par exemple, en milieu désertique la température au sol peut être très élevée en journée et très basse durant la nuit. La présente invention, en plus de s'adapter aux irrégularités statiques et dynamiques du terrain, s'adapte également aux irrégularités d'ordre thermique.

La présente invention va maintenant être décrite au travers d'une pluralité de figures servant d'illustration de mise en œuvre de la présente invention selon une pluralité de modes de réalisation. Sauf mention contraire, chacune des caractéristiques décrites en référence à un mode de réalisation donné est applicable aux autres modes de réalisation.

Nous débuterons cette description par une présentation générale de la présente invention qui sera par la suite déclinée en quatre modes de réalisation non limitatifs.

### > Généralités

Les passages de la description qui vont suivre visent à présenter de manière générale la présente invention, mais également les caractéristiques et les éléments de base composant la présente invention et pouvant être communs à plusieurs modes de réalisation.

Ces éléments et ces caractéristiques doivent être interprétés de manière à s'appliquer aussi bien au module entraîneur qu'au module additionnel. Par exemple, lorsque le terme « module » seul sera utilisé, les caractéristiques et les éléments de ce « module » seront communs au module entraîneur et au module additionnel, il en va de même pour les termes « table », « poutre », « arceau », « appui », ...etc....

Comme introduit précédemment, la disposition d'un suiveur solaire comprenant une pluralité de modules alignés selon un axe Nord/Sud est une problématique lorsque le terrain ne présente pas une planéité quasi-parfaite.

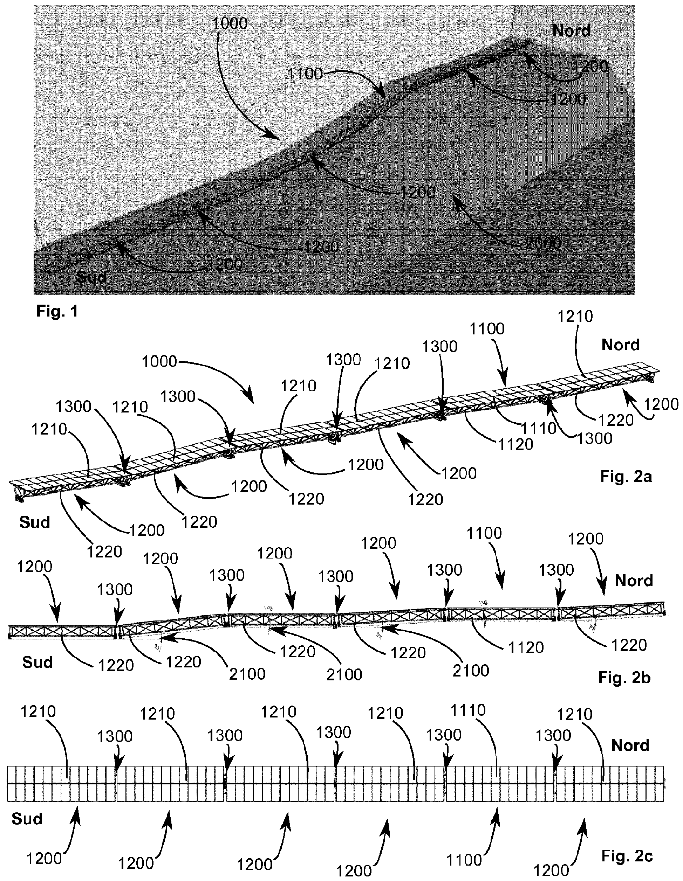

La figure 1 illustre le cas d'un tel terrain 2000 comprenant une variabilité de dénivelés selon un axe Nord/Sud. Sur cette figure un suiveur solaire 1000 selon un mode de réalisation de la présente invention est installé sur ce terrain 2000 irrégulier.

Le suiveur solaire 1000 de la figure 1 comprend de préférence au moins un module entraîneur 1100 et une pluralité de modules additionnels 1200, pouvant être qualifiés de « suiveurs ». Une autre manière de présenter le lien entre le module entraîneur 1100 et les modules additionnels 1200 réside dans la qualification de « maître » au module entraîneur 1100 et « d'esclaves » aux modules additionnels 1200, en ce sens que la présente invention est configurée de sorte à ce que les mouvements cinématiques du module entraîneur 1100 soient transmis au moins en partie aux modules additionnels 1200.

On notera que cette qualification de « module entraîneur » et « module suiveur » vaut pour tous les couples formés par deux modules consécutifs. Si un premier module est situé entre un deuxième et un troisième modules disposés de part et d'autre du premier module, alors le premier module peut être suiveur vis-à-vis du deuxième module et être entraîneur vis-à-vis du troisième module. En effet, la rotation du deuxième module entraîne le premier module qui à son tour entraîne en rotation le troisième module.

On notera également que selon un mode de réalisation préféré, le module entraîneur 1100 et le module suiveur 1200 sont disposés de sorte que l'une des extrémités du module entraîneur 1100 soit au regard de l'une des extrémités du module suiveur 1200.

Sur la figure 1, le module entraîneur 1100 comprend avantageusement une motorisation configurée pour assurer au module entraîneur 1100 le suivi du soleil. Cette motorisation est soit intégrée au module entraîneur 1100 soit est déportée avec une transmission mécanique jusqu'au module entraîneur 1100.

Les modules additionnels 1200 vis-à-vis du module entraîneur 110 sont eux configurés pour être entraînés par le module entraîneur 1100 de sorte à suivre également et de manière synchronisée avec le module entraîneur 1100 la course du soleil alors même que des dénivelés et/ou des désalignements dans l'espace ou/et dans des plans horizontaux parallèles existent entre le module entraîneur 1100 et les modules additionnels 1200, voire entre les modules additionnels 1200 eux-mêmes.

De manière préférée, le module entraîneur 1100 est disposé entre deux modules additionnels 1200, comme sur la figure 1, de sorte à répartir les couples moteurs dans l'ensemble du suiveur solaire 1000.

La présente invention concerne alors le couplage cinématique entre le module entraîneur 1100 et les modules additionnels 1200 de sorte à ce que le mouvement de suivi du module entraîneur 1100 soit reproduit de manière simple, fiable et peu coûteuse par les modules additionnels 1200. Ce couplage cinématique a de manière avantageuse été mis au point au travers du développement d'un dispositif de couplage cinématique 1300 selon la présente invention.

### ❖ Dispositif de couplage cinématique

Comme introduit ci-dessus, le dispositif de couplage cinématique 1300 est configuré pour permettre le partage d'au moins une caractéristique cinématique entre un premier mouvement cinématique effectué par le module entraîneur 1100 et un deuxième mouvement cinématique que réalise le ou les modules additionnels 1200.

De manière avantageuse, on entend par « caractéristique cinématique », ou ses équivalents toutes caractéristiques permettant la description précise d'un mouvement cinématique, c'est-à-dire par exemple un angle de rotation, une amplitude de rotation, un vecteur de déplacement, une amplitude de translation, une vitesse, une accélération.

Les figures 2a, 2b et 2c représentent un suiveur solaire 1000 s'étendant selon une direction Nord/Sud et en donnent trois vues différentes. Sur ces figures, des tables 1110 et 1210 comprenant des dispositifs de collecte d'énergie solaire 1112 et 1212, non référencés sur ces figures, sont montées sur des structures en treillis 1120 et 1220 disposant à chacune de leur extrémité d'un arceau de support 1130, 1150 et 1230, non référencé sur ces figures. Pour chaque module 1100, 1200, la table, la structure en treillis et les arceaux forment un dispositif mobile. Pour chaque module 1100, 1200, ce dispositif mobile repose sur un appui au sol 1140, 1160 et 2140, non référencé sur ces figures, selon un mode de réalisation de la présente invention.

La figure 2a est une vue en perspective d'un suiveur solaire 1000. Le suiveur solaire 1000 comprend de manière préférée un module entraîneur 1100 et une pluralité de modules additionnels 1200 de sorte à former une ligne.

Selon un mode de réalisation, le module entraîneur 1100 peut se trouver au début ou à la fin de la ligne de modules. Cela permet l'entretien facile de la motorisation.

Selon un autre mode de réalisation, le module entraîneur 1100 se trouve entre deux modules additionnels 1200.

De manière préférée, le module entraîneur 1100 se trouve au niveau du centre du suiveur solaire 1000 de sorte à répartir les couples moteurs dans l'ensemble du suiveur solaire 1000.

Sur la figure 2a, le dispositif de couplage cinématique 1300 situé entre chaque module est sommairement représenté. Une description plus précise en sera donnée par la suite, de préférence au travers de quatre modes de réalisation.

La figure 2b présente une vue de profil du suiveur solaire 1000 de la figure 2a précédente. Ici encore on retrouve les tables 1110 et 1210, les structures en treillis 1120 et 1220 et les dispositifs de couplage cinématique 1300 disposés entre chaque module.

Sur cette figure les dénivelés 2100 ont été rapportés afin d'illustrer l'adaptabilité de la présente invention au terrain 2000.

En effet sur la figure 2b, il est notable que le dénivelé 2100 entre plusieurs modules est différent, toutefois, la présente invention permet une transmission d'un mouvement de suivi de la course du soleil depuis le module entraîneur 1100 vers chaque module additionnel 1200 par l'intermédiaire des dispositifs de couplage cinématique 1300.

La figure 2c est une vue du dessus du suiveur solaire 1000 selon la figure 2a. Dans le cas illustré par cette figure, le suiveur solaire 1000 présente un alignement quasi-parfait selon l'axe Nord/Sud. En effet, il est à noter que par le choix d'un alignement Nord/Sud, le suiveur solaire 1000 selon la présente invention se doit de s'adapter aux irrégularités du terrain 2000. La présente invention permet ainsi de conserver un alignement Nord/Sud sans structuration du terrain 2000 tout en conservant un suiveur solaire 1000 comprenant une pluralité de modules.

Selon un mode de réalisation préféré, le module entraîneur 1100 comprend au moins un dispositif mobile (1110, 1120, 1130, 1150), au moins un premier appui au sol 1140 et au moins un dispositif d'entraînement cinématique en rotation 1141. Le module additionnel 1200 comprend également au moins un dispositif mobile additionnel (1210, 1220, 1230), au moins un appui au sol additionnel 1240 et au moins un dispositif de guidage en rotation additionnel 1241.

De manière préférée, le dispositif de couplage cinématique est entièrement supporté par ledit dispositif mobile et/ou ledit dispositif mobile additionnel.

Avantageusement, le dispositif de couplage 1300 comprend au moins une première partie 1330 et au moins une deuxième partie 1340, la première partie 1330 étant entièrement supportée par le dispositif mobile (1110, 1120, 1130, 1150) et la deuxième partie 1340 étant entièrement supportée par le dispositif mobile additionnel (1210, 1220, 1230).

Selon un mode de réalisation préféré, la première partie 1330 du dispositif de couplage 1300 et la deuxième partie 1340 du dispositif de couplage 1300 sont disposées au regard l'une de l'autre.

De manière astucieuse, l'invention permet de se passer du réglage d'alignement des points de couplage entre deux modules lors de l'installation du suiveur solaire.

### ❖ Module

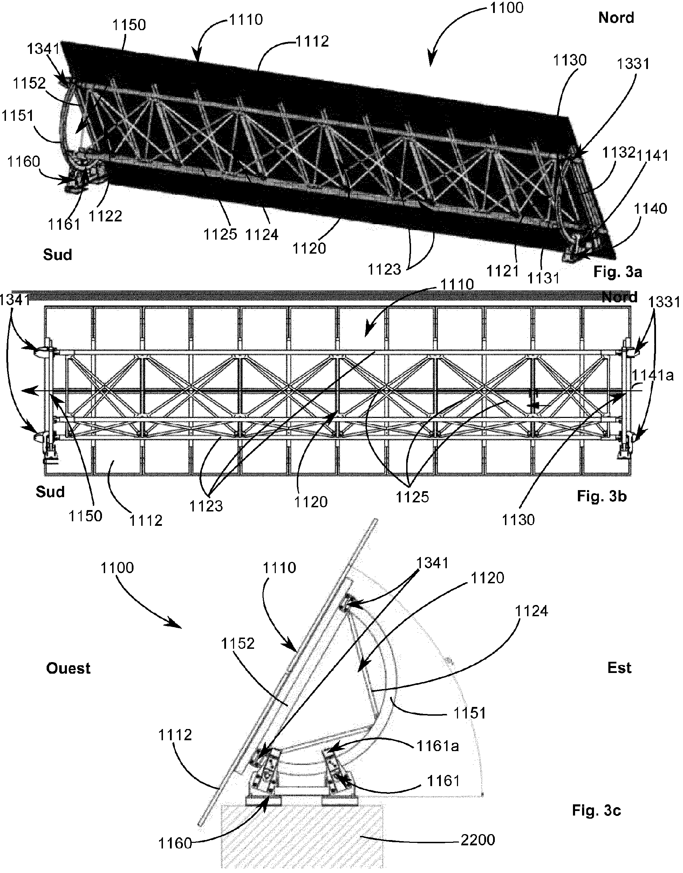

Les figures 3a, 3b et 3c représentent, selon un mode de réalisation de la présente invention, un module pouvant être un module entraîneur 1100 ou additionnel 1200 en fonction qu'il dispose ou non d'une motorisation, non illustrée sur ces figures. Le module illustré sur ces figures est dans une position inclinée à 60 degrés vers l'ouest.

En effet, selon un mode de réalisation de la présente invention, le module entraîneur 1100 d'un suiveur solaire ne se distingue des modules additionnels 1200 que par la présence d'une motorisation. Cette motorisation est avantageusement disposée au niveau d'un appui au sol 1140 configuré pour porter un arceau de support 1130. La présence de la motorisation du module entraîneur au niveau du sol permet de diminuer le poids du module.

La figure 3a est une vue en perspective d'un module 1100 par exemple et comprenant une table 1110 montée sur une structure en treillis 1120. De manière conventionnelle une structure en treillis est une structure comprenant des poutres ou profilés s'étendant selon au moins deux directions différentes et solidaires les unes des autres.

Selon un mode de réalisation tel qu'illustré en figure 3a, chaque extrémité 1121 et 1122 de la structure en treillis 1120 est supportée par un arceau de support 1130 et 1150.

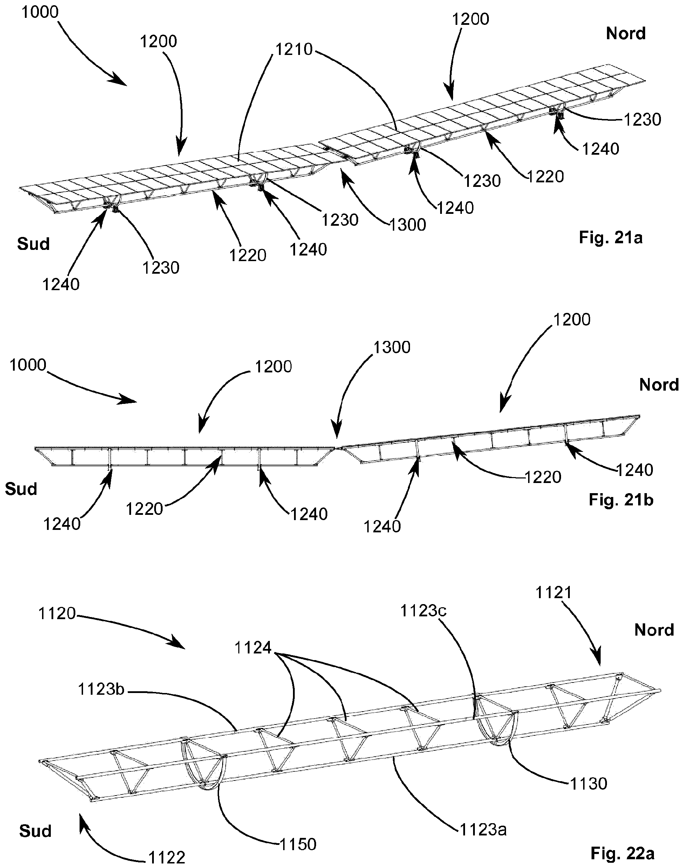

Selon un autre mode de réalisation tel qu'illustré en figure 22a, la structure en treillis 1120 est supportée par un ou deux arceaux de support 1130 et 1150 disposés respectivement entre le milieu et respectivement chacune des deux extrémités 1121 et 1122 de la structure en treillis 1120.

Selon un autre mode de réalisation, plus de deux arceaux peuvent supporter la structure en treillis.

Selon un mode de réalisation tel qu'illustré en figures 3a et 22a par exemple, chaque arceau de support 1130, 1150 et 1230 repose sur un appui au sol 1140, 1160 et 1240. L'appui au sol 1140, 1160 et 1240 au sol comprend une embase ou une semelle ancrée, au moins en partie, dans le sol. L'embase est par exemple en béton

Selon un autre mode de réalisation, seulement un des deux arceaux de support 1130 et 1150 repose sur un appui au sol 1140.

Ainsi le module entraîneur illustré en figure 3a comprend un premier arceau de support 1130 disposé au niveau d'une portion de la première extrémité 1121 de la structure en treillis 1120, un deuxième arceau de support 1150 disposé au niveau d'une portion de la deuxième extrémité 1122 de la structure en treillis 1120.

De manière avantageuse, le premier arceau de support 1130 repose sur un premier appui au sol 1140 et le deuxième arceau de support 1150 repose sur un deuxième appui au sol 1160.

Selon un mode de réalisation illustré en figure 3a, le premier appui au sol 1140 comprend une suspension au sol 1170 configurée pour permettre le positionnement des modules 1100 et 1200 de manière simple, fiable et à contribuer à compenser les irrégularités du terrain 2000. Cette suspension au sol 1170 sera décrite plus précisément par la suite.

La figure 3b est une vue de profil du module 1100 de la figure 3a. On y retrouve les mêmes éléments. On remarque sur cette figure de manière plus claire la présence à chaque extrémité 1121 et 1122 du module d'une partie d'un dispositif de couplage cinématique 1300 selon le premier mode de réalisation qui sera décrit ci-après.

La première extrémité 1121 comprend deux parties femelles 1331 du dispositif de couplage cinématique 1300 et la deuxième extrémité 1122 comprend deux parties males 1341 du dispositif de couplage cinématique 1300 selon le premier mode de réalisation de la présente invention.

Respectivement, chaque partie femelle 1331 et mâle 1341 est configurée pour coopérer avec respectivement chaque partie mâle 1341 et femelle 1331 du module suivant.

La figure 3c représente un module 1100 vu selon sa dimension d'extension principale. Ce module 1100 est similaire au module des figures 3a et 3b si ce n'est que le deuxième appui au sol 1160 repose sur un bloc de support 2200, par exemple en béton, formé lors de l'installation du suiveur solaire 1000. On retrouve sur cette figure les mêmes éléments structuraux que ceux des figures 3a et 3b précédentes.

### ❖ Structure en treillis et Arceau de support

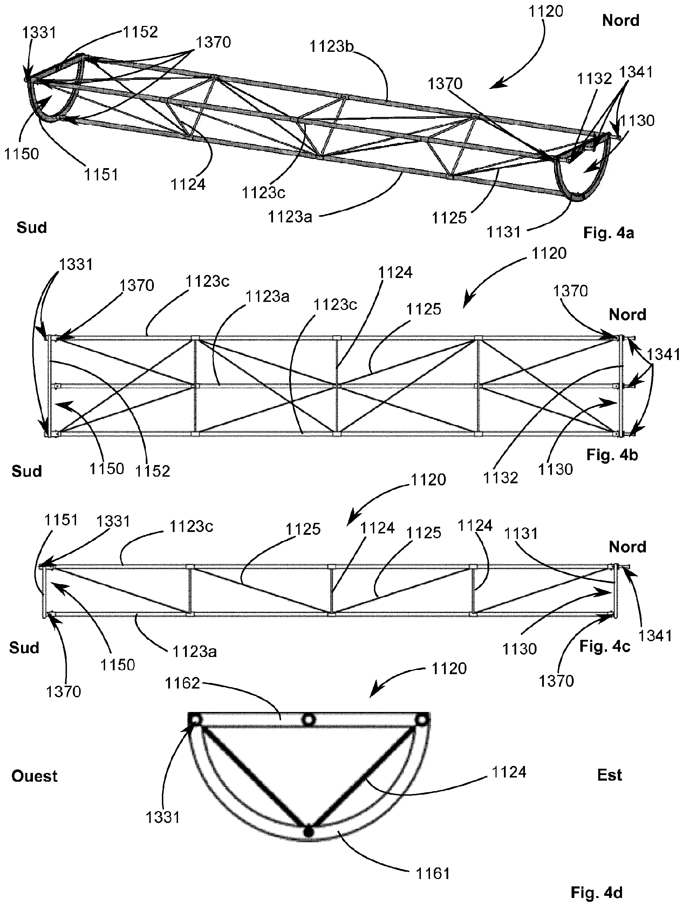

Les figures 4a, 4b, 4c et 4d représentent trois vues différentes d'une structure en treillis 1120 comprenant un arceau 1130 et 1150 au niveau de chacune de ses extrémités 1121 et 1122 selon un mode de réalisation de la présente invention.

La figure 4a est une vue en perspective d'une structure en treillis 1120 comprenant une première extrémité 1121 et une deuxième extrémité 1122. Cette structure en treillis 1120 est configurée pour recevoir une table 1110 comprenant un ou plusieurs dispositifs de collecte d'énergie solaire 1112.

Selon un mode de réalisation, cette structure en treillis 1120 comprend au moins une poutre 1123, de préférence au moins deux poutres 1123 et avantageusement au moins trois poutres 1123 s'étendant chacune selon la dimension principale d'extension de la structure en treillis 1120.

Ces poutres 1123 sont de préférence mécaniquement reliées entre elles via une ou plusieurs poutrelles 1124.

De manière préférée ces poutres 1123 sont parallèles entre elles.

De préférence, les poutrelles 1124 sont disposées relativement aux trois poutres 1123 de sorte à former des triangles dont au moins certains sont parallèles entre eux, de préférence s'étendant dans des plans orthogonaux à la direction principale 1111.

Avantageusement, la structure en treillis 1120 comprend des tirants 1125. Ces tirants 1125 sont disposés de sorte à relier lesdits triangles entre eux, de préférence deux à deux. Ces tirants 1125 sont avantageusement contraints en tension de manière à accroître la résistance mécanique de la structure en treillis 1120.

De préférence, deux tirants 1125 se croisant sensiblement en leur milieu sont ligaturés l'un à l'autre.

Selon un mode de réalisation, un arceau de support 1130, 1150 est disposé au niveau de chacune des extrémités 1121 et 1122 de la structure en treillis 1120.

Selon un autre mode de réalisation, un arceau de support 1130, 1150 est disposé au niveau d'au moins une des extrémités 1121 et 1122 de la structure en treillis 1120.

Selon un mode de réalisation les poutres 1123 sont mécaniquement reliées aux arceaux de support 1130, 1150 via des jonctions pivots poutre/arceau de support 1370. Ces jonctions pivots apportent selon un mode de réalisation de la présente invention, des degrés supplémentaires de liberté de la structure en treillis 1120 relativement aux arceaux de support 1130, 1150, 1230.

De manière avantageuse les arceaux de support 1130, 1150, 1230 sont des cercles et/ou arcs de cercles et/ou des demi-cercles fermés par un diamètre 1132, 1152, 1232. Alternativement, les arceaux de supports 1130, 1150, 1230 sont des ellipses complètes et/ou des portions d'ellipses.

Selon un mode de réalisation, les centres des arceaux de support 1130, 1150, 1230 (arcs de cercle ou d'ellipse) d'un même module 1100, 1200 forment une droite parallèle à la direction d'extension principale du dispositif mobile de ce module. Cette droite est également parallèle à l'axe de rotation autour duquel le dispositif mobile de ce module tourne pour suivre le soleil.

Selon un mode de réalisation, la première poutre 1123a est disposée au niveau du milieu des arcs 1131 et 1151 des demi-cercles formant les deux arceaux de support 1131 et 1151, et les deuxième 1123b et troisième 1123c poutres sont disposées au niveau des deux extrémités des diamètres 1132 et 1152 fermant les arcs 1131 et 1151.

Selon un mode de réalisation, au moins une poutrelle 1124 est disposée relativement au premier arceau de support 1130 selon son diamètre 1132, de préférence cette poutrelle 1124 définit un diamètre du premier arceau de support 1130.

De même et comme cela sera décrit par la suite, selon un mode de réalisation, au moins une poutrelle additionnelle 1224 est disposée relativement à l'arceau de support additionnel 1230 selon son diamètre 1232, de préférence cette poutrelle additionnelle 1224 définit un diamètre de l'arceau de support additionnel 1230.

De manière préférée, et comme il sera décrit ci-après, les poutres 1123a, 1123b et 1123c peuvent être mobiles en translation relativement aux arceaux de support 1130 et 1150, c'est-à-dire que les poutres 1123a, 1123b et 1123c peuvent coulisser relativement aux arceaux de support 1130 et 1150 selon la direction principale d'extension de la structure en treillis 1120.

Les figures 4b et 4c sont respectivement une vue du dessus et une vue de profil de la structure en treillis 1120 selon la figure 4a. On y retrouve les mêmes éléments. On remarque sur cette figure de manière plus claire la présence à chaque extrémité de la structure en treillis 1120 de parties de dispositifs de couplage cinématique 1300 selon le deuxième mode de réalisation qui sera décrit ci-après.

La première extrémité comprend trois parties femelles 1331 de trois dispositifs de couplage cinématique 1300 et la deuxième extrémité comprend trois parties males 1341 de trois dispositifs de couplage cinématique 1300 selon le deuxième mode de réalisation de la présente invention. Selon ce deuxième mode de réalisation, seulement deux dispositifs de couplage cinématique 1300 peuvent suffire à la mise en œuvre de la présente invention.

Respectivement, chaque partie femelle 1331 et mâle 1341 est configurée pour coopérer avec respectivement chaque partie mâle 1341 et femelle 1331 du module suivant.

La figure 4d représente une vue selon la dimension d'extension principale d'une structure en treillis 1120 selon un mode de réalisation. On retrouve sur cette figure le positionnement des trois parties femelles 1331 des trois dispositifs de couplage cinématique 1300 selon le deuxième mode de réalisation de la présente invention.

Comme précédemment indiqué et selon un mode de réalisation préféré, le premier arceau de support 1130 et l'arceau de support additionnel 1230 s'étendent respectivement de part et d'autre de la direction principale 1111 et de la direction additionnelle 1211.

### ❖ Dispositif d'entraînement cinématique en rotation

Comme précédemment indiqué et selon un mode de réalisation, le module entraîneur 1100 comprend un dispositif d'entraînement cinématique en rotation 1141. Ce dispositif d'entraînement cinématique en rotation 1141 est configuré pour permettre entre autres un suivi par le module entraîneur 1100 de la course du soleil dans le ciel.

Selon un mode de réalisation, ce dispositif d'entraînement cinématique en rotation 1141 est configuré pour entraîner en rotation selon un axe de rotation principal 1141a le module entraîneur 1100. De manière préférée l'axe de rotation principal 1141a correspond à un axe virtuel s'étendant depuis la première extrémité 1121 vers la deuxième extrémité 1122 de la structure en treillis 1120, et de préférence passant sensiblement au centre du diamètre 1132 et 1152 du premier 1130 et du deuxième 1150 arceau de support.

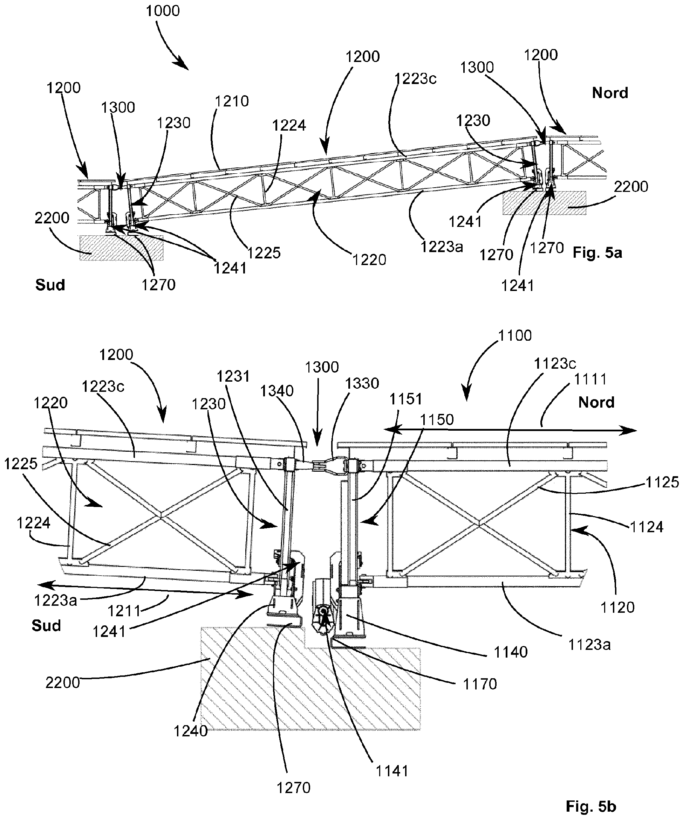

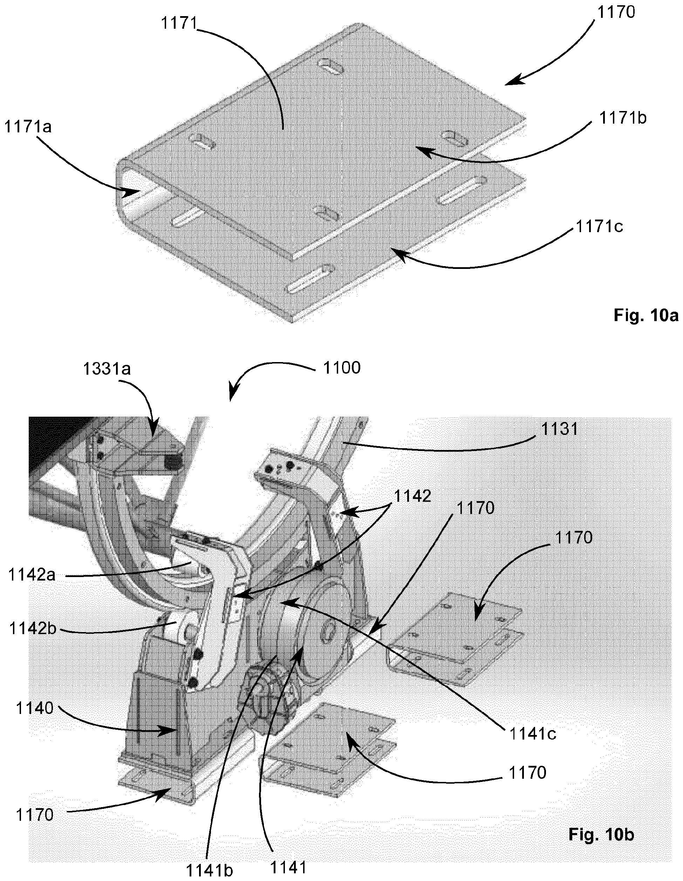

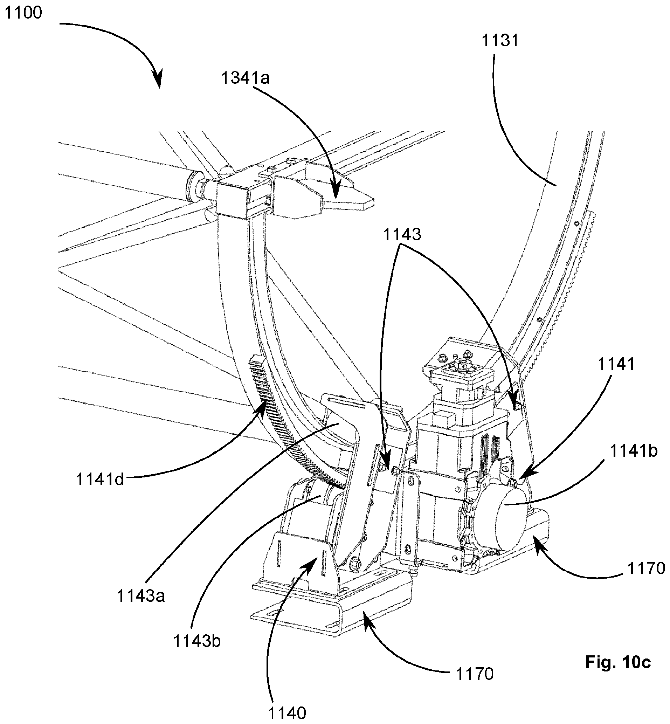

Selon un mode de réalisation illustré au travers des figures 5b, 10b et 10c par exemple, le dispositif d'entraînement cinématique en rotation 1141 est disposé au niveau d'un appui au sol 1140, 1160, et de préférence au niveau du premier appui au sol 1140 du module entraîneur 1100.

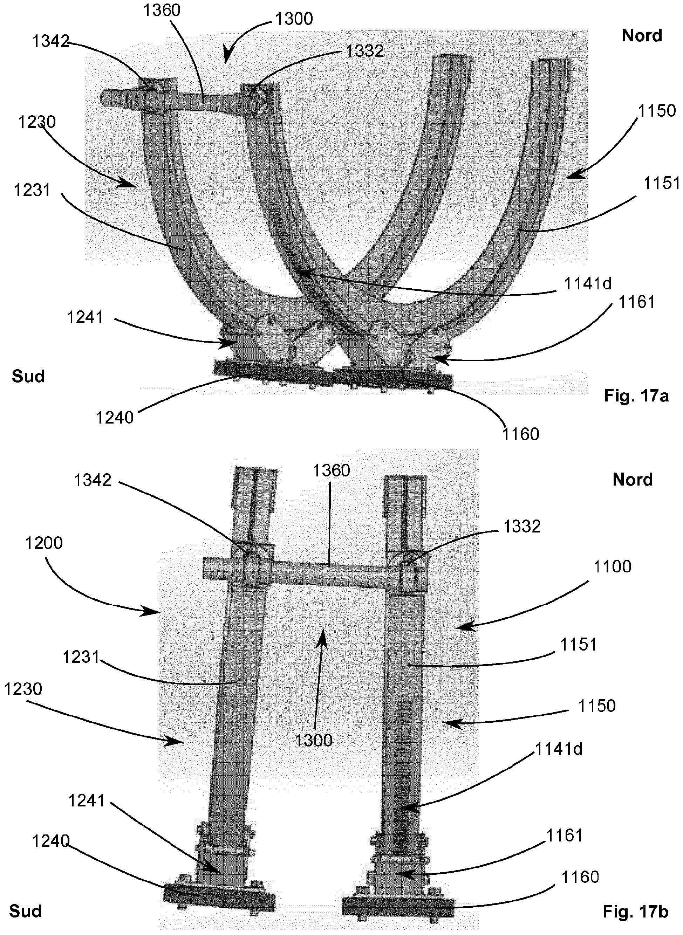

Selon un mode de réalisation le dispositif d'entraînement cinématique en rotation 1141 comprend au moins un pignon 1141c disposé sous un arceau de support 1130 du module entraîneur 1100, ledit arceau de support 1130 comprenant une crémaillère 1141d de préférence disposée au niveau de la face externe dudit arceau de support 1130 de sorte à coopérer avec ledit pignon 1141c. Ce mode de réalisation est par exemple illustré en figures 17a et 17b.

Selon un mode de réalisation au moins un, de préférence au moins deux et avantageusement au moins trois dents du pignon 1141c sont en contact mécanique avec la crémaillère 1141d de l'arceau de support 1130.

Selon un autre mode de réalisation, le dispositif d'entraînement cinématique en rotation 1141 comprend au moins un système mécanique permettant la mise en rotation du module entraîneur 1100, il peut s'agir d'un ou de plusieurs vérins ou d'une chaîne par exemple non limitatif.

Selon un mode de réalisation, un appui au sol 1140, 1160, 1240 peut comprendre un dispositif de freinage 1142. Ce dispositif de freinage1142 est configuré pour freiner l'arceau de support 1130 en contact mécanique avec le dispositif d'entraînement cinématique en rotation 1141 de préférence via l'utilisation de galets.

### ❖ Dispositif de guidage cinématique en rotation

Selon un mode de réalisation préféré, un appui au sol 1140, 1160, 1240 peut comprendre un dispositif de guidage cinématique en rotation 1161, 1241. Ce dispositif de guidage cinématique en rotation 1161, 1241 est configuré pour permettre de guider l'arceau de support 1130, 1150, 1230 en contact mécanique avec ce dispositif de guidage cinématique en rotation 1161, 1241 selon un mouvement de rotation afin de suivre la course du soleil dans le ciel.

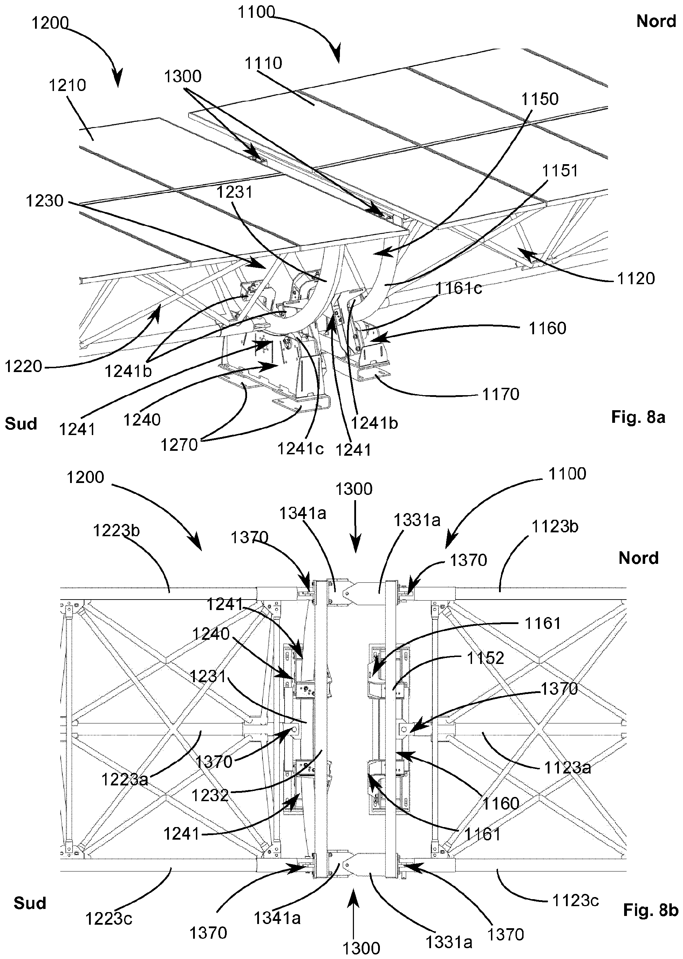

Selon un mode de réalisation illustré au travers des figures 8a, 10b, 10c, 12a et 12b par exemple, le dispositif de guidage cinématique en rotation 1161, 1241 comprend au moins un galet et de préférence au moins un galet supérieur de guidage 1161a, 1241b et au moins un galet inférieur de guidage 1161b, 1241c et de préférence au moins deux galets supérieurs de guidage et au moins deux galets inférieurs de guidage. Le ou les galets sont montés en rotation relativement à l'embase de l'appui au sol. De préférence le suiveur solaire 1000 est configuré de manière à ce que le dispositif mobile 1110, 1120, 1130, 1150 soit supporté, de préférence uniquement, par les galets. Ainsi de préférence, tout le poids du dispositif mobile est transféré aux galets, sans passer par une autre de structure de soutien comme c'est généralement le cas de l'art antérieur. Cela permet d'alléger et de simplifier considérablement l'ensemble du suiveur. Son cout de revient est par ailleurs réduit.

Les galets supérieurs de guidage 1161a, 1241b sont disposés au-dessus de l'arc 1131, 1151, 1231 de l'arceau de support 1130, 1150, 1230 tandis que les galets inférieurs 1161b, 1241c sont disposés au-dessous de l'arc 1131, 1151, 1231 de l'arceau de support 1130, 1150, 1230 de sorte à supporter, de préférence entièrement, son poids.

Selon un autre mode de réalisation, le dispositif de guidage cinématique en rotation 1161, 1241 ne comprend que deux galets inférieurs de guidage1161b, 1241c.

La présente invention permet le guidage en rotation d'un module via la forme particulière des arceaux de support 1130, 1150, 1230 et leur soutien par des appuis au sol 1140, 1150, 1240 comprenant des galets de guidages en rotation.

Ainsi les parois des arceaux de support 1130, 1150, 1230 forment des pistes de roulement pour les galets. Les axes de rotation des galets restent fixes par rapport aux appuis au sol.

A titre d'exemple non limitatif, la structure en treillis comprend au moins une, de préférence au moins deux poutres.

Avantageusement, la structure en treillis comprend au moins un arceau de support, de préférence au moins deux arceaux de support.

### > Premier mode de réalisation

Nous allons à présent décrire un premier mode de réalisation non limitatif de la présente invention. Les caractéristiques de ce premier mode de réalisation restent compatibles avec les caractéristiques décrites précédemment ainsi qu'avec celles des modes de réalisation qui seront décrits ensuite.

Les figures 5a et 5b présentent deux situations de mise en application de la présente invention, et plus particulièrement d'un dispositif de couplage cinématique 1300 selon ce premier mode de réalisation.

La figure 5a présente ainsi une vue de profil d'un suiveur solaire 1000 centré sur un module additionnel 1200 situé entre deux autres modules additionnels 1200. Ce module additionnel 1200, comme précédemment décrit, comprend une table additionnelle 1210 montée sur une structure en treillis additionnelle 1220 comprenant trois poutres additionnelles 1223a, 1223 et 1223c et deux arceaux de support additionnels 1230 disposés au niveau de chaque extrémité 1221 de la structure en treillis additionnelle 1220.

Chaque arceau de support additionnel 1230 repose sur un appui au sol additionnel 1240 disposé sur des suspensions au sol additionnelles 1270, elles-mêmes posées sur des blocs de support 2200.

De manière avantageuse, un même bloc de support 2200 peut être configuré pour accueillir deux appuis au sol 1140, 1160, 1240.

De préférence, des poutrelles additionnelles 1224 sont disposées relativement aux trois poutres additionnelles 1223 de sorte à former des triangles additionnels dont au moins certains sont parallèles entre eux, de préférence s'étendant dans des plans orthogonaux à la direction additionnelle 1211.

Avantageusement, la structure en treillis additionnelle 1220 comprend des tirants additionnels 1225. Ces tirants 1225 sont disposés de sorte à relier lesdits triangles additionnels entre eux, de préférence deux à deux. Ces tirants additionnels 1225 sont avantageusement contraints en tension de manière à accroître la résistance mécanique de la structure en treillis additionnelle 1220.

De préférence, deux tirants additionnels 1225 se croisant sensiblement en leur milieu sont ligaturés l'un à l'autre.

La figure 5b présente une vue de profil du dispositif de couplage cinématique 1300 selon ce premier mode de réalisation. Cette figure présente un module entraîneur 1100 et un module additionnel 1200.

Le module entraîneur 1100 comprend une table 1110 montée sur une structure en treillis 1120 comprenant un premier arceau de support 1130 reposant sur un premier appui au sol 1140 disposé sur une première suspension au sol 1170 et comprenant un dispositif d'entraînement cinématique en rotation 1141.

Ce dispositif d'entraînement cinématique en rotation 1141 est configuré pour permettre un suivi de la course du soleil au suiveur solaire 1000 en entraînant directement le module entraîneur 1100 selon un premier mouvement cinématique et en entraînant indirectement le module additionnel 1200 via le dispositif de couplage cinématique 1330 selon un deuxième mouvement cinématique.

Le module additionnel 1220 comprend une table additionnelle 1210 montée sur une structure en treillis additionnelle 1220 comprenant un arceau de support additionnel 1230 reposant sur un appui au sol additionnel 1240 disposé sur une suspension au sol additionnelle 1270 et comprenant un dispositif de guidage cinématique en rotation additionnel 1241.

Ce dispositif de guidage cinématique en rotation additionnel 1241 est configuré pour permettre un suivi de la course du soleil au module additionnel 1200 en le guidant selon un deuxième mouvement cinématique via le dispositif de couplage cinématique 1300.

Sur la figure 5b, un même bloc de support 2200 soutient le module entraîneur 1100 et le module additionnel 1200 au niveau respectivement du premier appui au sol 1140 et de l'appui au sol additionnel 1240. On notera que ce bloc de support 2200 permet de compenser une partie au moins du fort dénivelé existant entre ces deux modules.

Comme précédemment indiqué et selon un mode de réalisation préféré, le premier arceau de support et l'arceau de support additionnel sont respectivement disposés, de préférence entièrement, en dessous de la table 1110 et de la table additionnelle 1210. En dessous signifie qu'ils sont situés plus bas selon une projection sur un plan vertical. En revanche ils ne sont pas nécessairement situés entièrement au droit de la table.

De manière similaire et préférée, le premier appui au sol 1140 et l'appui au sol additionnel 1240 sont respectivement disposés, de préférence entièrement, en dessous de la table 1110 et de la table additionnelle 1210.

Avantageusement, le premier arceau de support 1130 et l'arceau de support additionnel 1230 s'étendent respectivement sensiblement depuis la structure en treillis 1120 et la structure en treillis additionnelle 1220 jusqu'au sol, de préférence sur au moins 70%, et avantageusement sur au moins 80% et avantageusement sur au moins 90%, de la hauteur séparant le sol et respectivement l'axe de rotation principal 1141a et l'axe de rotation additionnel 1241a. Comme illustré sur les figures, la hauteur séparant l'arceau du sol est déterminée par l'appui au sol et plus précisément par la dimension verticale entre le sol et la partie (typiquement les galets de supports) de l'appui au sol sur laquelle repose les arceaux.

### ❖ Jonction rotule mobile en translation

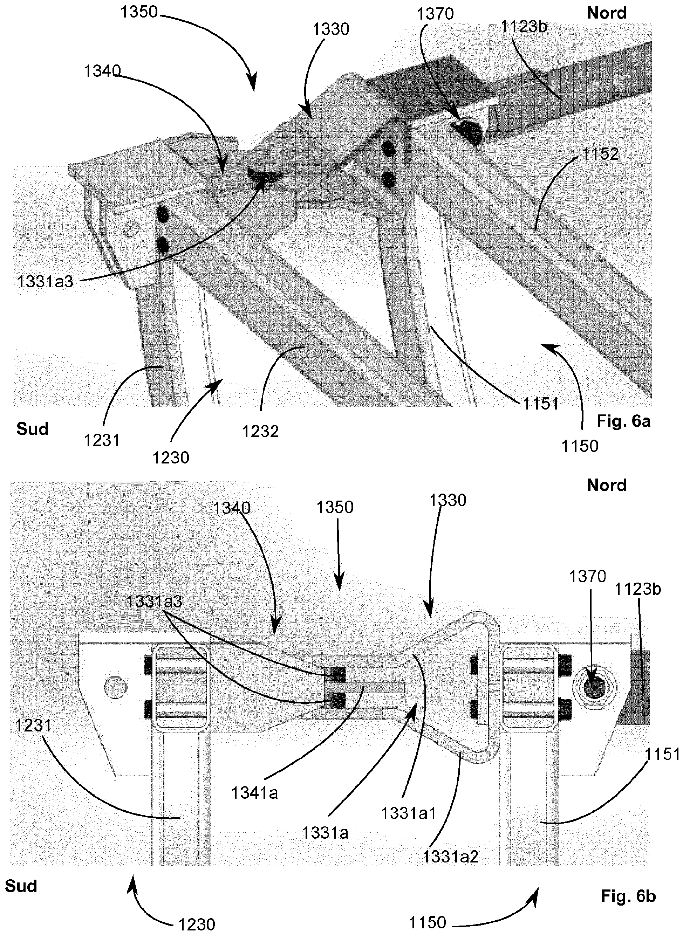

Les figures 6a et 6b présentent deux vues précises d'un dispositif de couplage cinématique 1300 selon ce premier mode de réalisation positionné entre le module entraîneur 1100 et le module additionnel 1200.

La figure 6a est une vue en perspective de ce dispositif de couplage cinématique 1300 selon ce premier mode de réalisation. Ce dispositif de couplage cinématique 1300 est formé selon ce premier mode de réalisation d'une jonction rotule mobile en translation 1350.

Selon ce premier mode de réalisation, ce dispositif de couplage cinématique 1300 comprend une première partie 1330 et une deuxième partie 1340.

Avantageusement chacune de ces parties est solidaire d'un arceau de support 1150 et 1230. Ainsi de manière avantageuse, la première partie 1330 est solidaire du deuxième arceau de support 1150 et la deuxième partie 1340 est solidaire de l'arceau de support additionnel 1230.

La figure 6b est une vue de profil de cette jonction rotule mobile en translation 1350. Sur cette figure la première partie 1330 comprend une mâchoire 1331a de préférence métallique comprenant avantageusement des patins 1331a3 configurés pour limiter la friction et l'échauffement entre les parties mâle et femelle. De préférence les patins 1331a3 sont métalliques, de préférence ils sont en bronze, avantageusement en tout type de matériaux présentant un faible coefficient de frottement comme le téflon par exemple non limitatif. Dans cette mâchoire 1331a est disposée une langue 1341a de préférence métallique formant en partie au moins la deuxième partie 1340 de la jonction rotule mobile en translation 1350.

De manière avantageuse, la mâchoire 1331a comprend tout type d'interface mécanique qui permette de limiter les frottements (type buté à bille par exemple...) de la langue 1341a. A titre d'exemple non limitatif, la mâchoire 1331a peut comprendre des matériaux de type ressort métallique, c'est-à-dire en acier traité ou encore en composite.

La jonction rotule mobile en translation 1350 est ainsi réalisée. En effet la langue 1341a reliée mécaniquement à l'arceau de support additionnel 1230 est configurée pour coopérer avec la mâchoire 1331a reliée mécaniquement au deuxième arceau de support 1150. Dans cette configuration, la jonction 1350 ainsi formée présente des degrés de liberté en rotation et en translation : la langue 1341a peut en effet se déplacer dans la mâchoire 1331a selon des mouvements de translation, mais également de rotation au même titre qu'une rotule. En effet, la jonction rotule mobile en translation 1350 permet l'existence d'un angle relatif entre la langue 1341a et la mâchoire 1331a.

De préférence, la langue 1341a peut comprendre de l'acier rigide.

De manière surprenante, cette jonction rotule mobile en translation 1350 réalisée au moins en partie par le couplage de la mâchoire 1331a et de la langue 1341a assure la transmission d'efforts importants entre les modules tout en présentant une grande robustesse. De plus cette jonction rotule mobile en translation 1350 permet une translation relative de la mâchoire 1331a et de la langue 1341a selon de nombreux axes de translation. En effet, la translation relative de la mâchoire 1331a et de la langue 1341a n'est pas limitée à un seul axe de translation.

De manière avantageuse, des patins 1331a3, de préférence en bronze ou en matériau composite visant à réduire les frottements, sont disposés entre la mâchoire 1331a et la langue 1341a afin de limiter les contraintes mécaniques de friction.

De manière préférée, les patins 1331a3 comprennent un matériau présentant une ductilité inférieure à celle du ou des matériaux composant la langue 1341a et/ou la mâchoire 1331a.

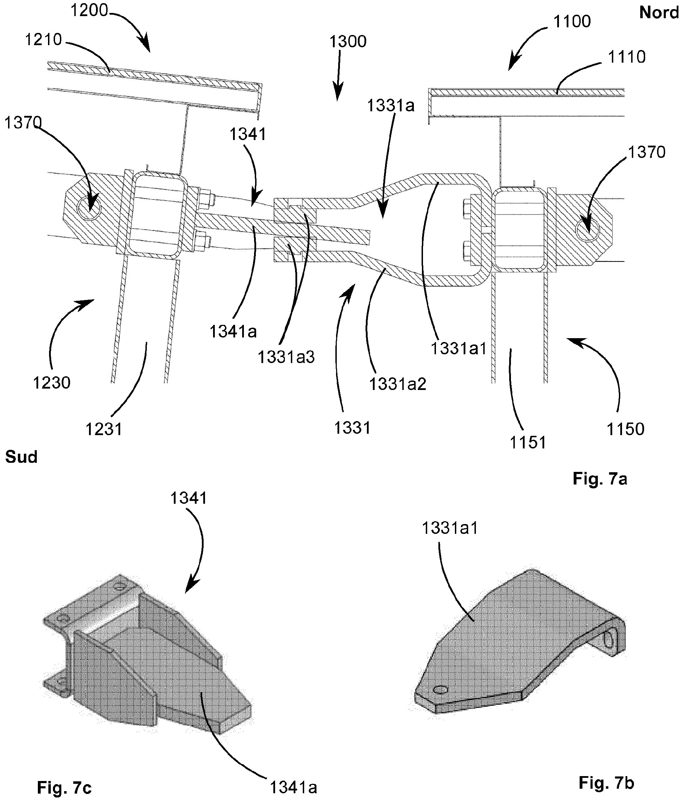

La figure 7a présente une vue en coupe de la jonction rotule mobile en translation 1350 selon ce premier mode de réalisation. Sur cette figure, il est à noter que la mâchoire 1331a, c'est-à-dire la première partie 1330 du dispositif de couplage cinématique 1300 comprend une partie supérieure 1331a1 et une partie inférieure 1331a2 qui réunies forment la mâchoire 1331a. De manière préférée ladite mâchoire 1331a1 peut être constituée en un matériau lui donnant de l'élasticité par exemple de type acier à ressort ou un assemblage en composite, tout en permettant de transmettre les efforts liés aux couples et aux contraintes subies par la structure.

Sur cette figure, on notera la présence d'une jonction pivot poutre/arceau de support 1370 permettant de donner un degré de liberté supplémentaire à chacun des modules.

La figure 7b présente une vue en perspective de la partie supérieure 1331a1 de la mâchoire 1331a. Cette partie supérieure 1331a1 de la mâchoire 1331a est une pièce mécanique de préférence d'un seul tenant. Avantageusement la partie inférieure 1331a2 de la mâchoire 1331a correspond à l'image miroir de la partie supérieure 1331a1 de la mâchoire 1331a. Cela permet lors de la production de la présente invention de ne produire qu'un seul type de pièce pouvant servir de partie supérieure 1331a1 ou de partie inférieure 1331a2.

La figure 7c est une vue en perspective de la langue 1341a configurée pour venir s'insérer dans la mâchoire 1331a afin de définir la jonction rotule mobile en translation 1350 selon ce premier mode de réalisation.

### ❖ Exemples non limitatifs de mise en œuvre

Les figures 8a et 8b présentent un module entraîneur 1100 et un module additionnel 1200 couplés cinématiquement via deux jonctions rotules mobiles en translation 1350 selon ce premier mode de réalisation disposées au niveau du deuxième arceaux de support 1150 du module entraîneur 1100 et d'un arceau de support additionnel 1230, et de préférence au niveau des extrémités des diamètres 1152 et 1132 de ces arceaux de support additionnels 1150 et 1230.

La figure 8a est une vue en perspective présentant le deuxième appui au sol 1160 du module entraîneur 1100 et l'appui au sol additionnel 1240 du module additionnel 1200. Chacun de ces appuis au sol 1160 et 1240 repose avantageusement sur au moins une, de préférence au moins deux suspensions au sol 1170 et 1270.

La figure 8b présente une vue du dessus de la figure 8a sans la présence des tables 1110 et 1210. Les jonctions rotules mobiles en translation 1350 sont représentées dans l'alignement des poutres 1123 et des poutres additionnelles 1223. Avantageusement, chaque poutre 1123 et 1223 est mécaniquement connectée à au moins un arceau de support 1150 et 1230 via une jonction pivot poutre/arceau de support 1370.

Selon un mode de réalisation, la première poutre 1123a du module entraîneur 1100 est mécaniquement connectée à l'arc 1151 du deuxième arceau de support 1150 et comprend une jonction pivot poutre/arceau de support 1370 dont l'axe de rotation est de préférence perpendiculaire au plan défini par les tables 1110 et 1210, dite jonction pivot poutre/arceau de support horizontale 1371.

Selon un mode de réalisation, la première poutre additionnelle 1223a du module additionnel 1200 est mécaniquement connectée à l'arc 1231 de l'arceau de support additionnel 1230 et comprend une jonction pivot poutre/arceau de support 1370 dont l'axe de rotation est de préférence perpendiculaire au plan défini par les tables 1110 et 1210, dite jonction pivot poutre/arceau de support horizontal 1371.

Selon un mode de réalisation, les deuxième 1123b et troisième 1123c poutres sont mécaniquement connectées au diamètre 1152 du deuxième arceau de support 1150 et comprennent une jonction pivot poutre/arceau de support 1370 dont l'axe de rotation est de préférence contenu dans un plan parallèle au plan défini par les tables 1110 et 1210, dite jonction pivot poutre/arceau de support verticale 1372.

Selon un mode de réalisation, les deuxième 1223b et troisième 1223c poutres additionnelles sont mécaniquement connectées au diamètre additionnel 1232 de l'arceau de support 1230 et comprennent une jonction pivot poutre/arceau de support 1371 dont l'axe de rotation est de préférence contenu dans un plan parallèle au plan défini par les tables 1110 et 1210, dite jonction pivot poutre/arceau de support verticale 1372.

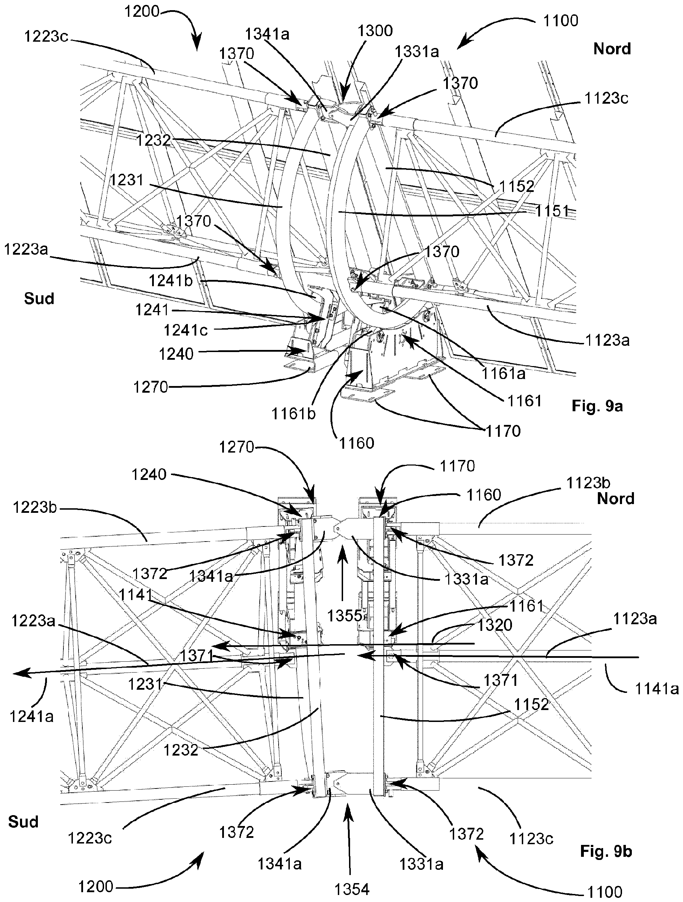

Les figures 9a à 9f présentent des vues différentes d'un module entraîneur 1100 et d'un module additionnel 1200 cinématiquement couplés par deux jonctions rotules mobiles en translation 1350 et étant inclinées d'un angle d'environ 60 degrés autour de l'axe Nord/Sud et présentant l'un avec l'autre un dénivelé non nul.

La figure 9a est une vue en perspective de ces deux modules 1100 et 1200 présentant d'une part les jonctions rotules mobiles en translation 1350 et d'autre part les jonctions pivots poutre/arceau de support 1370.

Respectivement, ces jonctions 1350, 1370 sont toutes solidaires respectivement d'au moins un arceau de support 1150 et 1230 reposant sur respectivement un appui au sol 1160 et 1240 posé sur respectivement deux suspensions de sol additionnelles 1170 et 1270.

On notera que respectivement les dispositifs de guidage cinématique en rotation 1161 et 1241 comprennent respectivement des galets supérieurs 1161a et 1241b et respectivement des galets inférieurs 1161b et 1241c.

Sur cette figure, les deux modules 1100 et 1200 présentent un dénivelé non nul l'un par rapport à l'autre. Cette différence de dénivelé, comme présenté plus clairement en figure 9b, n'est pas une limitation pour la présente invention au couplage cinématique entre les deux modules 1100 et 1200.

Comme précédemment indiqué et selon un mode de réalisation préféré, le premier arceau de support 1130 présente deux extrémités solidaires de la structure en treillis 1120, de préférence au moins selon le premier mouvement cinématique, de sorte à ce que le premier arceau de support 1130 s'étende depuis la deuxième poutre 1123b jusqu'à la troisième poutre 1123c en passant au niveau de la première poutre 1123a, et l'arceau de support additionnel 1230 présente deux extrémités solidaires de la structure en treillis additionnelle 1120, de préférence au moins selon le deuxième mouvement cinématique, de sorte à ce que l'arceau de support additionnel 1230 s'étende depuis la deuxième poutre additionnelle 1223b jusqu'à la troisième poutre additionnelle 1223c en passant au niveau de la première poutre additionnelle 1223a.

La figure 9b est vue du dessus de la figure 9a et permet d'illustrer la capacité de translation relativement aux deux modules 1100 et 1200 des jonctions rotules mobiles en translation 1350 selon ce premier mode de réalisation.

Selon un mode de réalisation, les jonctions rotules mobiles en translation 1350 sont animées d'une rotation autour d'un axe de rotation secondaire 1320 dès lors que le module entraîneur 1100 est entrainé selon une rotation autour de l'axe de rotation principal 1141a, cela permettant le guidage en rotation via le couplage cinématique du module additionnel 1200 autour de l'axe de rotation secondaire 1241a.

Selon un mode de réalisation, l'axe de rotation secondaire 1320 peut être colinéaire à l'axe de rotation principal 1141a et/ou à l'axe de rotation additionnel 1241a.

En effet sur cette figure, la jonction rotule mobile en translation du haut 1355 de la figure 9b présente une partie male 1341 et une partie femelle 1331 éloignée l'une de l'autre tout en demeurant en contact direct.

Selon un mode de réalisation préféré, la langue 1341a est ainsi toujours en contact avec la mâchoire 1331a et plus particulièrement avec les patins 1331a3 de la mâchoire 1331a.

La jonction rotule mobile en translation du bas 1354 de la figure 9b présente une partie femelle 1331 et une partie male 1341 rapprochée l'une de l'autre.

Ces deux jonctions rotules mobiles en translation 1354 et 1355 illustrent parfaitement la capacité de translation des dispositifs de couplage cinématique 1300 selon ce premier mode de réalisation. La présente invention, selon ce premier mode de réalisation, permet ainsi de coupler cinématiquement un module entraîneur 1100 et un module additionnel 1200 entre eux via de préférence deux jonctions rotules mobiles en translation 1350.

De manière préférée, trois jonctions pivots poutre/arceau de support 1370 sont configurées pour coopérer avec les deux jonctions rotules en translation 1350 afin de permettre un meilleur couplage cinématique entre les deux modules 1100 et 1200.

De manière optionnelle, deux suspensions au sol 1170, 1270 supportent un appui au sol 1160, 1240 assurant de par leur configuration mécanique une amélioration du couplage cinématique entre les deux modules 1100 et 1200.

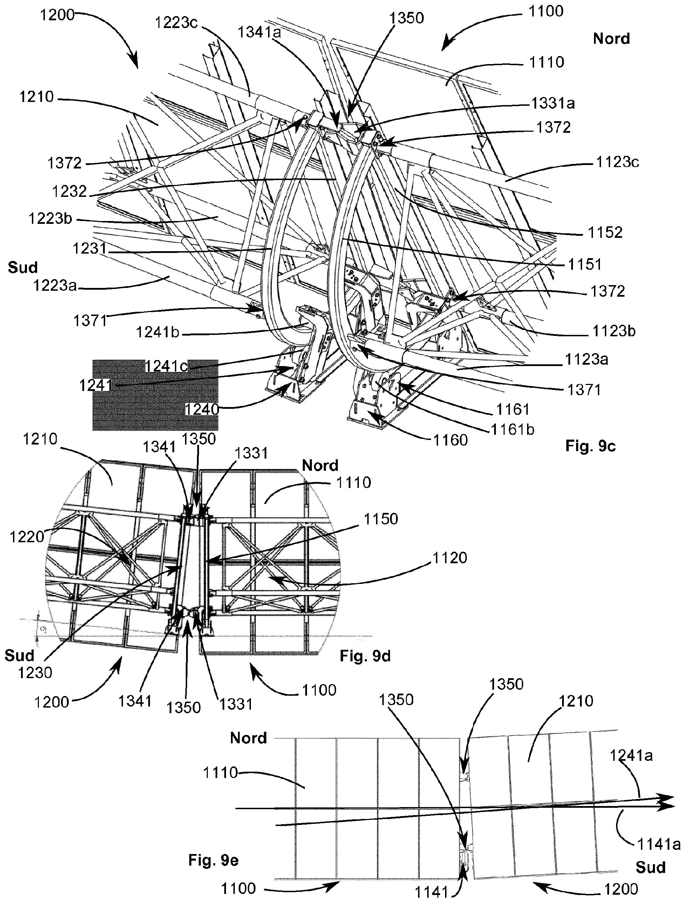

Les figures 9c, 9d et 9e sont trois vues différentes d'un module entraîneur 1100 et d'un module additionnel 1200 présentant un désaxage entre eux selon leurs axes de rotation 1141a et 1241a, ces deux modules 1100 et 1200 sont couplés cinématiquement par deux dispositifs de couplage cinématique 1300 selon ce premier mode de réalisation et inclinés selon un angle proche des 60 degrés. Ces trois vues présentent la même mise en situation selon trois points de vue différents.

La figure 9c est une vue en perspective sur laquelle les galets inférieurs 1241c et supérieurs 1241b du dispositif de guidage cinématique en rotation additionnel 1241 sont représentés. Sur cette figure le mouvement translatif des deux tables 1110 et 1210 l'une relativement à l'autre via les deux jonctions rotules mobiles en translation 1350 est également représenté.

Les figures 9d et 9e sont des vues de profil de la mise en situation présentée en figure 9c. On y remarque le dénivelé présent entre le module entraîneur 1100 et le module additionnel 1200, et la translation opposée des deux jonctions rotules mobiles en translation 1350 permettant la continuité du mouvement cinématique depuis le module entraîneur 1100 vers le module additionnel 12001200. Le couplage cinématique entre les deux modules est ainsi permis par deux jonctions rotules mobiles en translation 1350 selon ce premier mode de réalisation.

Le dispositif de couplage cinématique 1300 selon ce premier mode de réalisation est configuré pour permettre le couplage cinématique et la synchronicité des mouvements cinématiques entre deux modules couplés par au moins un dispositif de couplage cinématique 1300 selon ce premier mode de réalisation.

De manière avantageuse, la présente invention peut comprendre des jonctions pivots poutre/arceau de support 1370 configurées pour coopérer avec ce dispositif de couplage cinématique 1300 afin d'augmenter l'efficacité de ce premier mode de réalisation.

De manière optionnelle, mais préférée, la présente invention peut comprendre des suspensions au sol 1170, 1270 configurées pour coopérer avec ce dispositif de couplage cinématique 1300 afin d'augmenter l'efficacité de ce premier mode de réalisation.

### ❖ Suspension au sol

Nous allons à présent décrire, selon un mode de réalisation, une suspension au sol configurée pour coopérer avec la présente invention afin d'améliorer le couplage cinématique entre deux modules.

La figure 10a présente une vue en perspective d'une suspension au sol 1170 selon un mode de réalisation préféré. Cette suspension au sol 1170 comprend une pièce de préférence métallique en forme de U 1171. Cette forme avantageuse permet de disposer d'un effet ressort et donc de suspension dès lors qu'une branche 1171b ou 1171c du U est disposée au sol et que l'autre branche du U supporte un appui au sol 1140, 1160, 1240 d'un module 1100, 1200.

Selon un mode de réalisation, un appui au sol 1140, 1160, 1240 repose sur une seule suspension au sol 1170 en forme de U 1171.

Selon un mode de réalisation préféré, un appui au sol 1140, 1160, 1240 repose sur deux suspensions au sol 1170. Cela permet de disposer de deux degrés de liberté de suspension pour l'appui au sol et donc à la fois de disposer d'une meilleure adaptabilité à l'irrégularité du terrain 2000, mais également d'améliorer le couplage cinématique entre les deux modules.

Sur la figure 10b, en plus de présenter une utilisation de la suspension au sol 1170 en forme de U 1171, le dispositif d'entraînement cinématique en rotation 1141 est illustré. Ce dispositif 1141 déjà décrit précédemment permet l'entraînement en rotation selon l'axe de rotation principal 1141a du module entraîneur 1100.

De même sur cette figure, un dispositif de frein 1142 précédemment décrit est également représenté, en particulier les galets de freinage 1142a et 1142b.

Selon un autre mode de réalisation, une seule suspension au sol 1170 peut être commune à deux modules contigus.

Selon encore un autre mode de réalisation, une seule pièce peut intégrer deux suspensions 1170 au sol et être commune à deux modules contigus.

Selon un autre mode de réalisation, une pluralité de suspensions au sol 1170 peut être commune à deux modules contigus.

Sur la figure 10c, un dispositif d'entraînement cinématique en rotation 1141 est illustré. Ce dispositif 1141 déjà décrit précédemment permet l'entraînement en rotation selon l'axe de rotation principal 1141a du module entraîneur 1100. Selon le mode de réalisation illustré par cette figure 10c, le dispositif d'entraînement cinématique en rotation 1141 comprend une crémaillère 1141d configurée pour coopérer avec un pignon 1141c non illustré sur cette figure.

De manière avantageuse, un dispositif d'accompagnement cinématique en rotation 1143 est représenté sur cette figure. Ce dispositif 1143 est configuré pour accompagner l'arc 1131 du premier arceau de support 1130 selon son mouvement de rotation. Cet accompagnement est avantageusement réalisé via des galets d'accompagnement 1143a et 1143b. Ce dispositif d'accompagnement cinématique en rotation 1143 comprend au moins un galet supérieur d'accompagnement 1143a et au moins un galet inférieur d'accompagnement 1143b.

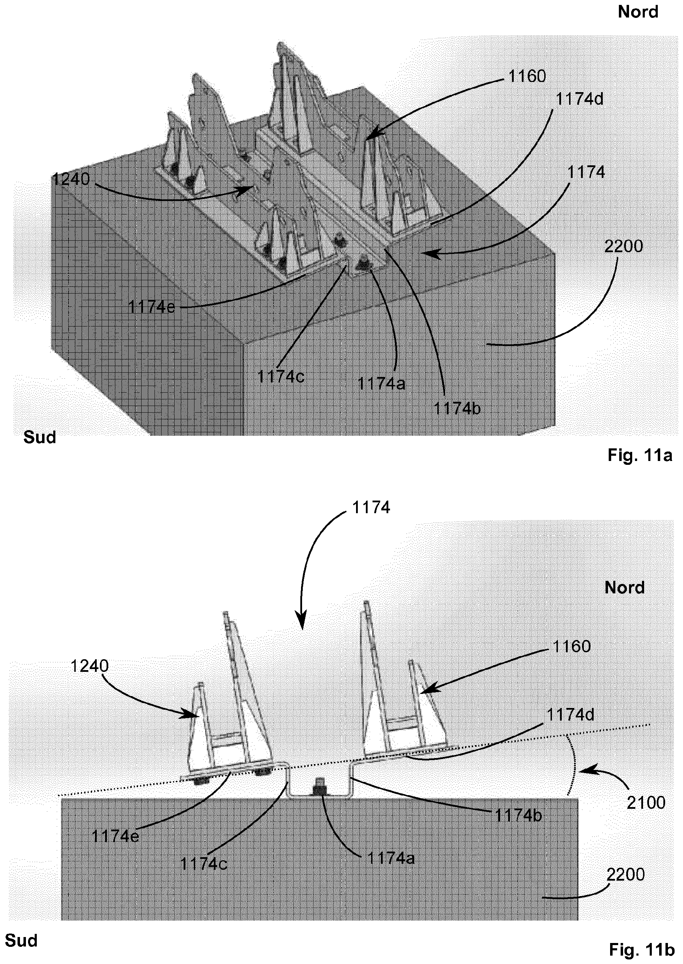

Les figures 11a et 11b sont des vues d'une suspension au sol 1174 selon cet autre mode de réalisation dans lequel celle-ci est commune à deux modules contigus.

Selon ce mode de réalisation, cette suspension au sol commune 1174 comprend une base 1174a, deux branches 1174b et 1174c sensiblement verticales et deux plateaux 1174d et 1174e sensiblement horizontaux.

La base 1174a de cette suspension au sol commune 1174 repose au niveau du sol, et de préférence sur un bloc de support 2200.

Les deux branches 1174b et 1174c sensiblement verticales supportent chacune un des deux plateaux 1174d et 1174e.

Chaque plateau 1174d et 1174e est configuré pour supporter un appui au sol 1160, 1240 selon la présente invention.

Cette suspension au sol commune 1174, de préférence métallique, présente au travers de sa forme un effet de suspension au niveau de chaque plateau 1174d et 1174e.

De plus, comme illustré en figure 11b, chaque plateau 1174d et 1174e peut être plus ou moins incliné lors du montage du suiveur solaire 1000 afin de compenser au moins en partie le dénivelé 2100 entre deux modules contigus.

Les suspensions au sol 1170, 1174 agissent en synergie avec les dispositifs de couplage et permettent une plus grande liberté de mouvement entre deux modules consécutifs tout en permettant un bon fonctionnement de la transmission de la rotation entre ces deux modules.

Bien qu'agissant en synergie avec les dispositifs de couplage et les suspensions au sol 1170, 1174 peuvent être exploités indépendamment l'un de l'autre. Une protection pour les suspensions au sol 1170, 1174 peut être revendiquée indépendamment d'une protection pour les dispositifs de couplage.

A titre d'exemple non limitatif, la langue comprend au moins un matériau pris parmi au moins les matériaux suivants : matériau élastique ou donnant une élasticité au système.

### > Deuxième mode de réalisation

Nous allons à présent décrire un deuxième mode de réalisation non limitatif de la présente invention. Les caractéristiques de ce deuxième mode de réalisation restent compatibles avec les caractéristiques décrites précédemment ainsi qu'avec celles du mode de réalisation qui sera décrit ensuite.

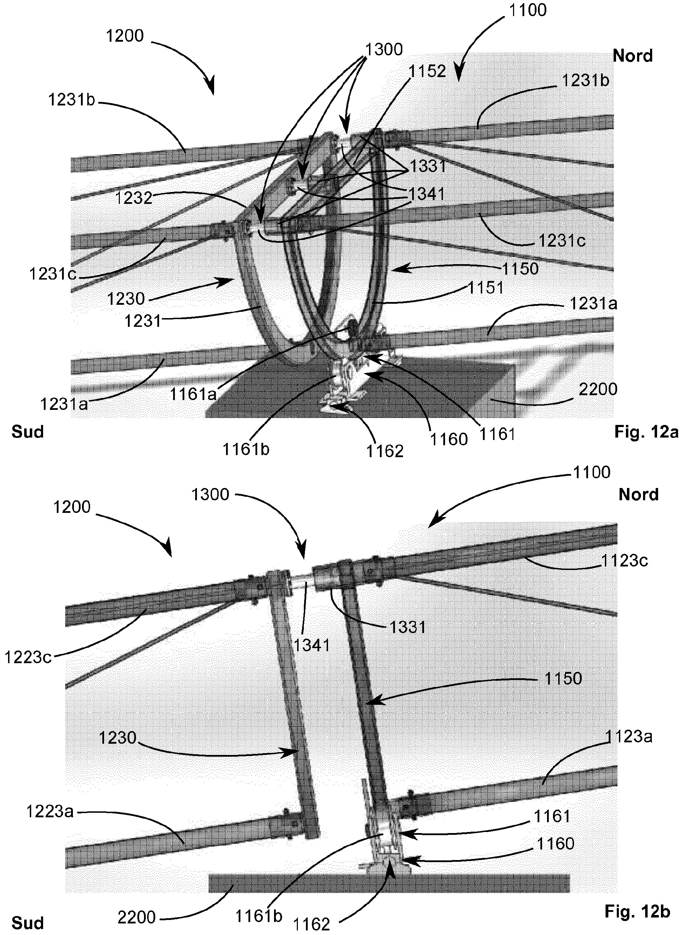

Les figures 12a et12b présentent deux vues de mise en application de la présente invention, et plus particulièrement d'un dispositif de couplage cinématique 1300 selon ce deuxième mode de réalisation.

La figure 12a présente ainsi une vue en perspective de trois dispositifs de couplage cinématique 1300 selon ce deuxième mode de réalisation disposés entre un module entraîneur 1100 et un module additionnel 1200.

Comme précédemment, le module entraîneur 1100 comprend une structure en treillis 1120 et un deuxième arceau de support 1150 disposé au niveau de la deuxième extrémité 1122 de la structure en treillis 1120. Le deuxième arceau de support 1150 comprend trois parties femelles 1331 configurées pour être mécaniquement couplées à trois parties mâles 1341 portées par l'arceau de support additionnel 1230 du module additionnel 1200.

On notera que selon un mode un mode de réalisation, l'arceau de support additionnel 1230 ne repose pas sur un appui au sol 1240. En effet, selon ce mode de réalisation, le module additionnel 1200 ne comprend qu'un seul appui au sol 1240 disposé au niveau de l'extrémité de la structure en treillis additionnelle 1220 opposée au deuxième appui au sol 1160 du module entraîneur 1100.

De manière avantageuse, le deuxième appui au sol 1160 repose sur un bloc de support 2200 similaire à ceux précédemment décrits.

Ce deuxième appui au sol 1160, comme illustré également en figure 12b repose sur un support pivot 1162 configuré pour permettre une rotation du deuxième appui au sol 1160 et donc du deuxième arceau de support 1150 selon un axe de rotation perpendiculaire à l'axe de rotation principal 1141a du module entraîneur 1100. Ce support pivot 1162 apporte à la présente invention un degré de liberté supplémentaire de sorte à compenser en partie au moins les irrégularités du terrain 2000.

Comme précédemment pour le premier mode de réalisation, les dispositifs de couplage cinématique 1300 selon ce deuxième mode de réalisation sont configurés pour permettre un suivi de la course du soleil par l'ensemble des modules additionnels 1200 du suiveur solaire 1000 en couplant cinématiquement le module entraîneur 1100 et les modules additionnels 1200.

### ❖ Jonction rotule mobile en translation

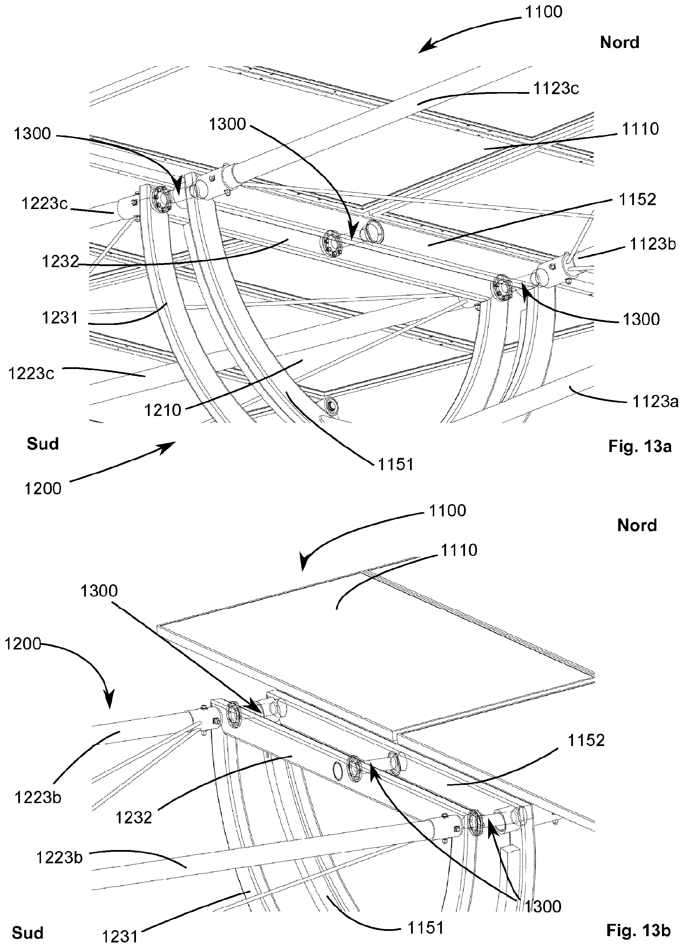

Les figures 13a et 13b présentent deux vues en perspective en transparence des trois dispositifs de couplage cinématique 1300 selon le deuxième mode de réalisation de la présente invention. Chaque dispositif de couplage cinématique 1300 selon ce mode de réalisation comprend une jonction rotule mobile en translation 1350. Cette jonction rotule mobile en translation 1350 comprend avantageusement une première partie 1330 et une deuxième partie 1340.

La première partie 1330 est de préférence configurée pour recevoir la deuxième partie 1340 selon un mode de réalisation préféré.

De manière préférée, la première partie 1330 est portée par le module entraîneur 1100. Cette première partie 1330 comprend de préférence une partie femelle 1331 configurée pour coopérer avec une partie mâle 1341 comprise par la deuxième partie 1340 portée par le module additionnel 1200.

Selon un mode de réalisation préféré, les trois jonctions rotules mobiles en translation 1350 selon ce deuxième mode de réalisation sont disposées au niveau du diamètre 1132, 1152 et 1232 des arceaux de support 1130, 1150 et 1230.

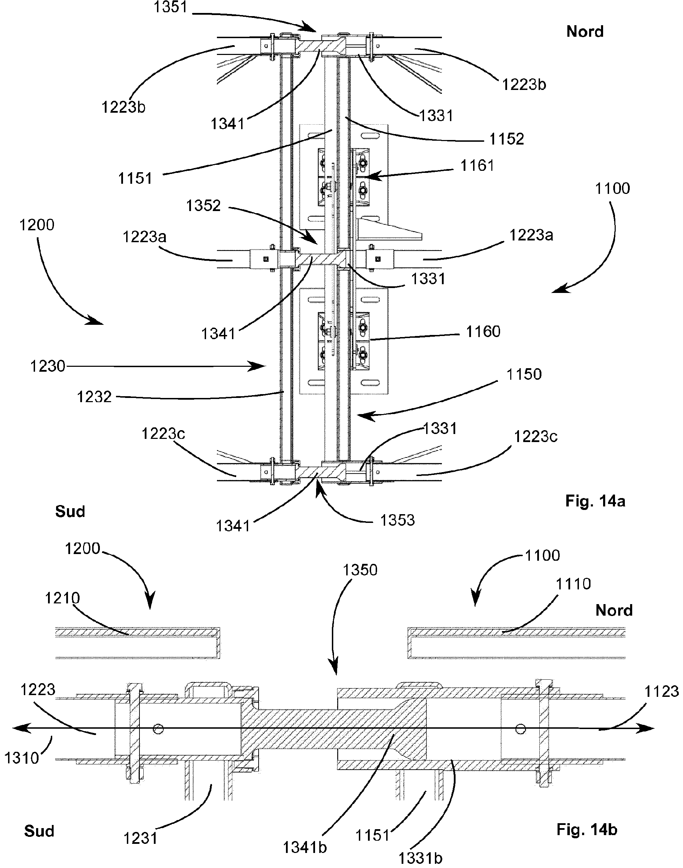

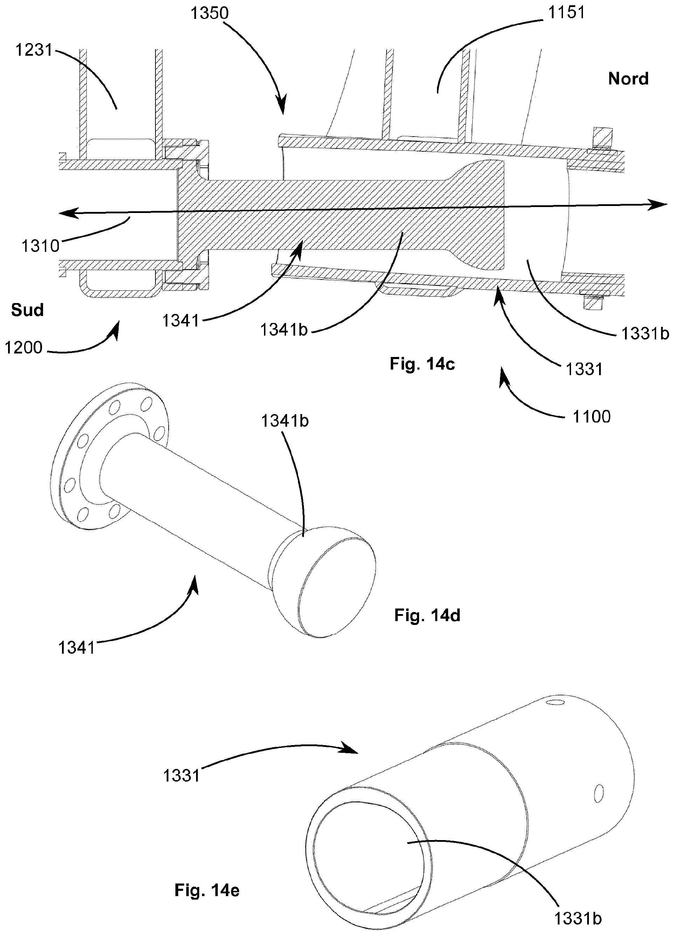

Les figures 14a, 14b et 14c correspondent à des vues en coupe de ces jonctions rotules mobiles en translation 1350.

La figure 14a est une vue du dessus de trois jonctions rotules mobiles en translation 1350 selon le deuxième mode de réalisation. Cette figure présente donc une première 1351, une deuxième 1352 et une troisième 1353 jonction rotule mobile en translation 1350.

La partie femelle 1331 est configurée pour accueillir au moins en partie la partie male 1341 de sorte à permettre la translation de la partie male 1341 dans la partie femelle 1331 selon un axe de translation secondaire 1310.

Selon un mode de réalisation, l'axe de translation secondaire 1310 est un axe coplanaire à l'axe de rotation principal 1141a et/ou à l'axe de rotation additionnel 1241a.

Avantageusement, la jonction rotule mobile en translation 1350 selon ce deuxième mode de réalisation comprend une partie mâle 1341 comprenant un cylindre monté d'une structure sphérique 1341b, et de préférence demi-sphérique, et une partie femelle 1331 comprenant un fourreau 1331b configuré pour permettre la translation selon l'axe de translation secondaire 1310 du cylindre monté d'une structure sphérique 1341b dans le fourreau 1331b et la fonction de rotule.

Selon un mode de réalisation, la deuxième jonction rotule mobile en translation 1352 présente une partie femelle 1331 dont la profondeur du fourreau 1331b est réduite relativement aux fourreaux 1331 de la première 1351 et de la deuxième 1353 jonction rotule mobile en translation.

La jonction rotule mobile en translation 1350 selon ce deuxième mode de réalisation est ainsi formée. En effet, la partie femelle 1331 reliée mécaniquement à la structure en treillis 1120 est configurée pour coopérer avec la partie male 1341 reliée mécaniquement à la structure en treillis additionnelles 1220. Dans cette configuration, la jonction 1350 ainsi formée présente des degrés de liberté en rotation et en translation : la partie sphérique de la partie mâle 1341 peut en effet se déplacer dans le fourreau 1331b de la partie femelle 1331 selon des mouvements de translation, mais également de rotation au même titre qu'une rotule.

De manière avantageuse, la partie sphérique de la partie mâle 1341 peut comprendre des matériaux différents des matériaux compris par la partie cylindrique de la partie mâle 1341 et/ou des matériaux compris par le fourreau 1331b de la partie femelle 1331 et/ou au moins du revêtement intérieur dudit fourreau 1331b, et cela afin de limiter les contraintes mécaniques de friction.

Les figures 14b et 14c sont des vues en coupe d'une jonction rotule mobile en translation 1350 selon ce deuxième mode de réalisation.

La figure 14b présente un alignement quasi-parfait entre l'axe d'extension de la partie male 1341 relativement à l'axe d'extension de la partie femelle 1331.

La figure 14c présente elle un désalignement entre l'axe d'extension de la partie male 1341 relativement à l'axe d'extension de la partie femelle 1331, c'est-à-dire entre le module entraîneur 1100 et le module additionnel 1200. Ce désalignement résulte dans une légère inclinaison de la partie male 1341 relativement à la partie femelle 1331. Cette figure permet d'illustrer sans ambiguïté la fonction de rotule de cette jonction rotule mobile en translation 1350.

La figure 14d présente une vue en perspective de la partie mâle 1341 de la deuxième partie 1340 de la jonction rotule mobile en translation 1350 selon ce deuxième mode de réalisation. Cette partie mâle 1341 comprend de préférence une extension spatiale sous la forme d'un cylindre 1341b comprenant à l'une de ses extrémités des moyens de fixation au module additionnel 1200, et de préférence à la structure en treillis additionnelle 1220, et à l'autre de ses extrémités une sphère tronquée au niveau de la partie distale de la partie mâle 1341.

La figure 14e est une vue en perspective de la partie femelle 1331 de la première partie 1330 de la jonction rotule mobile en translation 1350 selon ce deuxième mode de réalisation. Cette partie femelle 1331 présente de préférence une forme de fourreau 1331b dont une des extrémités présente un trou oblong par exemple et dont l'autre extrémité comprend des moyens de fixation au module entraîneur 1100, et de préférence à la structure en treillis 1120.

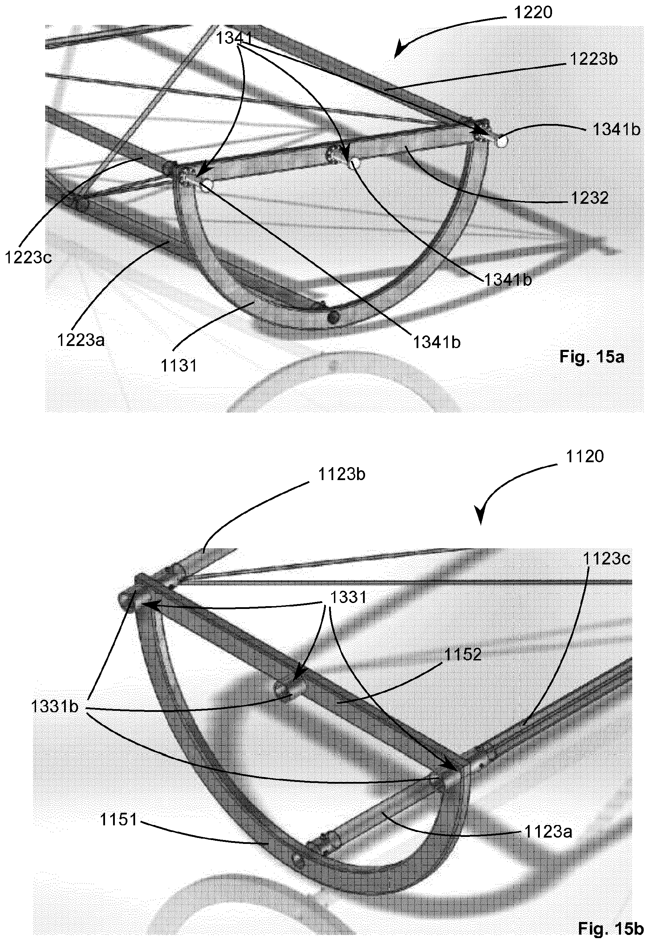

Les figures 15a et 15b présentent des vues en perspective respectivement de la structure en treillis additionnelle 1220 du module additionnel 1200 et de la structure en treillis 1120 du module entraîneur 1100.

Sur la figure 15a on notera la présence des parties mâles 1341 des trois jonctions rotules mobiles en translation 1350 selon ce deuxième mode de réalisation.

Comme précédemment indiqué, ces parties mâles 1341 sont disposées de préférence au niveau du diamètre additionnel 1232 de l'arceau de support additionnel 1230. De manière avantageuse et afin de permettre une répartition des couples et des efforts mécaniques, les parties mâles 1341 sont disposées de manières équidistantes de proche en proche.

Ainsi, une partie mâle 1341 est disposée au centre du diamètre additionnel 1232 et les deux autres parties mâles 1341 sont disposées à chaque extrémité dudit diamètre additionnel 1232.

Sur la figure 15b, on notera la présence des parties femelles 1331 des trois jonctions rotules mobiles en translation 1350 selon ce deuxième mode de réalisation.

Comme précédemment indiqué et à l'image des parties mâles 1341 de la figure 15a, ces parties femelles 1331 sont disposées de préférence au niveau du diamètre 1152 du deuxième arceau de support 1150 du module entraîneur 1100. De manière avantageuse et afin de permettre une répartition des couples et des efforts mécaniques, les parties femelles 1331 sont disposées de manières équidistantes de proche en proche de sorte à coïncider avec les parties mâles 1341. Ainsi, une partie femelle 1331 est disposée au centre du diamètre 1152 et les deux autres parties femelles 1331 sont disposées à chaque extrémité dudit diamètre 1152.

De manière optionnelle, mais préférée, la présente invention peut comprendre des suspensions au sol 1170, 1270 configurées pour coopérer avec ce dispositif de couplage cinématique 1300 afin d'augmenter l'efficacité de ce deuxième mode de réalisation.

### ❖ Exemples non limitatifs de mise en œuvre

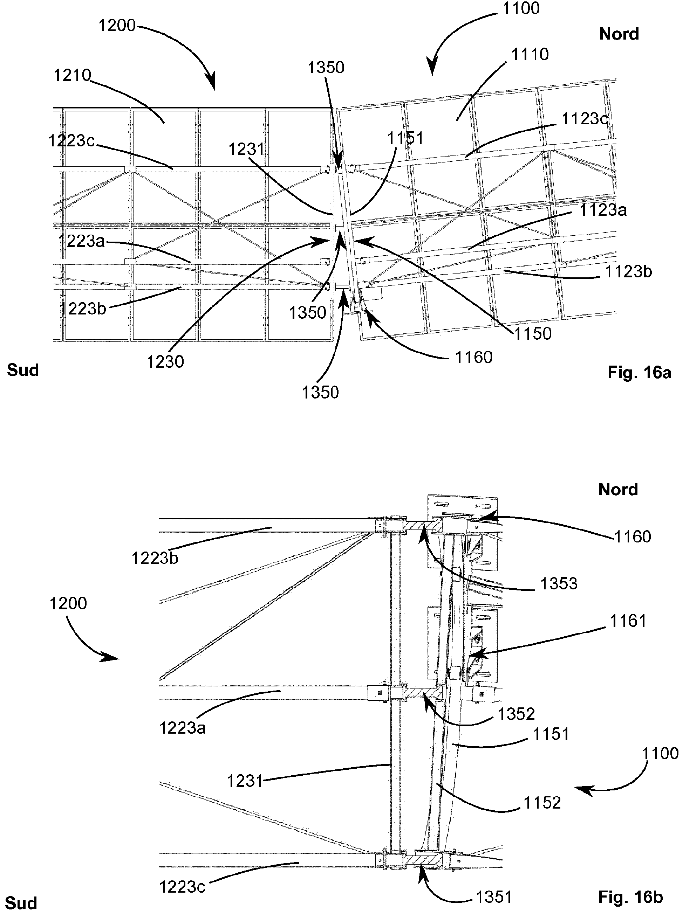

Les figures 16a et 16b représentent un module entraîneur 1100 et un module additionnel 1200 selon une mise en application de la présente invention selon son deuxième mode de réalisation.

On notera sur ces figures le désalignement entre le module entraîneur 1100 et le module additionnel 1200 clairement visible au travers de l'inclinaison des tables 1110 et 1210 d'un angle proche de 60 degrés vers l'Ouest.

Sur la figure 16a, c'est une vue de profil qui présente la translation relative du module entraîneur 1100 et du module additionnel 1200 via les trois jonctions rotules mobiles en translation 1350 selon ce deuxième mode réalisation.

Comme pour le premier mode de réalisation précédent, et comme il est illustré en figure 16b selon une vue de dessus en coupe, la troisième jonction rotule mobile en translation 1353 présente une extension spatiale maximale, c'est-à-dire que seule la partie sphérique du cylindre 1341b de la partie mâle 1341 de la jonction 1353 est insérée dans le fourreau 1331b de la partie femelle 1331 correspondante. La première jonction rotule mobile en translation 1351 présente une extension spatiale minimale, c'est-à-dire que la quasi-totalité de du cylindre 1341b de la partie male 1341 de la jonction 1351 est insérée dans le fourreau 1331b de la partie femelle 1331 correspondante.

De manière équivalente au premier mode de réalisation, ce mode de réalisation permet le couplage cinématique depuis un module entraîneur 1100 vers un module additionnel 1200 quand bien même des dénivelés de plusieurs degrés existent entre chaque module.

A titre d'exemple non limitatif, la partie mâle est réalisée de sorte à donner la résistance et l'élasticité requise à la pièce.

### > Troisième mode de réalisation

Nous allons à présent décrire un troisième mode de réalisation non limitatif de la présente invention. Les caractéristiques de ce troisième mode de réalisation restent compatibles avec les caractéristiques décrites précédemment.

Les figures 17a et 17b présentent deux vues de mise en application de la présente invention, et plus particulièrement d'un dispositif de couplage cinématique 1300 selon ce troisième mode de réalisation.

La figure 17a est une vue en perspective d'un arceau de support 1150 et d'un arceau de support additionnel 1230 reposant respectivement chacun sur un appui au sol 1160 et 1240 et étant couplés cinématiquement l'un à l'autre via un dispositif de couplage cinématique 1300 selon ce troisième mode de réalisation.

Avantageusement ce dispositif de couplage cinématique 1300 est disposé au niveau d'une des extrémités des diamètres des deux arceaux de support 1150 et 1230, cela permet de tirer bénéfice de la géométrie des modules et de limiter l'effort généré par le couple lors de la transmission des mouvements d'un module à un autre.

Cette disposition permet de plus de ne pas gêner la rotation des arceaux de support 1150 et 1230 lors de leur entraînement et/ou guidage au niveau de leurs appuis au sol 1160 et 1240 respectifs.

Selon ce mode de réalisation, ce dispositif de couplage cinématique 1300 comprend au moins un premier dispositif d'articulation pivot 1332, au moins un deuxième dispositif d'articulation pivot 1342 et au moins un axe de transfert cinématique 1360 configuré pour relié mécaniquement le premier 1332 et le deuxième dispositif d'articulation pivot 1342. De préférence, le premier dispositif d'articulation pivot 1332 et/ou le deuxième dispositif d'articulation pivot 1342 sont limités en débattement et comprennent une liaison glissière de préférence assurée par des tubes 1332a et 1342a dans lesquels glisse un axe de transfert cinématique 1361.

Avantageusement, le dispositif de couplage cinématique 1300 selon ce troisième mode de réalisation est configuré pour former une liaison de type joint cardan entre chaque module du suiveur solaire 1000.

La figure 17b est une vue de profil des éléments de la figure 17a. On notera plus clairement sur la figure 17b le dénivelé, et le désalignement des supports dans l'espace ou dans les plans horizontaux parallèles, existant entre l'arceau de support 1150 et l'arceau de support additionnel 1230. Ce dénivelé conduit ainsi à un désalignement entre l'axe de rotation principal 1141a du module entraîneur 1100 et l'axe de rotation additionnel 1241a du module additionnel 1200.

On remarquera sur ces deux figures la présence optionnelle d'une crémaillère 1141d au niveau de l'arceau de support 1150. Comme précédemment décrit, cette crémaillère 1141d peut être configurée pour coopérer avec un pignon 1141c dissimulé au niveau de l'appui au sol 1160 dans un dispositif d'entraînement cinématique 1141 configuré pour entraîner le module entraîneur 1100 et donc l'arceau de support 1150 selon un premier mouvement cinématique. Ce premier mouvement cinématique correspondant de préférence à une rotation du module entraîneur 1100 autour d'un axe de rotation principal 1141a afin de suivre de préférence la course du soleil.

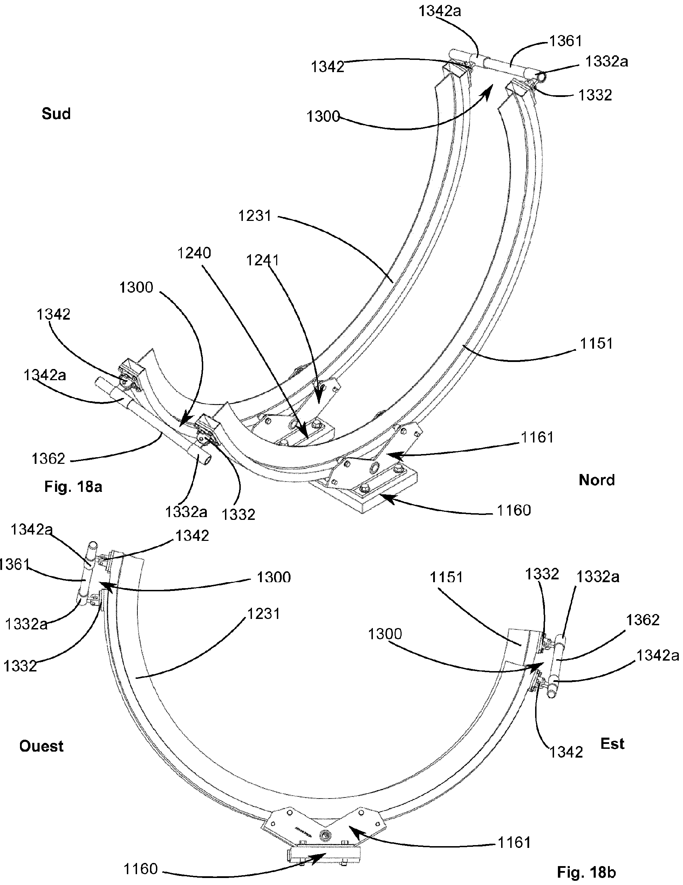

Les figures 18a à 18d présentent de multiples vues en perspective de mise en application de la présente invention et plus particulièrement de deux dispositifs de couplage cinématique 1300 selon ce troisième mode de réalisation.

Selon ce mode de réalisation, deux dispositifs de couplage cinématique 1300 selon le troisième mode de réalisation sont utilisés pour coupler cinématiquement le module entraîneur 1100 et le module additionnel 1200.

Ces quatre figures présentent selon quatre points de vue différents ces deux dispositifs de couplage cinématique 1300 comprenant chacun un premier 1332 et un deuxième 1342 dispositif d'articulation pivot et un axe de transfert cinématique 1361 et 1362.

De manière avantageuse et comme il sera décrit ci-après, l'axe de transfert cinématique 1361, 1362 est configuré pour être mobile en translation relativement aux premier 1332 et deuxième 1342 dispositifs d'articulation pivot.

Comme illustré dans ces figures, en présence d'un dénivelé les deux arceaux de support 1150 et 1230 restent cinématiquement couplés par ces deux dispositifs de couplage cinématique 1300.

Selon ce mode de réalisation, les deux dispositifs de couplage cinématique 1300 sont disposés chacun au niveau d'une extrémité du diamètre de chaque arceau de support 1150 et 1230.

Ainsi chaque arceau de support 1150 et 1230 comprend aux extrémités de son diamètre un dispositif d'articulation pivot 1332, 1342 configuré pour recevoir un axe de transfert cinématique 1361, 1362 le reliant mécaniquement à son dispositif d'articulation pivot jumeau disposé sur l'arceau de support opposé.

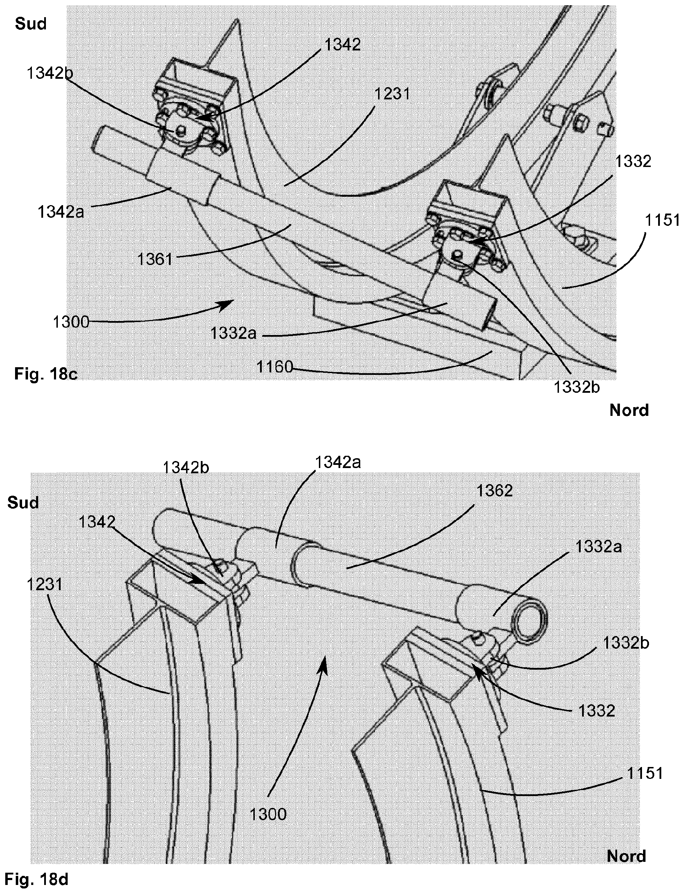

Sur les figures 18c et 18d, on notera la présence de deux tubes 1332a et 1342a, chacun mécaniquement relié à au moins un dispositif d'articulation pivot 1332 et 1342.

Ces tubes 1332a et 1342a sont respectivement configurés pour recevoir respectivement les axes de transfert cinématique 1361 et 1362, également appelés « bras de force », afin de les relier mécaniquement aux dispositifs d'articulation pivot respectivement 1332 et 1342 tout en leur permettant une translation respectivement au travers des tubes 1332a et 1342a.

Selon un mode de réalisation préféré, ladite translation des axes de transfert cinématique 1361 et 1362 au travers respectivement des tubes 1332a et 1342a permet lors de la phase de réglage du suiveur solaire d'établir le couplage cinématique entre les deux modules. Une fois cette phase de réglage achevée, le degré de liberté en translation d'un parmi les deux axes de transfert cinématique 1361 et 1362 est supprimé.

De manière plus générale et selon un mode de réalisation préféré, une fois la phase de réglage achevée, les degrés de liberté d'un des deux dispositifs de couplage 1300 illustrés en figures 18a et 18b sont supprimés. Ainsi seulement un des deux dispositifs de couplage 1300 selon ce mode de réalisation continue à disposer de l'ensemble de ses degrés de liberté. Ainsi le suiveur solaire est configuré de sorte à pouvoir supprimer au moins un et de préférence tous les degrés de liberté de certains et de préférence de l'un seulement des dispositifs de couplage cinématique.

De plus sur ces deux figures, le premier dispositif d'articulation pivot 1332 comprend au moins une articulation 1332b reliant mécaniquement le tube 1332a et l'arc 1151 du deuxième arceau de support 1150.

Et sur ces deux figures, le deuxième dispositif d'articulation pivot 1342 comprend au moins une articulation 1342b reliant mécaniquement le tube 1342a et l'arc additionnel 1231 de l'arceau de support additionnel 1230.

Comme précédemment pour le premier et le deuxième mode de réalisation, les dispositifs de couplage cinématique 1300 selon ce troisième mode de réalisation sont configurés pour permettre un suivi de la course du soleil par l'ensemble des modules additionnels 1200 du suiveur solaire 1000 en couplant cinématiquement le module entraîneur 1100 et les modules additionnels 1200.

### ❖ Dispositifs d'articulation pivot et axe de transfert cinématique

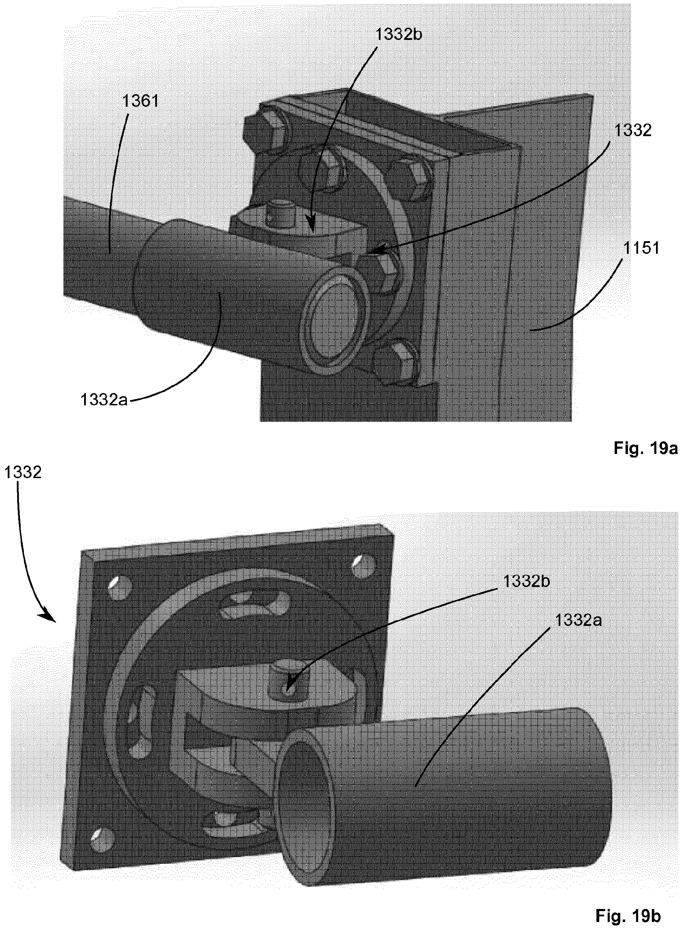

Les figures 19a et 19b représentent deux vues en perspective du premier dispositif d'articulation pivot 1332 comprenant un tube 1332a et une articulation 1332b et relié mécaniquement à l'arc 1151 du deuxième arceau de support 1150.

Sur la figure 19a, le premier axe de transfert cinématique 1361 est inséré dans le premier dispositif d'articulation pivot 1332. De manière avantageuse, le diamètre de l'axe de transfert cinématique 1361 est légèrement plus faible que le diamètre intérieur du tube 1332a de sorte à pouvoir coulisser à l'intérieur. Ce coulissement permet ainsi au dispositif de couplage cinématique 1300 de ce troisième mode de réalisation de présenter une mobilité en translation.

Sur la figure 19b, seul le premier dispositif d'articulation pivot 1332 avec le tube 1332a et l'articulation 1332b est représenté. Cette articulation 1332b permet une rotation selon deux axes perpendiculaires entre eux et selon le premier axe de transfert cinématique 1361.

### ❖ Exemples non limitatifs de mise en œuvre

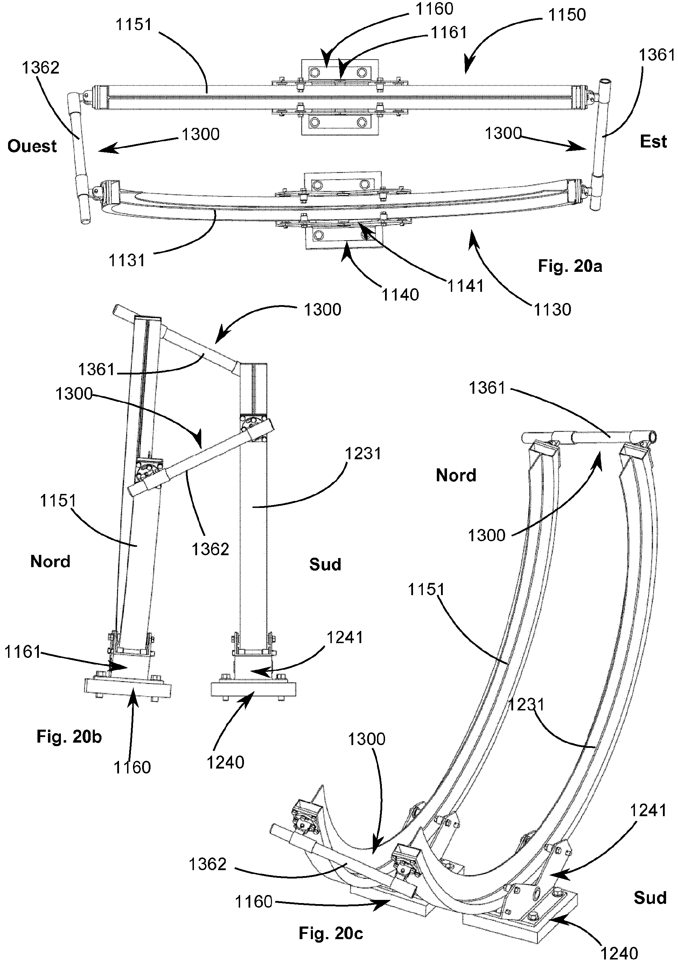

Les figures 20a, 20b et 20c représentent trois vues d'un exemple de mise en application de la présente invention selon le troisième mode de réalisation.

La figure 20a est une vue du dessus de la figure 20c qui elle est une vue en perspective, tandis que la figure 20b est une vue de profil de cette même vue.

Sur ces trois figures, un dénivelé est présent entre le module entraîneur 1100 et le module additionnel 1200. Ce dénivelé causant un désalignement des axes de rotation 1141a et 1241a de chacun des modules 1100 et 1200, les dispositifs de couplage cinématique 1300 selon ce troisième mode de réalisation sont utilisés afin de permettre au module additionnel 1200 de suivre la course du soleil dans le ciel de manière synchronisée et cinématiquement couplée à la rotation du module entraîneur 1100 selon son axe de rotation principal 1141a.

Ces trois figures permettent également de mettre en avant l'adaptabilité et les degrés de liberté dont disposent ces deux dispositifs de couplage cinématique 1300.

De manière optionnelle, mais préférée, la présente invention peut comprendre des suspensions au sol 1170, 1270 configurées pour coopérer avec ce dispositif de couplage cinématique 1300 afin d'augmenter l'efficacité de ce troisième mode de réalisation.

### ➢ Quatrième mode de réalisation

Nous allons à présent décrire un quatrième mode de réalisation non limitatif de la présente invention. Les caractéristiques de ce quatrième mode de réalisation restent compatibles avec les caractéristiques décrites précédemment. Ainsi toutes les caractéristiques, fonctions et avantages décrits en référence aux modes de réalisation précédents se combinent et s'appliquent au mode de réalisation ci-dessous.

Les figures 21a et 21b présentent deux situations de mise en application de la présente invention, et plus particulièrement d'un dispositif de couplage cinématique 1300 selon ce quatrième mode de réalisation.

La figure 21a est une vue isométrique de deux modules additionnels 1200 présentant un dénivelé non nul l'un relativement à l'autre. Les deux modules additionnels 1200 sont couplés cinématiquement l'un à l'autre par deux dispositifs de couplage cinématique 1300.

La figure 21b présente une vue de profil d'un suiveur solaire 1000 centré sur deux modules additionnels 1200. Chacun de ces modules additionnels 1200, comme précédemment décrit, comprend une table additionnelle 1210 montée sur une structure en treillis additionnelle 1220 comprenant trois poutres additionnelles 1223a, 1223b et 1223c et deux arceaux de support additionnels 1230.

Selon ce quatrième mode de réalisation, les deux arceaux de supports additionnels 1230 sont disposés entre le milieu et les deux extrémités de la structure en treillis additionnelle 1220 compris. Selon un mode de réalisation préféré, chaque arceau de support additionnel 1230 est disposé à une position comprise entre un tiers et un demi de la distance séparant une extrémité de la structure en treillis additionnelle 1220 de son milieu.

Ce positionnement des arceaux de support relativement à la structure en treillis et aux dispositifs de couplage cinématique permet de diminuer les efforts mécaniques subis par le suiveur solaire, rendant sa fabrication moins coûteuse et son montage plus facile.

Cela permet également de conserver la structure de chaque poutre en un seul tenant.

Comme précédemment, chaque arceau de support additionnel 1230 repose sur un appui au sol additionnel 1240 pouvant être ou non disposé sur des suspensions au sol additionnelles 1270 non illustrées, elles-mêmes posées ou non sur des blocs de support 2200 non illustrés.

Selon un mode de réalisation compatible avec les modes de réalisation précédents, chaque arceau de support peut reposer sur un système de réglage pour la prise d'angle de sorte à compenser le dénivelé et pour assurer un jeu fonctionnel et permettre aux parties femelles des dispositifs de couplage cinématique de rester bien alignées avec les parties mâles en vis-à-vis.

De manière particulièrement avantageuse, les dispositifs de couplage cinématique des modes de réalisation précédents sont compatibles avec le positionnement des arceaux de support relativement à la structure en treillis selon ce quatrième mode de réalisation.

La figure 22a est une vue en perspective d'une structure en treillis 1120 comprenant une première extrémité 1121 et une deuxième extrémité 1122. Comme indiqué précédemment, un arceau de support 1130, 1150 est disposé entre le milieu de la structure en treillis 1120 et chacune des extrémités 1121 et 1122 de la structure en treillis 1120.

Les arceaux de support 1130, 1150, 1230 présentent des formes similaires aux modes de réalisation précédents et peuvent être fermés par un diamètre. Selon ce quatrième mode de réalisation, ce diamètre est formé de préférence par une poutrelle 1124, 1224 de la structure en treillis 1120, 1220.

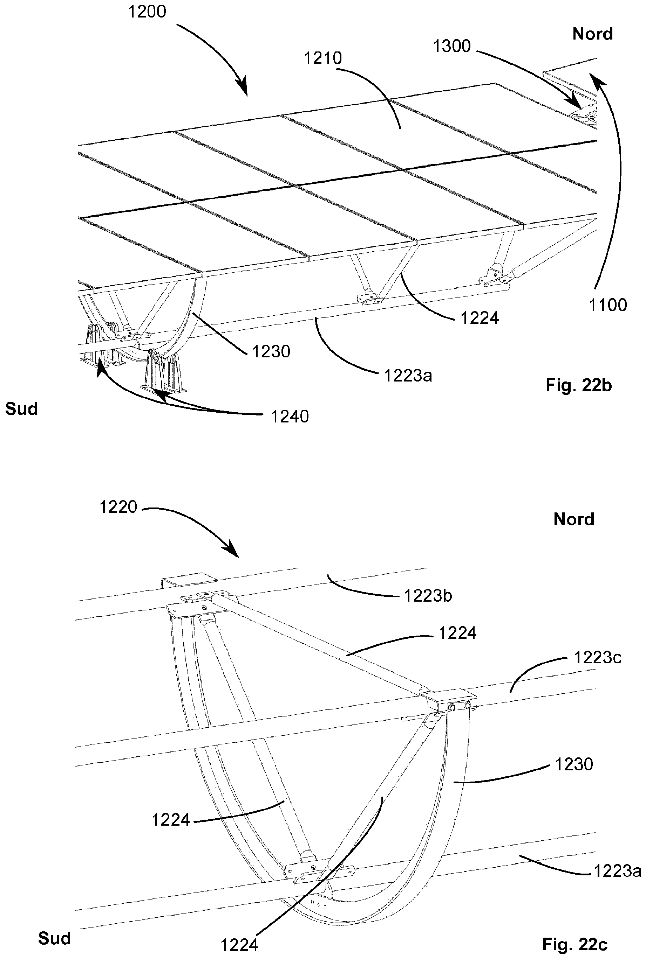

Sur la figure 22b, l'arceau de support additionnel 1230 repose sur un appui au sol additionnel 1240 similaire à ceux des modes de réalisation précédents.

Sur la figure 22c, l'arceau de support additionnel présente une forme de bande de roulement configurée pour coopérer avec un dispositif de guidage cinématique en rotation additionnel non illustré.

### ❖ Jonction rotule mobile en translation

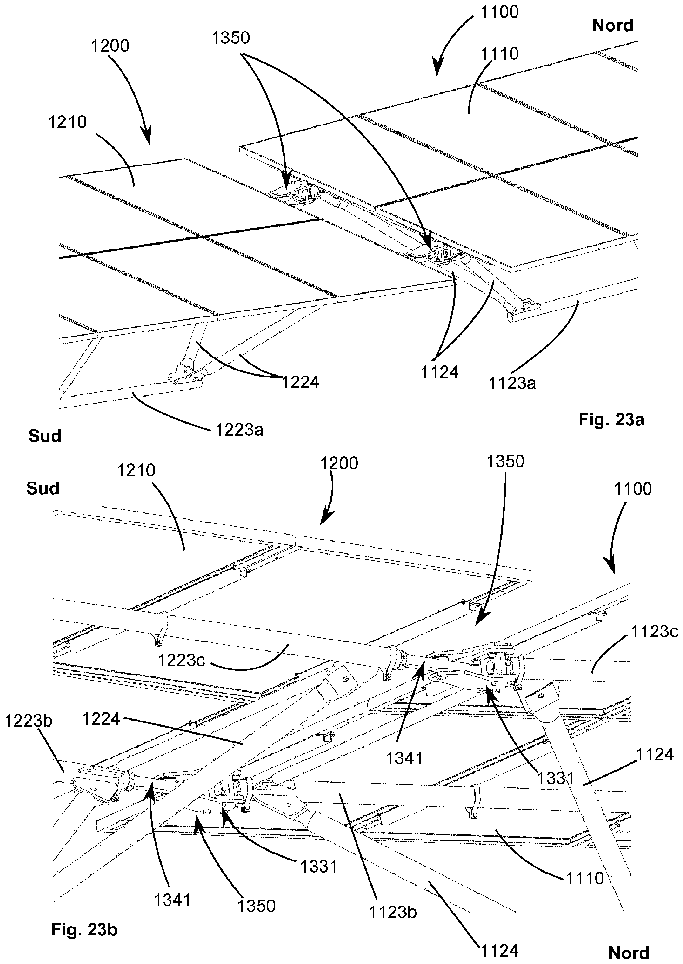

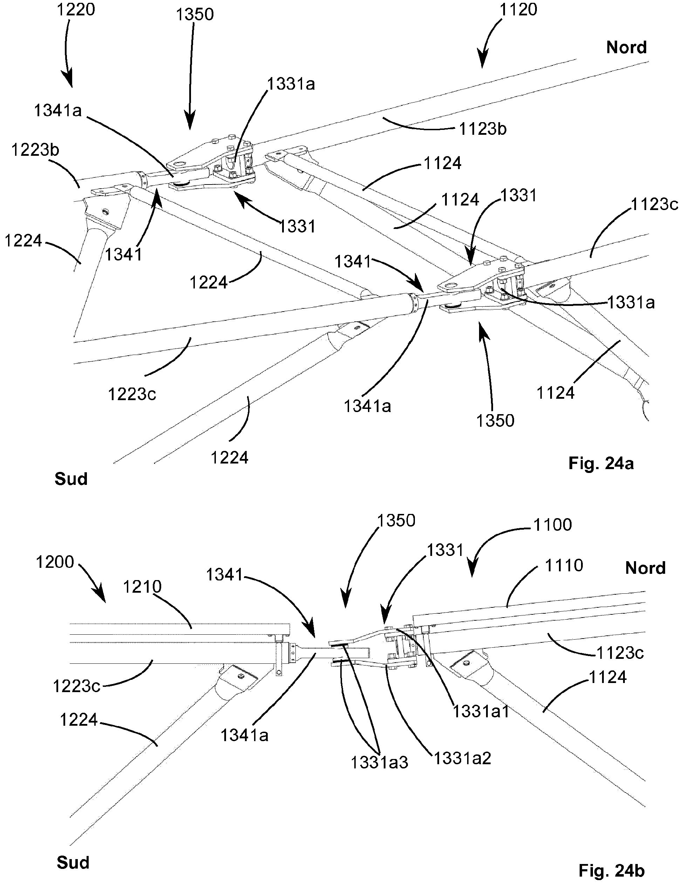

Les figures 23a, 23b, 24a et 24b présentent des vues d'un dispositif de couplage cinématique 1300 selon ce quatrième mode de réalisation positionné entre un module entraîneur 1100 et un module additionnel 1200.

Les figures 23a et 23b sont deux vues en perspective de ce dispositif de couplage cinématique 1300 selon ce quatrième mode de réalisation. De manière identique au premier mode de réalisation, ce dispositif de couplage cinématique 1300 est formé d'une jonction rotule mobile en translation 1350.

Selon ce quatrième mode de réalisation, ce dispositif de couplage cinématique 1300 comprend une première partie 1330 et une deuxième partie 1340.

Avantageusement chacune de ces parties est solidaire d'une poutre 1123 et 1223. Ainsi de manière avantageuse, la première partie 1330 est solidaire d'une poutre 1123 de la structure en treillis 1120 du module entraîneur 1100 et la deuxième partie 1340 est solidaire d'une poutre additionnelle 1223 de la structure en treillis additionnelle 1220 du module additionnel 1200.

Sur la figure 23b, on notera que le module entraîneur 1100 et le module additionnel 1200 sont couplés cinématiquement via deux dispositifs de couplage cinématique 1300 comprenant chacun une jonction mobile en translation 1350 formée en partie au moins d'une partie femelle 1331 et d'une partie mâle 1341.

Sur les figures 24a et 24b et de manière similaire au premier mode de réalisation, la première partie 1330 comprend une mâchoire 1331a de préférence métallique comprenant avantageusement des patins 1331a3 configurés pour limiter la friction et l'échauffement entre les parties mâle 1341 et femelle 1331. De préférence les patins 1331a3 sont métalliques, de préférence ils sont en bronze, avantageusement en tout type de matériaux présentant un faible coefficient de frottement comme le téflon par exemple. Dans cette mâchoire 1331a est disposée une langue 1341a de préférence métallique formant en partie au moins la deuxième partie 1340 de la jonction rotule mobile en translation 1350.

De manière avantageuse, la mâchoire 1331a comprend tout type d'interface mécanique qui permette de limiter les frottements (type buté à bille par exemple...) de la langue 1341a. A titre d'exemple non limitatif, la mâchoire 1331a peut comprendre des matériaux de type ressort métallique, c'est-à-dire en acier traité ou encore en composite.

La jonction rotule mobile en translation 1350 est ainsi réalisée. En effet la langue 1341a reliée mécaniquement à une poutre additionnelle 1223 de la structure en treillis additionnelle 1220 est configurée pour coopérer avec la mâchoire 1331a reliée mécaniquement une poutre 1123 de la structure en treillis 1120. Dans cette configuration et comme selon le premier mode de réalisation, la jonction 1350 ainsi formée présente des degrés de liberté en rotation et en translation : la langue 1341a peut en effet se déplacer dans la mâchoire 1331a selon des mouvements de translation, mais également de rotation au même titre qu'une rotule. En effet, la jonction rotule mobile en translation 1350 permet l'existence d'un angle relatif entre la langue 1341a et la mâchoire 1331a.

De préférence, la langue 1341a peut comprendre de l'acier rigide.

De manière surprenante, cette jonction rotule mobile en translation 1350 réalisée au moins en partie par le couplage de la mâchoire 1331a et de la langue 1341a assure la transmission d'efforts importants entre les modules tout en présentant une grande robustesse. De plus cette jonction rotule mobile en translation 1350 permet une translation relative de la mâchoire 1331a et de la langue 1341a selon de nombreux axes de translation. En effet, la translation relative de la mâchoire 1331a et de la langue 1341a n'est pas limitée à un seul axe de translation.

De manière avantageuse, des patins 1331a3, de préférence en bronze ou en matériau composite visant à réduire les frottements, sont disposés entre la mâchoire 1331a et la langue 1341a afin de limiter les contraintes mécaniques de friction.

De manière préférée, les patins 1331a3 comprennent un matériau présentant une ductilité inférieure à celle du ou des matériaux composant la langue 1341a et/ou la mâchoire 1331a.

La figure 24b présente une vue de profil de la jonction rotule mobile en translation 1350 selon ce quatrième mode de réalisation. Sur cette figure, il est à noter que la mâchoire 1331a, c'est-à-dire la première partie 1330 du dispositif de couplage cinématique 1300 comprend une partie supérieure 1331a1 et une partie inférieure 1331a2 qui réunies forment la mâchoire 1331a. De manière préférée ladite mâchoire 1331a1 peut être constituée en un matériau lui donnant de l'élasticité par exemple de type acier à ressort ou un assemblage en composite, tout en permettant de transmettre les efforts liés aux couples et aux contraintes subies par la structure.

A titre d'exemple non limitatif, la langue comprend au moins un matériau pris parmi au moins les matériaux suivants : matériau élastique ou donnant une élasticité au système.

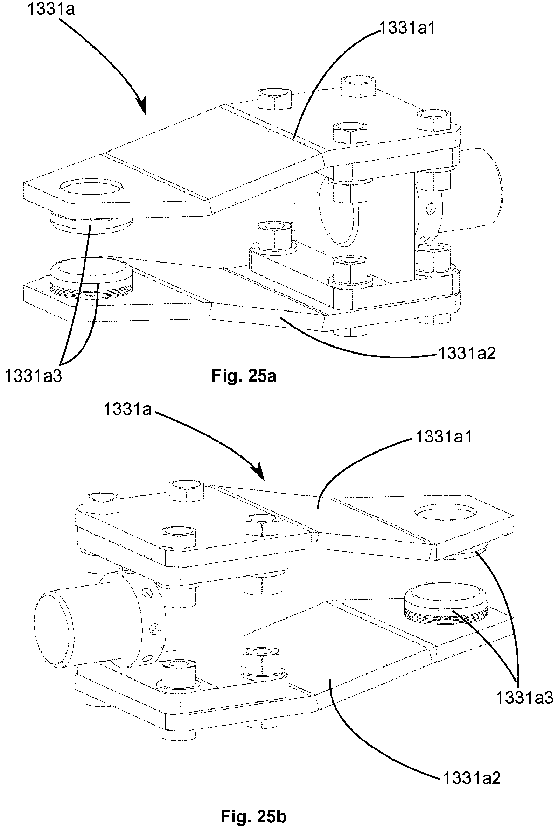

Les figures 25a et 25b présentent deux vues en perspective de la mâchoire 1331a selon ce quatrième mode de réalisation. Comme pour le premier mode de réalisation, la partie supérieure 1331a1 de la mâchoire 1331a est une pièce mécanique de préférence d'un seul tenant. Avantageusement la partie inférieure 1331a2 de la mâchoire 1331a correspond à l'image miroir de la partie supérieure 1331a1 de la mâchoire 1331a. Cela permet lors de la production de la présente invention de ne produire qu'un seul type de pièce pouvant servir de partie supérieure 1331a1 ou de partie inférieure 1331a2.

Ainsi, ce quatrième mode de réalisation diffère du premier mode de réalisation en ce que les arceaux de support sont disposés entre le milieu et les extrémités de chaque structure en treillis et de préférence à une distance depuis ledit milieu de préférence comprise entre un tiers et la moitié de la demi-longueur de la structure en treillis.

Selon ce quatrième mode de réalisation, chaque dispositif de couplage cinématique 1300 est porté par les structures en treillis 1120 et 1220. Les degrés de liberté en mouvement qu'apporte ce quatrième mode de réalisation au suiveur solaire 1000 sont identiques à ceux du premier mode de réalisation précédent.

### > Exemple de mode de réalisation d'une structure en treillis portée en porte-à-faux

Nous allons à présent décrire un mode de réalisation non limitatif de la présente invention dans lequel la structure en treillis est portée en porte-à-faux. Les caractéristiques de ce mode de réalisation restent compatibles avec les caractéristiques décrites précédemment. Ainsi toutes les caractéristiques, fonctions et avantages décrits en référence aux modes de réalisation précédents peuvent être combinées et être appliquées au mode de réalisation ci-dessous.

Les figures 21a et 21b montrent deux modules additionnels 1200 comprenant des tables 1210 montées chacune sur une structure en treillis 1220 portée en porte-à-faux relativement à des appuis au sol 1240.

Selon un mode de réalisation, chaque arceau de support additionnel 1230 est disposé à une distance L3 de la plus proche extrémité 1221 de la structure en treillis additionnelle 1220, avec L3 étant au moins égale à 1/10, de préférence 1/5 et avantageusement 1/3 de la distance séparant deux extrémités 1221 de la structure en treillis additionnelle 1220 selon la direction additionnelle.

La figure 22a est une vue en perspective d'une structure en treillis 1120 configurée pour être disposée en porte-à-faux sur un premier 1140 et un deuxième 1160 appuis au sol au moyen d'un premier 1130 et d'un deuxième 1150 arceaux de support disposés tous deux à distance des première 1121 et deuxième 1122 extrémités de la structure en treillis 1120. Ainsi, le premier 1130 et le deuxième 1150 arceau de support sont disposés entre le milieu de la structure en treillis 1120 et chacune des extrémités 1121 et 1122 de la structure en treillis 1120.

Selon un mode de réalisation, le premier arceau de support 1130 est disposé à une distance L1 de la première extrémité 1121 de la structure en treillis 1120 et le deuxième arceau de support est disposé à une distance L2 de la deuxième extrémité 1122 de la structure en treillis 1120, avec L1 et L2 étant au moins égale à 1/10, de préférence 1/5 et avantageusement 1/3 de la distance séparant la première 1121 et la deuxième 1122 de la structure en treillis 1120.

Les arceaux de support 1130, 1150, 1230 présentent des formes similaires aux modes de réalisation précédents et peuvent être fermés par un diamètre. Selon ce mode de réalisation, ce diamètre est formé de préférence par une poutrelle 1124, 1224 de la structure en treillis 1120, 1220.

Cette disposition en porte-à-faux permet entre autres à chaque module de supporter efficacement les contraintes mécaniques statiques et dynamiques.

L'invention n'est pas limitée aux modes de réalisation décrits, mais s'étend à tout mode de réalisation entrant dans la portée des revendications.

### REFERENCES

1000. Suiveur solaire
   1100. Module entraîneur
      1110. Table
         1111. Direction principale
         1112. Dispositif de collecte d'énergie solaire
            1112a. Panneau photovoltaïque
      1120. Structure en treillis
         1121. Première extrémité
         1122. Deuxième extrémité
         1123. Poutre(s)
            1123a. Première poutre
            1123b. Deuxième poutre
            1123c. Troisième poutre
      1124. Poutrelle(s)
      1125. Tirant(s)
      1130. Premier arceau de support
         1131. Arc du premier arceau de support
         1132. Diamètre du premier arceau de support
      1140. Premier appui au sol
         1141. Dispositif d'entraînement cinématique en rotation
            1141a. Axe de rotation principal
            1141b. Motorisation
            1141c. Pignon
            1141d. Crémaillère
         1142. Dispositif de freinage
            1142a. Galet(s) supérieur(s) de freinage
            1142b. Galet(s) inférieur(s) de freinage
         1143. Dispositif d'accompagnement cinématique en rotation
            1143a. Galet(s) supérieur(s) d'accompagnement
            1143b. Galet(s) inférieur(s) d'accompagnement
      1150. Deuxième arceau de support
         1151. Arc du deuxième arceau de support
         1152. Diamètre du deuxième arceau de support
      1160. Deuxième appui au sol
         1161. Dispositif de guidage cinématique en rotation 1161a. Galet(s) supérieur(s) de guidage du dispositif de guidage cinématique en rotation
            1161b. Galet(s) inférieur(s) de guidage du dispositif de guidage cinématique en rotation
         1162. Support pivot
      1170. Suspension au sol
         1171. Suspension au sol en forme de U
            1171a. Base du U
            1171b. Première branche du U
            1171c. Deuxième branche du U
         1172. Suspension au sol du premier appui au sol
         1173. Suspension au sol du deuxième appui au sol
         1174. Suspension au sol commune
            1174a. Base de la suspension commune au sol
            1174b. Première branche de la suspension commune
            1174c. Deuxième branche de la suspension commune
            1174d. Premier plateau de la suspension commune
            1174e. Deuxième plateau de la suspension commune
   1200. Module additionnel
      1210. Table additionnelle
         1211. Direction additionnelle
         1212. Dispositif de collecte d'énergie solaire additionnel
            1212a. Panneau photovoltaïque additionnel
      1220. Structure en treillis additionnelle
         1221. Extrémité de la structure en treillis additionnelle
         1223. Poutre(s) additionnelle(s)
            1223a. Première poutre additionnelle
            1223b. Deuxième poutre additionnelle
            1223c. Troisième poutre additionnelle
         1224. Poutrelle(s) additionnelle(s)
         1225. Tirant(s) additionnel(s)
      1230. Arceau de support additionnel
         1231. Arc de l'arceau de support additionnel
         1232. Diamètre de l'arceau de support additionnel
      1240. Appui au sol additionnel
         1241. Dispositif de guidage cinématique en rotation additionnel
            1241a. Axe de rotation additionnel
            1241b. Galet(s) supérieur(s) de guidage du dispositif de guidage cinématique en rotation additionnel
            1241c. Galet(s) inférieur(s) de guidage du dispositif de guidage cinématique en rotation additionnel
         1242. Support pivot additionnel
      1270. Suspension au sol additionnelle de l'appui au sol additionnel
   1300. Dispositif de couplage cinématique
      1310. Axe de translation secondaire
      1320. Axe de rotation secondaire
      1330. Première partie
         1331. Partie femelle
            1331a. Mâchoire
               1331a1. Partie supérieure de la mâchoire
               1331a2. Partie inférieure de la mâchoire
               1331a3. Patin(s)
            1331b. Fourreau
         1332. Premier dispositif d'articulation pivot
            1332a. Tube du premier dispositif d'articulation pivot
            1332b. Articulation du premier dispositif d'articulation pivot
      1340. Deuxième partie
         1341. Partie mâle
            1341a. Langue
            1341b. Cylindre monté d'une structure sphérique
         1342. Deuxième dispositif d'articulation pivot
            1342a. Tube du deuxième dispositif d'articulation pivot
            1342b. Articulation du deuxième dispositif d'articulation pivot
      1350. Jonction rotule mobile en translation
         1351. Première jonction rotule mobile en translation
         1352. Deuxième jonction rotule mobile en translation
         1353. Troisième jonction rotule mobile en translation
         1354. Jonction rotule mobile en translation du bas
         1355. Jonction rotule mobile en translation du haut
      1360. Axe de transfert cinématique
         1361. Premier axe de transfert cinématique
         1362. Deuxième axe de transfert cinématique
      1370. Jonction pivot poutre/arceau de support
         1371. Jonction pivot poutre/arceau de support verticale
         1372. Jonction pivot poutre/arceau de support horizontale
2000. Terrain
   2100. Dénivelé
   2200. Bloc de support

## Revendications

1. Suiveur solaire (1000) comprenant au moins :
▪ Un module entraîneur (1100) comprenant au moins :
• un dispositif mobile (1110, 1120, 1130, 1150) comprenant au moins :
∘ une table (1110) s'étendant longitudinalement selon une direction principale (1111) et comprenant au moins un dispositif de collecte d'énergie solaire (1112) ;
o une structure de support (1120) s'étendant longitudinalement selon ladite direction principale (1111) et supportant ladite table (1110) ;
o un premier arceau de support (1130) de la structure de support (1120), ledit premier arceau de support (1130) étant contenu dans un plan perpendiculaire à ladite direction principale ;
• un premier appui au sol (1140) configuré pour supporter ledit premier arceau de support (1130) ;
• un dispositif motorisé d'entraînement cinématique en rotation (1141) dudit dispositif mobile (1110, 1120, 1130, 1150) par rapport au premier appui au sol (1140) ;
▪ Au moins un module additionnel (1200) configuré pour être entraîné par le module entraîneur (1100), chaque module additionnel (1200) comprenant au moins :
• un dispositif mobile additionnel (1210, 1220, 1230) comprenant au moins :
o une table additionnelle (1210) s'étendant longitudinalement selon une direction additionnelle (1211) comprenant au moins un dispositif de collecte d'énergie solaire additionnel (1212) ;
o une structure de support additionnelle (1220) s'étendant longitudinalement selon ladite direction additionnelle (1211) et supportant ladite table additionnelle (1210) ;
o un arceau de support additionnel (1230) supportant ladite structure de support additionnelle (1220), ledit arceau de support additionnel (1230) étant contenu dans un plan perpendiculaire à ladite direction additionnelle ;
• un appui au sol additionnel (1240) configuré pour supporter ledit arceau de support additionnel (1230) ;
ledit au moins un module additionnel (1200) étant adjacent audit module entraîneur (1100) de sorte que ladite table additionnelle (1210) et ladite table (1110) s'étendent longitudinalement selon une même ligne,
▪ Ledit dispositif motorisé d'entraînement cinématique en rotation (1141) étant configuré pour entraîner le premier arceau de support (1130) selon un premier mouvement cinématique relativement audit premier appui au sol (1140) autour d'au moins un axe de rotation principal (1141a) ;
▪ Ledit appui au sol additionnel (1240) comprenant un dispositif de guidage en rotation additionnel (1241) configuré pour guider l'arceau de support additionnel (1230) selon un deuxième mouvement cinématique relativement audit appui au sol additionnel (1240) autour d'au moins un axe de rotation additionnel (1241a) possiblement différent dudit axe de rotation principal (1141a) ;
▪ Ledit suiveur solaire (1000) comprenant au moins un dispositif de couplage cinématique (1300) entièrement supporté par le dispositif mobile et le dispositif mobile additionnel, et configuré de sorte que le deuxième mouvement cinématique soit fonction du premier mouvement cinématique ;
Ledit dispositif de couplage cinématique (1300) comprenant au moins une première partie (1330) entièrement supportée par le dispositif mobile (1110, 1120, 1130, 1150) du module entraîneur (1100) et au moins une deuxième partie (1340) entièrement supportée par le dispositif mobile additionnel (1210, 1220, 1230) du module additionnel (1200), les première (1330) et deuxième (1340) parties étant agencées pour coopérer de manière à entraîner en rotation le dispositif mobile additionnel (1210, 1220, 1230) autour de l'axe de rotation additionnel (1241a) lorsque le dispositif mobile (1110, 1120, 1130, 1150) du module entraîneur (1100) est entraîné en rotation par le dispositif motorisé d'entraînement cinématique (1141) autour de l'axe de rotation principal (1141a), et étant mobiles en translation l'une par rapport à l'autre pour autoriser une translation relative dudit dispositif mobile (1110, 1120, 1130, 1150) et dudit dispositif mobile additionnel (1210, 1220, 1230) l'un par rapport à l'autre.

2. Suiveur solaire (1000) selon la revendication 1, dans lequel:
▪ Ledit premier appui au sol (1140) comprend des galets (1143a) configurés pour supporter, de préférence à eux seuls, le premier arceau de support (1130), le premier arceau de support (1130) s'étendant principalement depuis le premier appui au sol (1140) jusqu'à la structure de support (1120) ;
▪ Ledit appui au sol additionnel (1240) comprend au moins des galets additionnels (1241b) configurés pour supporter, de préférence à eux seuls, l'arceau de support additionnel (1230), l'arceau de support additionnel (1230) s'étendant principalement depuis l'appui au sol additionnel (1240) jusqu'à la structure de support additionnelle (1220), le suiveur solaire (1000) étant configuré de manière à ce que les galets (1143a) et les galets additionnels (1241b) supportent, de préférence à eux seuls, respectivement le dispositif mobile (1110, 1120, 1130, 1150) et le dispositif mobile additionnel (1210, 1220, 1230) ;

3. Suiveur solaire (1000) selon l'une quelconque des revendications précédentes, dans lequel ledit premier appui au sol (1140) comprend ledit dispositif motorisé d'entraînement cinématique en rotation (1141).

4. Suiveur solaire (1000) selon l'une quelconque des revendications précédentes, dans lequel le deuxième mouvement cinématique et le premier mouvement cinématique partagent au moins une caractéristique cinématique commune prise parmi au moins l'une des caractéristiques cinématiques suivantes : angle de rotation, amplitude de rotation, accélération, vitesse, vecteur de déplacement.

5. Suiveur solaire (1000) selon l'une quelconque des revendications précédentes, dans lequel ledit au moins un dispositif de couplage cinématique (1300) comprend au moins une jonction rotule mobile en translation (1350) selon l'axe de translation relative du module additionnel (1200) et du module entraîneur (1100).

6. Suiveur solaire (1000) selon la revendication 5, dans lequel ladite au moins une jonction rotule mobile en translation (1350) comprend :
- au moins une partie femelle (1331) solidaire de l'un parmi le dispositif mobile (1110, 1120, 1130, 1150) du module entraîneur et le dispositif mobile additionnel (1210, 1220, 1230) du module additionnel (1200) et
- au moins une partie mâle (1341) solidaire de l'autre parmi le dispositif mobile (1110, 1120, 1130, 1150) du module entraîneur et le dispositif mobile additionnel (1210, 1220, 1230) du module additionnel (1200).

7. Suiveur solaire (1000) selon la revendication 6, dans lequel :
- ladite au moins une partie femelle (1331) s'étend principalement selon l'une parmi ladite direction principale (1111) et ladite direction additionnelle (1211),
- ladite au moins une partie male (1341) s'étend principalement selon l'autre parmi ladite direction principale (1111) et ladite direction additionnelle (1211).

8. Suiveur solaire (1000) selon l'une quelconque des revendications 6 ou 7, dans lequel ladite au moins une partie femelle (1331) comprend une mâchoire (1331a) et ladite au moins une partie mâle (1341) comprend une langue (1341a) configurée pour être enserrée dans la mâchoire (1331a) de manière à permettre un coulissement de la langue (1341a) dans la mâchoire (1331a).

9. Suiveur solaire (1000) selon la revendication 8, dans lequel l'une parmi la mâchoire (1331a) ou la langue (1341a) comprend des patins formant une interface entre la mâchoire (1331a) et la langue (1341a) afin de faciliter ledit coulissement.

10. Suiveur solaire (1000) selon l'une quelconque des revendications 6 ou 7, dans ladite au moins une partie femelle (1331) comprend un fourreau (1331b) ou une cavité cubique et dans lequel la partie mâle (1341) comprend un cylindre, une structure au moins partiellement sphérique (1341b) ou un pavé présentant des formes et dimensions complémentaires de la partie femelle (1331) afin de s'introduire dans cette dernière.

11. Suiveur solaire (1000) selon l'une quelconque des revendications 1 à 4 dans lequel le dispositif mobile (1110, 1120, 1130, 1150) comprend un deuxième arceau de support (1150) de la structure de support (1120) et dans lequel le dispositif de couplage cinématique (1300) comprend au moins un axe de transfert cinématique (1360), un premier dispositif d'articulation pivot (1332) et un deuxième dispositif d'articulation pivot (1342), le premier dispositif d'articulation pivot (1332) assurant une connexion mécanique entre le deuxième arceau de support (1150) et ledit axe de transfert cinématique (1360), et le deuxième dispositif d'articulation pivot (1342) assurant une connexion mécanique entre l'arceau de support additionnel (1230) et ledit axe de transfert cinématique (1360).

12. Suiveur solaire (1000) selon l'une quelconque des revendications précédentes dans lequel le dispositif mobile (1110, 1120, 1130, 1150) comprend un deuxième arceau de support (1150) de la structure de support (1120) et dans lequel au moins une structure de support (1120, 1220) parmi ladite structure de support (1120) et ladite structure de support additionnelle (1220) et au moins un arceau de support (1130, 1150, 1230) parmi ledit premier arceau de support (1130), ledit deuxième arceau de support (1150) et ledit arceau de support additionnel (1230) sont mécaniquement connectés entre eux par au moins une jonction pivot (1370, 1371, 1372) permettant un degré de rotation entre ladite au moins une structure de support (1120, 1220) et ledit au moins un arceau de support (1130, 1150, 1230).

13. Suiveur solaire (1000) selon l'une quelconque des revendications précédentes dans lequel au moins l'un, de préférence les deux, parmi le premier appui au sol (1140) et l'appui au sol additionnel (1240) est disposé sur au moins une suspension au sol (1170, 1270) présentant une élasticité en compression selon au moins un axe vertical.

14. Suiveur solaire (1000) selon l'une quelconque des revendications précédentes dans lequel le dispositif mobile (1110, 1120, 1130, 1150) comprend un deuxième arceau de support (1150) qui repose sur au moins un deuxième appui au sol (1160) du module entraîneur (1100), ledit deuxième appui au sol (1160) comprenant au moins un dispositif de guidage en rotation (1161) configuré pour guider le deuxième arceau de support (1150) selon ledit premier mouvement cinématique relativement audit deuxième appui au sol (1160) autour dudit axe de rotation principal (1141a).

15. Suiveur solaire (1000) selon l'une quelconque des revendications précédentes dans lequel le dispositif de guidage en rotation additionnel (1241) comprend au moins deux galets (1241b, 1241c) configurés pour être en contact avec l'arceau de support additionnel (1230) de sorte à guider ledit arceau de support additionnel (1230) selon ledit deuxième mouvement cinématique relativement audit au moins un appui au sol additionnel (1240) autour dudit axe de rotation additionnel (1241a).

16. Suiveur solaire (1000) selon l'une quelconque des revendications précédentes dans lequel ledit au moins un premier appui au sol (1140) comprend au moins un pignon (1141c) et dans lequel le premier arceau de support (1130) comprend au moins une crémaillère (1141d) disposée sur au moins une partie du premier arceau de support (1130) orientée vers le sol, ledit au moins un pignon (1141c) et ladite au moins une crémaillère (1141d) étant configurés pour entraîner cinématiquement en rotation ledit premier arceau de support (1130) relativement audit moins un premier appui au sol (1140) autour dudit axe de rotation principal (1141a).

17. Suiveur solaire (1000) selon l'une quelconque des revendications précédentes dans lequel ladite structure de support (1120) et ladite structure de support additionnelle (1220) sont des structures en treillis.

## Patentansprüche

1. Sonnenverfolger (1000), der mindestens umfasst:
▪ ein Antriebsmodul (1100), das mindestens umfasst:
eine bewegliche Vorrichtung (1110, 1120, 1130, 1150), die mindestens umfasst:
o einen Tisch (1110), der sich längs gemäß einer Hauptrichtung (1111) erstreckt und mindestens eine Sonnenenergie-Sammelvorrichtung (1112) umfasst;
o eine Stützstruktur (1120), die sich längs gemäß der Hauptrichtung (1111) erstreckt und den Tisch (1110) stützt;
o einen ersten Stützbogen (1130) der Stützstruktur (1120), wobei der erste Stützbogen (1130) in einer Ebene senkrecht zur Hauptrichtung enthalten ist;
eine erste Abstützung auf dem Boden (1140), die ausgelegt ist, um den ersten Stützbogen (1130) zu stützen;
eine motorisierte Vorrichtung zum kinematischen Rotationsantrieb (1141) der beweglichen Vorrichtung (1110, 1120, 1130, 1150) im Verhältnis zur ersten Abstützung auf dem Boden (1140);
▪ mindestens ein zusätzliches Modul (1200), das ausgelegt ist, um von dem Antriebsmodul (1100) angetrieben zu werden, wobei jedes zusätzliche Modul (1200) mindestens umfasst:
eine zusätzliche bewegliche Vorrichtung (1210, 1220, 1230), die mindestens umfasst:
o einen zusätzlichen Tisch (1210), der sich längs gemäß einer zusätzlichen Richtung (1211) erstreckt, der mindestens eine zusätzliche Sonnenenergie-Sammelvorrichtung (1212) umfasst;
o eine zusätzliche Stützstruktur (1220), die sich längs gemäß der zusätzlichen Richtung (1211) erstreckt und den zusätzlichen Tisch (1210) stützt;
o einen zusätzlichen Stützbogen (1230), der die zusätzliche Stützstruktur (1220) stützt, wobei der zusätzliche Stützbogen (1230) in einer Ebene senkrecht zu der zusätzlichen Richtung enthalten ist;
eine zusätzliche Abstützung auf dem Boden (1240), die ausgelegt ist, um den zusätzlichen Stützbogen (1230) zu stützen;
wobei das mindestens eine zusätzliche Modul (1200) an das Antriebsmodul (1100) derart angrenzt, dass sich der zusätzliche Tisch (1210) und der Tisch (1110) längs gemäß derselben Linie erstrecken,
▪ wobei die motorisierte Vorrichtung zum kinematischen Rotationsantrieb (1141) ausgelegt ist, um den ersten Stützbogen (1130) gemäß einer ersten kinematischen Bewegung relativ zur ersten Abstützung auf dem Boden (1140) um mindestens eine Hauptrotationsachse (1141a) anzutreiben;
▪ wobei die zusätzliche Abstützung auf dem Boden (1240) eine zusätzliche Rotationsführungsvorrichtung (1241) umfasst, die ausgelegt ist, um den zusätzlichen Stützbogen (1230) gemäß einer zweiten kinematischen Bewegung relativ zur zusätzlichen Abstützung auf dem Boden (1240) um mindestens eine zusätzliche Rotationsachse (1241a) zu führen, die möglicherweise von der Hauptrotationsachse (1141a) unterschiedlich ist;
▪ wobei der Sonnenverfolger (1000) mindestens eine kinematische Kupplungsvorrichtung (1300) umfasst, die vollständig von der beweglichen Vorrichtung und von der zusätzlichen beweglichen Vorrichtung gestützt wird und derart ausgelegt ist, dass die die zweite kinematischen Bewegung von der ersten kinematischen Bewegung abhängt;
wobei die kinematische Kupplungsvorrichtung (1300) mindestens einen ersten Teil (1330) umfasst, der vollständig von der beweglichen Vorrichtung (1110, 1120, 1130, 1150) des Antriebsmoduls (1100) gestützt wird, und mindestens einen zweiten Teil (1340), der vollständig von der zusätzlichen beweglichen Vorrichtung (1210, 1220, 1230) des zusätzlichen Moduls (1200) gestützt wird; wobei der erste (1330) und der zweite (1340) Teil eingerichtet sind, um derart zusammenzuwirken, dass die zusätzliche bewegliche Vorrichtung (1210, 1220, 1230) um die zusätzliche Rotationsachse (1241a) rotatorisch angetrieben wird, wenn die bewegliche Vorrichtung (1110, 1120, 1130, 1150) des Antriebsmodul (1100) von der motorisierten kinematischen Antriebsvorrichtung (1141) um die Hauptrotationsachse (1141a) rotatorisch angetrieben wird, und im Verhältnis zueinander translatorisch beweglich sind, um eine relative Translation der beweglichen Vorrichtung (1110, 1120, 1130, 1150) und der zusätzlichen beweglichen Vorrichtung (1210, 1220, 1230) im Verhältnis zueinander zu gestatten.

2. Sonnenverfolger (1000) nach Anspruch 1, wobei:
▪ die erste Abstützung auf dem Boden (1140) Rollen (1143a) umfasst, die ausgelegt sind, um vorzugsweise allein den ersten Stützbogen (1130) zu stützen, wobei sich der erste Stützbogen (1130) hauptsächlich ab der ersten Abstützung auf dem Boden (1140) bis zur Stützstruktur (1120) erstreckt;
▪ die zusätzliche Abstützung auf dem Boden (1240) mindestens zusätzliche Rollen (1241b) umfasst, die ausgelegt sind, um vorzugsweise allein den zusätzlichen Stützbogen (1230) zu stützen, wobei sich der zusätzliche Stützbogen (1230) hauptsächlich ab der zusätzlichen Abstützung auf dem Boden (1240) bis zur zusätzlichen Stützstruktur (1220) erstreckt, wobei der Sonnenverfolger (1000) derart ausgelegt ist, dass die Rollen (1143a) und die zusätzlichen Rollen (1241b) vorzugsweise allein jeweils die bewegliche Vorrichtung (1110, 1120, 1130, 1150) und die zusätzliche bewegliche Vorrichtung (1210, 1220, 1230) stützen.

3. Sonnenverfolger (1000) nach einem der vorangehenden Ansprüche, wobei die erste Abstützung auf dem Boden (1140) die motorisierte Vorrichtung zum kinematischen Rotationsantrieb (1141) umfasst.

4. Sonnenverfolger (1000) nach einem der vorangehenden Ansprüche, wobei die zweite kinematische Bewegung und die erste kinematische Bewegung mindestens ein gemeinsames kinematisches Merkmal teilen, das aus mindestens einem der folgenden kinematischen Merkmale herangezogen ist: Rotationswinkel, Rotationsamplitude, Beschleunigung, Geschwindigkeit, Verlagerungsvektor.

5. Sonnenverfolger (1000) nach einem der vorangehenden Ansprüche, wobei die mindestens eine kinematische Kupplungsvorrichtung (1300) mindestens eine gemäß der relativen Translationsachse des zusätzlichen Moduls (1200) und des Antriebsmoduls (1100) translatorisch bewegliche Kugelgelenkverbindung (1350) umfasst.

6. Sonnenverfolger (1000) nach Anspruch 5, wobei die mindestens eine translatorisch bewegliche Kugelgelenkverbindung (1350) umfasst:
- mindestens einen weiblichen Teil (1331), der mit der einen von der beweglichen Vorrichtung (1110, 1120, 1130, 1150) des Antriebsmoduls und der zusätzlichen beweglichen Vorrichtung (1210, 1220, 1230) des zusätzlichen Moduls (1200) fest verbunden ist, und
- mindestens einen männlichen Teil (1341), der mit der anderen von der beweglichen Vorrichtung (1110, 1120, 1130, 1150) des Antriebsmoduls und der zusätzlichen beweglichen Vorrichtung (1210, 1220, 1230) des zusätzlichen Moduls (1200) fest verbunden ist.

7. Sonnenverfolger (1000) nach Anspruch 6, wobei:
- sich der mindestens eine weibliche Teil (1331) hauptsächlich gemäß der einen von der Hauptrichtung (1111) und der zusätzlichen Richtung (1211) erstreckt,
- sich der mindestens eine männliche Teil (1341) hauptsächlich gemäß der anderen von der Hauptrichtung (1111) und der zusätzlichen Richtung (1211) erstreckt.

8. Sonnenverfolger (1000) nach einem der Ansprüche 6 oder 7, wobei der mindestens eine weibliche Teil (1331) eine Backe (1331a) umfasst und der mindestens eine männliche Teil (1341) eine Zunge (1341a) umfasst, die ausgelegt ist, um in der Backe (1331a) derart gespannt zu sein, dass ein Gleiten der Zunge (1341a) in der Backe (1331a) erlaubt ist.

9. Sonnenverfolger (1000) nach Anspruch 8, wobei entweder die Backe (1331a) oder die Zunge (1341a) Füße umfasst, die eine Schnittstelle zwischen der Backe (1331a) und der Zunge (1341a) bilden, um das Gleiten zu erleichtern.

10. Sonnenverfolger (1000) nach einem der Ansprüche 6 oder 7, wobei der mindestens eine weibliche Teil (1331) eine Hülle (1331b) oder einen kubischen Hohlraum umfasst und wobei der männliche Teil (1341) einen Zylinder umfasst, wobei eine mindestens teilweise kugelige Struktur (1341b) oder ein Klotz Formen und Abmessungen aufweisen, die zum weiblichen Teil (1331) komplementär sind, um sich darin einzufügen.

11. Sonnenverfolger (1000) nach einem der Ansprüche 1 bis 4, wobei die bewegliche Vorrichtung (1110, 1120, 1130, 1150) einen zweiten Stützbogen (1150) der Stützstruktur (1120) umfasst und wobei die kinematische Kupplungsvorrichtung (1300) mindestens eine kinematische Transferachse (1360), eine erste Zapfengelenkvorrichtung (1332) und eine zweite Zapfengelenkvorrichtung (1342) umfasst, wobei die erste Zapfengelenkvorrichtung (1332) eine mechanische Verbindung zwischen dem zweiten Stützbogen (1150) und der kinematischen Transferachse (1360) sichert und die zweite Zapfengelenkvorrichtung (1342) eine mechanische Verbindung zwischen dem zusätzlichen Stützbogen (1230) und der kinematischen Transferachse (1360) sichert.

12. Sonnenverfolger (1000) nach einem der vorangehenden Ansprüche, wobei die bewegliche Vorrichtung (1110, 1120, 1130, 1150) einen zweiten Stützbogen (1150) der Stützstruktur (1120) umfasst und wobei mindestens eine Stützstruktur (1120, 1220) von der Stützstruktur (1120) und der zusätzlichen Stützstruktur (1220) und mindestens ein Stützbogen (1130, 1150, 1230) vom ersten Stützbogen (1130), zweiten Stützbogen (1150) und zusätzlichen Stützbogen (1230) durch mindestens eine Zapfenverbindung (1370, 1371, 1372) mechanisch miteinander verbunden sind, die einen Rotationsgrad zwischen der mindestens einen Stützstruktur (1120, 1220) und dem mindestens einen Stützbogen (1130, 1150, 1230) erlaubt.

13. Sonnenverfolger (1000) nach einem der vorangehenden Ansprüche, wobei mindestens eine, vorzugsweise beide, von der ersten Abstützung auf dem Boden (1140) und der zusätzlichen Abstützung auf dem Boden (1240) auf mindestens einer Aufhängung auf dem Boden (1170, 1270) angeordnet ist, die eine Kompressionselastizität gemäß mindestens einer vertikalen Achse aufweist.

14. Sonnenverfolger (1000) nach einem der vorangehenden Ansprüche, wobei die bewegliche Vorrichtung (1110, 1120, 1130, 1150) einen zweiten Stützbogen (1150) umfasst, der auf mindestens einer zweiten Abstützung auf dem Boden (1160) des Antriebsmoduls (1100) ruht, wobei die zweite Abstützung auf dem Boden (1160) mindestens eine Rotationsführungsvorrichtung (1161) umfasst, die ausgelegt ist, um den zweiten Stützbogen (1150) gemäß der ersten kinematischen Bewegung relativ zur zweiten Abstützung auf dem Boden (1160) um die Hauptrotationsachse (1141a) zu führen.

15. Sonnenverfolger (1000) nach einem der vorangehenden Ansprüche, wobei die zusätzliche Rotationsführungsvorrichtung (1241) mindestens zwei Rollen (1241b, 1241c) umfasst, die ausgelegt sind, um mit dem zusätzlichen Stützbogen (1230) derart im Kontakt zu sein, dass der zusätzliche Stützbogen (1230) gemäß der zweiten kinematischen Bewegung relativ zu der mindestens einen zusätzlichen Abstützung auf dem Boden (1240) um die zusätzliche Rotationsachse (1241a) geführt wird.

16. Sonnenverfolger (1000) nach einem der vorangehenden Ansprüche, wobei die mindestens eine erste Abstützung auf dem Boden (1140) mindestens ein Zahnrad (1141c) umfasst und wobei der erste Stützbogen (1130) mindestens eine Zahnstange (1141d) umfasst, die auf mindestens einem Teil des ersten Stützbogens (1130) angeordnet ist, der zum Boden zeigt, wobei das mindestens eine Zahnrad (1141c) und die mindestens eine Zahnstange (1141d) ausgelegt sind, um den ersten Stützbogen (1130) relativ zu der mindestens einen ersten Abstützung auf dem Boden (1140) um die Hauptrotationsachse (1141a) kinematisch rotatorisch anzutreiben.

17. Sonnenverfolger (1000) nach einem der vorangehenden Ansprüche, wobei die Stützstruktur (1120) und die zusätzliche Stützstruktur (1220) Gitterstrukturen sind.

## Claims

1. A solar tracker (1000) comprising at least:
▪ A drive module (1100) comprising at least:
• a mobile device (1100, 1120, 1130, 1150) comprising at least:
o a table (1110) extending longitudinally in a principal direction (1111) and comprising at least one solar energy collector device (1112);
o a support structure (1120) extending longitudinally in said principal direction (1111) and supporting said table (1110);
o a first support arch (1130) of the support structure (1120), said first support arch (1130) being contained in a plane perpendicular to said principal direction;
• a first ground support (1140) configured to support said first support arch (1130);
• a motorized kinematic drive device (1141) configured to drive said mobile device (1110, 1120, 1130, 1150) in rotation relative to the first ground support (1140);
▪ At least one additional module (1120) configured to be driven by the drive module (1100), each additional module (1200) comprising at least:
• an additional mobile device (1200, 1220, 1230) comprising at least:
o an additional table (1210) extending longitudinally in an additional direction (1211) and comprising at least one additional solar energy collector device (1212);
o an additional support structure (1220) extending longitudinally in said additional direction (1211) and supporting said additional table (1210);
o an additional support arch (1230) supporting said additional support structure (1220), said additional support arch (1230) being contained in a plane perpendicular to said additional direction;
• an additional ground support (1240) configured to support said additional support arch (1230);
said at least one additional module (1200) being adjacent to said drive module (1100) such that said additional table (1210) and said table (1110) extend longitudinally along a same line,
▪ Said motorized kinematic rotational drive device (1141) being configured to drive the first support arch (1130) in a first kinematic movement relative to said first ground support (1140) about at least one principal axis of rotation (1141a);
▪ Said additional ground support (1240) comprising an additional rotational guiding device (1241) configured to guide the additional support arch (1230) in a second kinematic movement relative to said additional ground support (1240) about at least one additional axis of rotation (1241a) that may possibly be different from said principal axis of rotation (1141a);
▪ Said solar tracker (1000) comprising at least one kinematic coupling device (1300) that is entirely supported by the mobile device and the additional mobile device, and configured such that the second movement kinematics depends on the first movement kinematics; said kinematic coupling device (1300) comprising at least a first part (1330) that is entirely supported by the mobile device (1110, 1120, 1130, 1150) of the drive module (1100) and at least one second part (1340) that is entirely supported by the additional mobile device (1210, 1220, 1230) of the additional module (1200), the first (1330) and second (1340) parts being arranged to cooperate so as to drive the rotation of the additional mobile device (1210, 1220, 1230) about the additional axis of rotation (1241a) when the mobile device (1110, 1120, 1130, 1150) of the drive module (1110) is driven in rotation by the motorized kinematic drive device (1141) about the principal axis of rotation (1141a), and being translatable relative to one another to allow a relative translation of said mobile device (1110, 1120, 1130, 1150) and of said additional mobile device (1210, 1220, 1230) relative to one another.

2. The solar tracker (1000) according to claim 1, wherein:
▪ Said first ground support (1140) comprises rollers (1143a) configured to support, preferably by themselves, the first support arch (1130), the first support arch (1130) extending primarily from the first ground support (1140) to the support structure (1120);
▪ Said additional ground support (1240) comprises at least additional rollers (1241b) configured to support, preferably by themselves, the additional support arch (1230), the additional support arch (1230) extending primarily from the additional ground support (1240) to the additional support structure (1220), the solar tracker (1000) being configured such that the rollers (1143a) and the additional rollers (1241b) support, preferably by themselves, the mobile device (1110, 1120, 1130, 1150) and the additional mobile device (1210, 1220, 1230), respectively.

3. The solar tracker (1000) according to any one of the preceding claims, wherein said first ground support (1140) comprises said motorized kinematic rotational drive device (1141).

4. The solar tracker (1000) according to any one of the preceding claims, wherein the second kinematic movement and the first kinematic movement share at least one common kinematic characteristic taken among at least one of the following kinematic characteristics: rotation angle, rotation amplitude, acceleration, speed, movement vector.

5. The solar tracker (1000) according to any one of the preceding claims, wherein said at least one kinematic coupling device (1300) comprises at least one translatable swivel joint (1350) translatable along the axis of relative translation of the additional module (1200) and the drive module (1100).

6. The solar tracker (1000) according to claim 5, wherein said at least one translatable swivel joint (1350) comprises:
- at least one female part (1331) secured to one among the mobile device (1110, 1120, 1130, 1150) of the drive module and the additional mobile device (1210, 1220, 1230) of the additional module (1200) and
- at least one male part (1341) secured to the other among the mobile device (1110, 1120, 1130, 1150) of the drive module and the additional mobile device (1210, 1220, 1230) of the additional module (1200).

7. The solar tracker (1000) according to claim 6, wherein:
- said at least one female part (1331) extends primarily along one among said principal direction (1111) and said additional direction (1211),
- said at least one male part (1341) extends primarily along the other among said principal direction (1111) and said additional direction (1211).

8. The solar tracker (1000) according to any one of claims 6 or 7, wherein said at least one female part (1331) comprises a jaw (1331a) and said at least one male part (1341) comprises a tongue (1341a) configured to be gripped in the jaw (1331a) so as to allow sliding of the tongue (1341a) in the jaw (1331a).

9. The solar tracker (1000) according to claim 8, wherein one among the jaw (1331a) or the tongue (1341a) comprises pads forming an interface between the jaw (1331a) and the tongue (1341a) so as to facilitate said sliding.

10. The solar tracker (1000) according to any one of claims 6 or 7, wherein said at least one female part (1331) comprises a sheath (1331b) or a cubic cavity and wherein the male part (1341) comprises a cylinder, an at least partially spherical structure (1341b) or a slab having shapes and dimensions complementary to the female part (1331) so as to be introduced into the latter.

11. The solar tracker (1000) according to any one of claims 1 to 4, wherein the mobile device (1110, 1120, 1130, 1150) comprises a second support arch (1150) of the support structure (1120) and wherein the kinematic coupling device (1300) comprises at least one kinematic transfer axis (1360), a first pivot articulation device (1332) and a second pivot articulation device (1342), the first pivot articulation device (1332) providing a mechanical connection between the second support arch (1150) and said kinematic transfer axis (1360), and the second pivot articulation device (1342) providing a mechanical connection between the additional support arch (1230) and said kinematic transfer axis (1360).

12. The solar tracker (1000) according to any one of the preceding claims, wherein the mobile device (1110, 1120, 1130, 1150) comprises a second support arch (1150) of the support structure (1120) and wherein at least one support structure (1120, 1220) among said support structure (1120) and said additional support structure (1220) and at least one support arch (1130, 1150, 1230) among said first support arch (1130), said second support arch (1150) and said additional support arch (1230) are mechanically connected to each other by at least one pivot joint (1370, 1371, 1372) allowing a degree of rotation between said at least one support structure (1120, 1220) and said at least one support arch (1130, 1150, 1230).

13. The solar tracker (1000) according to any one of the preceding claims, wherein at least one, preferably both, among the first ground support (1140) and the additional ground support (1240) is arranged on at least one ground suspension (1170, 1270) having an elasticity in compression along at least one vertical axis.

14. The solar tracker (1000) according to any one of the preceding claims, wherein the mobile device (1110, 1120, 1130, 1150) comprises a second support arch (1150) that rests on at least one second ground support (1160) of the drive module (1100), said second ground support (1160) comprising at least one rotational guiding device (1161) configured to guide the second support arch (1150) along said first kinematic movement relative to said second ground support (1160) about said principal axis of rotation (1141a).

15. The solar tracker (1000) according to any one of the preceding claims, wherein the additional rotational guiding device (1241) comprises at least two rollers (1241b, 1241c) configured to be in contact with the additional support arch (1230) so as to guide said additional support arch (1230) along said second kinematic movement relative to said at least one additional ground support (1240) about said additional axis of rotation (1241a).

16. The solar tracker (1000) according to anyone of the preceding claims, wherein said at least one first ground support (1140) comprises at least one pinion (1141c) and wherein the first support arch (1130) comprises at least one rack (1141d) arranged on at least part of the first support arch (1130) oriented toward the ground, said at least one pinion (1141c) and said at least one rack (1141d) being configured to drive said first support arch (1130) kinematically in rotation relative to said at least one first ground support (1140) about said principal axis of rotation (1141a).

17. The solar tracker (1000) according to anyone of the preceding claims, wherein said support structure (1120) and said additional support structure (1220) are lattice structures.
